# EUROPÄISCHE PATENTSCHRIFT

(11) **EP 1 529 101 B1**
(45) Veröffentlichungstag und Bekanntmachung des Hinweises auf die Patenterteilung: **22.11.2006**
(21) Anmeldenummer: 03793669.7
(22) Anmeldetag: 01.08.2003
(51) Int. Cl.: C11D 17/04

(54) **PORTIONIERTE WASCH- UND REINIGUNGSMITTELZUSAMMENSETZUNG**
PORTIONED CLEANING AGENT OR DETERGENT COMPOSITION
COMPOSITION DETERGENTE OU NETTOYANTE EN PORTIONS

(30) Priorität: 14.08.2002 DE 10237200
(43) Veröffentlichungstag der Anmeldung: 11.05.2005
(73) Patentinhaber: Henkel Kommanditgesellschaft auf Aktien, 40589 Düsseldorf (DE)
(72) Erfinder: PEGELOW, Ulrich, 40597 Düsseldorf (DE); NITSCH, Christian, 40591 Düsseldorf (DE); LAMBOTTE, Alexander, 40597 Düsseldorf (DE); JEKEL, Maren, 40476 Düsseldorf (DE); DÜFFELS, Arno, 40479 Düsseldorf (DE)
(86) Internationale Anmeldenummer: PCT/EP2003/008531
(87) Internationale Veröffentlichungsnummer: WO 2004/022692

(56) Entgegenhaltungen:
- WO-A-02/12432
- WO-A-02/057402
- WO-A-02/074892
- DE-A- 19 831 703
- GB-A- 2 367 828

## Beschreibung

Die vorliegende Erfindung betrifft portionierte Wasch- und Reinigungsmittel-zusammensetzungen, die dem Verbraucher die Dosierung von Wasch- und Reinigungsmitteln erleichtern. Insbesondere betrifft die Erfindung portionierte Wasch- und Reinigungsmittelzusammensetzungen, die in einem Behälter aus wasserlöslicher oder wasserdispergierbarer Folie verpackt sind.

Wasch- und Reinigungsmittel sowie Verfahren zu ihrer Herstellung sind altbekannt und im Stand der Technik demzufolge breit beschrieben. Üblicherweise werden sie dem Verbraucher in Form sprühgetrockneter oder granulierter Pulverprodukte bzw. als flüssige Ware zur Verfügung gestellt. Dem Wunsch des Verbrauchers nach einfacher Dosierung folgend, haben sich neben diesen beiden klassischen Varianten Produkte in vorportionierter Form im Markt etabliert und sind im Stand der Technik ebenfalls umfassend beschrieben, wobei insbesondere verpreßte Formkörper, also Tabletten, Blöcke, Briketts und dergleichen sowie in Beuteln verpackte Portionen fester oder flüssiger Wasch- und Reinigungsmittel beschrieben werden.

Im Falle der Einzeldosismengen von Wasch- und Reinigungsmitteln, die in Beuteln verpackt in den Markt gelangen, haben sich wiederum Beutel aus wasserlöslicher Folie durchgesetzt, die das Aufreißen der Verpackung durch den Verbraucher unnötig machen. Auf diese Weise ist ein bequemes Dosieren einer einzelnen Portion durch Einlegen des Beutels direkt in die Wasch- oder Geschirrspülmaschine bzw. in ihre Einspülkammer, oder durch Einwerfen in eine vorbestimmte Menge Wasser, beispielsweise in einem Eimer oder im Handwasch- bzw. Spülbecken möglich. In Beuteln aus wasserlöslicher Folie verpackte Wasch- und Reinigungsmittel sind demzufolge im Stand der Technik in großer Zahl beschrieben.

So offenbart die deutsche Auslegeschrift **11 30 547** (Procter & Gamble) Packungen aus wasserlöslichen Folien von Polyvinylalkohol, die mit nicht-flüssigen synthetischen Waschmitteln gefüllt sind. Zu den Teilchengrößen der verpackten Waschmittel äußert sich diese Schrift nicht.

Eine Einzeldosis eines Wasch- oder Bleichmittels in einem Beutel, der eine oder mehrere Nähte aus wasserempfindlichem Material aufweist, wird in der europäischen Patentanmeldung **EP 143 476** (Akzo N.V.) beschrieben. Als wasserempfindliches Nahtmaterial wird in dieser Veröffentlichung eine Mischung aus anionischem und/oder nichtionischem wasserbindendem Polymer und kationischem Polymerklebematerial vorgeschlagen.

Äußerst große Partikel, die von einer wasserunlöslichen Folie umschlossen sind, werden in der **EP 385 529** (Procter & Gamble) beschrieben. Diese Schrift offenbart eine Jumbo-partikuläre Textilweichmacherzusammensetzung, deren 5 bis 30 mm große trockneraktivierte Softenerteilchen mit einer nicht wasserlöslichen, porösen Folie umschlossen sind.

Es hat sich gezeigt, daß sich bei den in wasserlöslichen oder wasserdispergierbaren Behältern verpackten Wasch- und Reinigungsmittelzusammensetzungen des Standes der Technik herstellbedingte Probleme ergeben. Beim Abpacken der Wasch- und Reinigungsmittelzusammensetzungen in den wasserlöslichen Behälter bleiben feine Partikel an dem Behälter haften und gelangen bei der Versiegelung des Behälters in die gebildeten Nähte. Durch diese Partikel in der Versiegelung sind die betreffenden Nähte gegen die Atmosphäre nicht vollständig dicht, was zu Stabilitätsproblemen der Wasch- und Reinigungsmittelzusammensetzung sowie zu Leckagen durch die entsprechenden Nähte führen kann. Zur Lösung dieser Probleme hat die **DE 198 31 703** (Henkel KGaA) vorgeschlagen, daß mindestens 70 Gew.-% der Teilchen der Wasch- und Reinigungsmittelzusammensetzung Teilchengrößen oberhalb 800 µm aufweisen.

Keine der genannten Schriften offenbart wasserhaltige, flüssige, in wasserlöslichen oder wasserdispergierbaren Behältern verpackte Wasch- oder Reinigungsmittel-Zusammensetzungen. Es hat sich gezeigt, daß hier ähnliche Probleme auftreten wie bei partikelförmigen Zusammensetzungen: Die in den Behälter abzufüllende flüssige Wasch- oder Reinigungsmittelzusammensetzung tropft oft nach oder hat fadenziehende Eigenschaften, so daß bei der Absiegelung der Behälter diese Fäden oder Tropfen und damit Produktreste in die Naht gelangen und dort - wie vorstehende beschrieben - zu Undichtigkeiten führen, die bei flüssigen Inhalten weitaus verheerendere Folgen haben als bei partikelförmigen.

Bei den flüssigen Wasch- oder Reinigungsmittelzusammensetzungen kann es zusätzlich passieren, daß die Tropfen oder Produktfäden, die in der zu bildenden Naht eingeschlossen sind, bei Verwendung eines Heißsiegelverfahrens thermisch so stark beansprucht werden, daß die Zusammensetzung siedet und dabei zu weiteren Undichtigkeiten, Verfärbungen oder im Ernstfall sogar Unfällen durch thermische Zersetzung führen kann.

Interessanterweise führt eine Änderung der Viskosität der flüssigen Wasch- oder Reinigungsmittelzusammensetzung nicht zum Erfolg; sie muß vielmehr durch geeignete weitere Maßnahmen bei der Produktkonfektionierung unterstützt werden, wobei diese Maßnahmen auch unabhängig von der Viskosität der Mittel zu verbesserten Ergebnissen führen.

Die Vermeidung dieser Probleme und die Bereitstellung einer portionierten flüssigen, d.h. gießbaren Wasch- oder Reinigungsmittelzusammensetzung, bei der die Nähte der aus wasserdispergierbarer oder wasserlöslicher Folie bestehenden Behälter gegenüber der Atmosphäre dicht sind, war Aufgabe der vorliegenden Erfindung. Es konnte gezeigt werden, daß die genannte Problematik undichter Nähte und der daraus resultierenden Folgeprobleme ausgeschlossen werden kann, wenn die zu portionierenden wasserhaltigen flüssigen Wasch- und Reinigungsmittelzusammensetzungen bestimmte Kriterien hinsichtlich der Teilchengröße der in der wasserhaltigen, flüssigen Matrix suspendierten Teilchen erfüllen.

Gegenstand der Erfindung ist daher eine portionierte flüssige Wasch- oder Reinigungsmittelzusammensetzung in einem wasserlöslichen oder wasserdispergierbaren Behälter, umfassend eine flüssige Phase und ein oder mehrere darin enthaltene(s) Feststoffteilchen, dadurch gekennzeichnet, daß das/die enthaltene(n) Feststoffteilchen eine Teilchengröße zwischen 12 000 und 20 000 µm aufweist/aufweisen und die enthaltenen Feststoffteilchen beschichtet sind.

Im genannten Teilchengrößenbereich treten die vorstehend genannten Probleme des Einsiegelns in der Naht verbleibender Tropfen oder Flüssigkeitsfäden, nicht mehr auf. Außer dem/den vorgenannten dispergierten Feststoffteilchen mit der gennanten Teilchengröße können erfindungsgemäße Mittel auch Teilchen mit einer geringeren Größe aufweisen, sofern sich diese erst im Anschluß an die Versiegelung der wasserlöslichen oder wasserdispergierbaren Behälter beispielsweise durch Bruch den dispergierten Feststoffteilchen oder durch Ausfällungen der flüssigen Matrix in Folge von Transport oder Lagerung bilden.

Die Raumform der dispergierten Feststoffteilchen wird lediglich durch die technischen Möglichkeiten bei deren Herstellung beschränkt. Als Raumform kommen damit alle sinnvoll handhabbaren Ausgestaltungen in Betracht, beispielsweise also Würfel, Quader und entsprechende Raumelemente mit ebenen Seitenflächen sowie insbesondere zylinderförmige Ausgestaltungen mit kreisförmigem oder ovalem Querschnitt. Diese letzte Ausgestaltung umfaßt dabei tablettenförmige Teilchen bis hin zu kompakten Zylinderstücken mit einem Verhältnis von Höhe zu Durchmesser oberhalb 1. Weitere mögliche Raumformen sind Kugeln ("Perlen"), Halbkugeln, "gestreckte Kugeln" in Form elipsoider Kapseln oder abgeflachte linsenförmige" Partikel ebenso wie reguläre Polyeder, beispielsweise Tetraeder, Hexaeder, Oktaeder, Dodekaeder, Ikosaeder. Denkbar sind weiterhin sternförmige Ausbildungen mit drei, vier, fünf, sechs oder mehr Spitzen oder völlig unregelmäßige Körper, die beispielsweise motivisch ausgestaltet sein können. Als Motive eignen sich in Abhängigkeit von dem Einsatzgebiet der erfindungsgemäßen Mittel zum Beispiel Tierfiguren, wie Hunde, Pferde oder Vögel, florale Motive oder die Darstellung von Früchten. Die motivische Ausgestaltung kann sich aber auch auf unbelebte Gegenstände wie Fahrzeuge, Werkzeuge, Haushaltsgegenstände oder Bekleidung beziehen. Die Oberfläche der Feststoffteilchen kann in Abhängigkeit von der Art des gewählten Herstellungsverfahrens und/oder einer gewählten Beschichtung Unebenheiten aufweisen. Aufgrund der zahlreichen Ausgestaltungsmöglichkeiten für das/die dispergierten Feststoffteilchen zeichnen sich die erfindungsgemäßen Mittel nicht nur durch Vorteile bei ihrer Herstellung aus. Augrund der genannten Teilchengröße sind diese Teilchen zudem für den Verbraucher optisch deutlich wahrnehmbar und ermöglichen auf diese Weise ein für die Produktakzeptanz besonders vorteilhafte Visualisierung der in den erfindungsgemäßen Mittel enthaltenen Mehrkomponentensysteme. So kann durch die optisch wahrnehmbare Mehrphasigkeit dieser Mittel beispielsweise die unterschiedliche Wirkweise einzelner Aktivsubstanzen (Bsp. Reinigungs- und Zusatzfunktionen wie Glasschutz, Silberschutz) verdeutlicht werden. Auch die Trennung der Inhaltsstoffe für deren Wirkung in unterschiedlichen Reinigungsgängen eines Reinigungsprogramms (Bsp. Vor- und Hauptwäsche oder Reinigungs- und Klarspülgang) werden werden für den Verbraucher sichtbar realisiert.

Als Feststoffteilchen werden im Rahmen der vorliegenden Anmeldung Substanzen und Substanzgemische zusammengefaßt, welche eine feste, das heißt formstabile nicht fließfähige Konsistenz aufweisen. Unter diese Kategorie fallen beispielsweise Substanzen im festen Aggregatzustand, aber auch formstabile Substanzen wie formstabile Gele sowie Kombinationen dieser Substanzen. Weiterhin werden befüllte Körper mit einer festen Außenhülle als Feststoffe bezeichnet, und zwar unabhängig vom Aggregatzustand der in diesen befüllten Körpern enthaltenen Füllstoffe.

Als Feststoffteilchen gelten im Rahmen der vorliegenden Anmeldung vorzugsweise Pulver und/oder Granulate und/oder Extrudate und/oder Kompaktate und/oder Gießkörper, wobei es sich sowohl um Reinsubstanzen als auch um Substanzgemische handeln kann. Die genannten Feststoffe können dabei in amorpher und/oder kristalliner und/oder teilkristalliner Form vorliegen.

Pulver ist eine allgemeine Bezeichnung für eine Form der Zerteilung fester Stoffe und/oder Stoffgemische, die man durch Zerkleinern, das heißt Zerreiben oder Zerstoßen in der Reibschale (Pulverisieren), Mahlen in Mühlen oder als Folge von Zerstäubungs- oder Gefriertrocknungen erhält. Eine besonders feine Zerteilung nennt man oft Atomisierung oder Mikronisierung; die entsprechenden Pulver werden als Mikro-Pulver bezeichnet.

Nach der Korngröße ist eine grobe Einteilung der Pulver in Grob-, Fein- u. Feinst-Pulver üblich; eine genauere Klassifizierung pulverförmiger Schüttgüter erfolgt über ihre Schüttdichte und durch Siebanalyse. Im Rahmen der vorliegenden Anmeldung bevorzugte Pulver weisen jedoch untere Partikelgrößen von 500 µm, vorzugsweise von 600 µm und insbesondere von 800 µm auf.

Methoden zur Bestimmung der unteren Teilchengröße stützen sich gewöhnlich auf die vorgenannte Siebanalyse und sind im Stand der Technik ausführlich beschrieben.

Pulver lassen sich durch Extrudieren, Pressen, Walzen , Brikettieren, Pelletieren und verwandte Verfahren verdichten und agglomerieren. Jede der im Stand der Technik zur Agglomeration von partikulären Gemischen bekannte Methode ist dabei prinzipiell geeignet, die in den erfindungsgemäßen Mitteln enthaltenen dispergierten Feststoffteilchen herzustellen. Im Rahmen der vorliegenden Erfindung bevorzugt als Feststoff(e) eingesetzte Agglomerate sind neben den Granulaten die Kompaktate und Extrudate.

Als Granulate werden Anhäufungen von Granulatkörnchen bezeichnet. Ein Granulatkorn (Granalie) ist ein asymmetrisches Aggregat aus Pulverpartikeln. Granulationsverfahren sind im Stand der Technik breit beschrieben. Granulate können durch Feuchtgranulierung, durch Trockengranulierung bzw. Kompaktierung und durch Schmelzerstarrungsgranulierung hergestellt werden.

Die gebräuchlichste Granuliertechnik ist die Feuchtgranulierung, da diese Technik den wenigsten Einschränkungen unterworfen ist und am sichersten zu Granulaten mit günstigen Eigenschaften führt. Die Feuchtgranulierung erfolgt durch Befeuchtung der Pulvermischungen mit Lösungsmitteln und/oder Lösungsmittelgemischen und/oder Lösungen von Bindemitteln und/oder Lösungen von Klebstoffen und wird vorzugsweise in Mischern, Wirbelbetten oder Sprühtürmen durchgeführt, wobei besagte Mischer beispielsweise mit Rühr- und Knetwerkzeugen ausgestattet sein können. Für die Granulation sind jedoch auch Kombinationen von Wirbelbett(en) und Mischer(n), bzw. Kombinationen verschiedener Mischer einsetzbar. Die Granulation erfolgt abhängig vom Ausgangsmaterial sowie den gewünschten Produkteigenschaften unter Einwirkung niedriger bis hoher Scherkräfte.

Erfolgt die Granulation in einem Sprühturm so können als Ausgangsstoffe beispielsweise Schmelzen (Schmelzerstarrung) oder, vorzugsweise wässrige, Aufschlämmungen (Sprühtrocknung) fester Substanzen eingesetzt werden, welche an der Spitze eines Turmes in definierter Tröpfchengröße eingesprüht werden, im freien Fall erstarren bzw. trocknen und am Boden des Turmes als Granulat anfallen. Die Schmelzerstarrung eignet sich im allgemeinen besonders zur Formgebung niedrigschmelzender Stoffe, die im Bereich der Schmelztemperatur stabil sind (z. B. Harnstoff, Ammoniumnitrat u. diverse Formulierungen wie Enzymkonzentrate, Arzneimittel etc.), die entsprechenden Granulate werden auch als Prills bezeichnet. Die Sprühtrocknung wird besonders für die Herstellung von Waschmitteln oder Waschmittelbestandteilen eingesetzt.

Weitere im Stand der Technik beschriebene Agglomerationstechniken sind die Extruder- oder Löchwalzengranulierungen, bei denen optional mit Granulierflüssigkeit versetzte Pulvergemische beim Verpressen durch Lochscheiben (Extrusion) oder auf Lochwalzen plastisch verformt werden. Die Produkte der Extrudergranulierung werden auch als Extrudate bezeichnet.

Kompaktate lassen sich beispielsweise durch Trockengranulationstechniken wie die Tablettierung oder Walzenkompaktierung herstellen. Durch die Kompaktierung in Tablettenpressen können ein- oder mehrphasige Tabletten oder Briketts hergestellt werden. Zu den mehrphasigen Tabletten zählen neben den Mehrschicht- oder Sandwichtabletten beispielsweise auch die Manteltabletten und die Punkttabletten (Bull-eye-Tabletten). Die Briketts können ebenso wie die in Kompaktierwalzen erzeugten Schülpen im Anschluß an die Kompaktierung durch gegenläufige Stachelwalzen zerkleinert oder durch Siebe geschlagen werden. Die Größe der durch Kompaktierung erhaltenen Teilchen kann variieren.

Als Gießkörper werden im Rahmen der vorliegenden Anmeldung feste Substanzpartikel bezeichnet, welche durch Erstarrung und/oder Kristallisation aus Schmelzen oder Lösungen hergestellt werden. Die Erstarrung und/oder Kristallisation erfolgt bevorzugt in vorgefertigten Matrizen. Die nach Erstarrung aus den Matrizen gelösten Gießkörper können im Anschluß je nach Größe der Matrize und Verwendungszweck des Gießkörpers in ihrer ursprünglichen Größe oder gegebenenfalls nach Zerkleinerung als Feststoffe in den erfindungsgemäßen wasserlöslichen Behältern eingesetzt werden.

Als Matrixmaterial für Gießkörper, welche durch Schmelzerstarrung hergestellt werden, eignen sich insbesondere schmelzbare Substanzen aus der Gruppe der Fette und/oder Triglyceride und/oder Fettsäuren und/oder Fettalkohole und/oder Wachse und/oder Parrafine. Eine ausführliche Beschreibung dieser Substanzen findet sich weiter unten in diesem Dokument im Zusammenhang mit der Beschreibung im Rahmen dieser Anmeldung bevorzugter Feststoffteilchen, welche eine Beschichtung aufweisen. Zur Vermeidung von Wiederholungen wird an dieser Stelle auf die dortigen Ausführungen verwiesen.

Formstabile Gele sind ein weiterer im Rahmen der vorliegender Erfindung besonders bevorzugter Feststoff. Der Begriff "formstabil" bezeichnet dabei Gele, welche eine Eigen-Formstabilität aufweisen, die sie befähigt, unter üblichen Bedingungen der Herstellung, der Lagerung, des Transports und der Handhabung durch den Verbraucher eine gegen Bruch stabile, nicht desintegrierende Raumform einzunehmen, wobei sich diese Raumform unter den genannten Bedingungen auch über längere Zeit, vorzugsweise 4 Wochen, besonders bevorzugt, 8 Wochen und insbesondere 32 Wochen, nicht verändert, das heißt unter den üblichen Bedingungen der Herstellung, der Lagerung, des Transports und der Handhabung durch den Verbraucher in der durch die Herstellung bedingten räumlich-geometrischen Form verharrt, das heißt, beispielsweise nicht zerfließt, oder bei Einwirkung einer äußeren unter den Bedingungen der Herstellung, der Lagerung, des Transports und der Handhabung üblichen Kraft, in diese räumlich-geometrischen Form zurückkehrt.

Ist es in Abhängigkeit von dem Anwendungsbereich des erfindungsgemäßen Mittel notwendig oder erwünscht verschiedene in den Feststoffteilchen enthaltene(n) Aktivstoff(e) und/oder Aktivstoffzubereitungen mit zeitlicher Verzögerung zu dosieren, so kann dies in einer weiteren bevorzugten Abwandlung der vorgenannten Erfindung durch unterschiedliche Mechanismen oder, mit anderen Worten, durch die Integration unterschiedlicher "Schalter" in die vorgenannten Feststoffteilchen geschehen.

Mögliche "Schalter", welche die Desintegration der in der flüssigen Matrix dispergierten Feststoffteilchen beeinflussen sind in besonders bevorzugten Ausführungsformen physikochemische Parameter. Beispiele hierfür, die jedoch nicht als Beschränkung verstanden werden sollten, sind
- die Zeit, d. h. der Ablauf einer bestimmten Zeit, in der die Wände (Kapsel, Beschichtung etc.) eines Feststoffes mit einem bestimmten Medium, beispielsweise mit einer wäßrigen Flotte, in Kontakt stehen, wobei eine zuverlässige Zeitsteuerung eine lineare Lösungskinetik voraussetzt;
- die Temperatur, d. h. das Erreichen eines bestimmten Temperaturwertes im Verlauf des Temperaturprofils beispielsweise eines Wasch-, Reinigungs- oder Spülvorgangs, bei welchem ein Kapsel- oder Beschichtungsmaterial zu schmelzen, zu dispergieren oder sich zu lösen beginnt; die Steuerung über die Temperatur stellt insbesondere bei Geschirrspülmitteln wegen der mit jeder Stufe des Spülvorgangs steigenden Temperatur eine zuverlässige und damit bevorzugte Ausführungsform dar;
- der pH-Wert, d. h. die Einstellung eines bestimmten pH-Wertes beispielsweise im Verlauf eines Wasch-, Reinigungs- oder Spülvorgangs in der das erfindungsgemäße Mittel umgebenden wässrigen Flotte;
- die lonenstärke einer Waschflotte;
- die mechanische Stabilität beispielsweise einer Kapsel, einer Beschichtung oder eines kompaktierten Formkörpers wie einer Tablette, welche - in Abhängigkeit von der Zeit, von der Temperatur oder von anderen Parametern - ein die Desintegration bestimmender Faktor sein kann;
- die Permeabilität beispielsweise einer Kapsel oder Beschichtung für eine bestimmte - vornehmlich gasförmige oder flüssige - Komponente, vorzugsweise Wasser; usw..

Grundlage für den Einsatz derartiger "Schalter" sind in der Regel entsprechend ausgewählte Beschichtungen für die dispergierten Feststoffteilchen, welche auf Grund ihres Schmelzpunktes und/oder ihrer Permeabilität für Lösungsmittel und/oder des Einflußes von Temperatur und/oder lonenstärke und/oder pH-Wert auf ihre Löslichkeit als ein derartiger Schalter einsetzbar sind. Ein weiterer bevorzugter Gegenstand der vorliegenden Anmeldung sind daher portionierte Wasch- oder Reinigungsmittelzusammensetzungen, in welchen das/die enthaltene(n) Feststoffteilchen eine Beschichtung (Coating) aufweist/aufweisen. Erfindungsgemäß bevorzugte Feststoffteilchen weisen dabei aus Gründen der einfacheren Herstellbarkeit eine einphasige Beschichtung auf. Mehrphasige Beschichtungen sind im Rahmen der vorliegenden Anmeldungen aber selbstverständlich auch realisierbar.

Der Einsatz beschichteter Feststoffteilchen hat eine Reihe von Vorteilen. So kann durch eine Beschichtung der dispergierten Feststoffteilchen zunächst das Anlösen oder Auflösen bzw. das Aufquellen dieser Teilchen durch das umgebende Lösungsmittel oder Lösungsmittelgemisch, welches in jedem Fall der Optik der erfindungsgemäßen Mittel abträglich wäre, verhindert werden. Weiterhin lassen sich durch eine Beschichtung miteinander unverträgliche Bestandteile einer Rezeptur räumlich voneinander trennen, wodurch die Stabilität dieser Bestandteile und damit auch die Wirksamkeit der entsprechenden Mittel erhöht wird. Schließlich ermöglicht eine Beschichtung durch gezielte Auswahl des/der Beschichtungsmittel die zeitlich kontrollierte Freisetzung in dem beschichteten Feststoffteilchen enthaltenen Aktivsubstanzen. In Abhängigkeit von der chemischen Natur der in der flüssigen Matrix bzw. in den dispergierten Feststoffteilchen enthaltenen Aktivsubstanzen und der Zusammensetzung des Lösungsmittelgemisches können als Beschichtungsmaterialien wasserlösliche und/oder wasserunlösliche Substanzen oder Substanzgemische eingesetzt werden. Dabei ist zu beachten, daß ein hoher Wassergehalt der flüssigen Matrix den Einsatz wasserlöslicher Beschichtungsmaterialien grundsätzlich nicht ausschließt, da die Löslichkeit dieser Materialien durch einen entsprechenden Elektolytgehalt der flüssigen Matrix herabgesetzt werden kann. Zur besseren Wahrnehmbarkeit können die Beschichtungen Farbstoffe enthalten.

Die nachfolgend beschriebenen Coatingschichten können beispielsweise durch Tauch- oder Sprühverfahren auf die zu beschichtenden Feststoffteilchen aufgebracht werden. Weitere geeignete Verfahren sind u.a. die Beschichtung in Dragierkesseln oder Trommelcoatern.

Als Beschichtungsmaterialien oder als Bestandteil der Beschichtung, beispielsweise als Bindemittel in Kombination mit Salzen, vorzugsweise anorganischen Salzen, eignen sich Polymere oder Polymergemische aus der Gruppe der wasserlöslichen Polymere. Bevorzugte Substanzen aus dieser Gruppe sind ausgewählt aus den
a) wasserlöslichen nichtionischen Polymeren aus der Gruppe der
   a1) Polyvinylpyrrolidone,
   a2) Vinylpyrrolidon/Vinylester-Copolymere,
   a3) Celluloseether
b) wasserlöslichen amphoteren Polymeren aus der Gruppe der
   b1) Alkylacrylamid/Acrylsäure-Copolymere
   b2) Alkylacrylamid/Methacrylsäure-Copolymere
   b3) Alkylacrylamid/Methylmethacrylsäure-Copolymere
   b4) Alkylacrylamid/Acrylsäure/Alkylaminoalkyl(meth)acrylsäure -Copolymere
   b5) Alkylacrylamid/Methacrylsäure/Alkylaminoalkyl(meth)acrylsäure -Copolymere
   b6) Alkylacrylamid/Methylmethacrylsäure/Alkylaminoalkyl(meth)acrylsäure-Copolymere
   b7) Alkylacrylamid/Alkymethacrylat/Alkylaminoethylmethacrylat/Alkylmethacrylat-Copolymere
   b8) Copolymere aus
      b8i) ungesättigten Carbonsäuren
      b8ii) kationisch derivatisierten ungesättigten Carbonsäuren
      b8iii) gegebenenfalls weiteren ionischen oder nichtionogenen Monomeren
c) wasserlöslichen zwitterionischen Polymeren aus der Gruppe der
   c1) Acrylamidoalkyltrialkylammoniumchlorid/Acrylsäure-Copolymere sowie deren Alkali- und Ammoniumsalze
   c2) Acrylamidoalkyltrialkylammoniumchlorid/Methacrylsäure-Copolymere sowie deren Alkali- und Ammoniumsalze
   c3) Methacroylethylbetain/Methacrylat-Copolymere
d) wasserlöslichen anionischen Polymeren aus der Gruppe der
   d1) Vinylacetat/Crotonsäure-Copolymere
   d2) Vinylpyrrolidon/Vinylacrylat-Copolymere
   d3) Acrylsäure/Ethylacrylat/N-tert.Butylacrylamid-Terpolymere
   d4) Pfropfpolymere aus Vinylestern, Estern von Acrylsäure oder Methacrylsäure allein oder im Gemisch, copolymerisiert mit Crotonsäure, Acrylsäure oder Methacrylsäure mit Polyalkylenoxiden und/oder Polykalkylenglycolen
   d5) gepfropften und vernetzten Copolymere aus der Copolymerisation von
      d5i) mindesten einem Monomeren vom nicht-ionischen Typ,
      d5ii) mindestens einem Monomeren vom ionischen Typ,
      d5iii) von Polyethylenglycol und
      d5iv) einem Vemetzter
   d6) durch Copolymerisation mindestens eines Monomeren jeder der drei folgenden Gruppen erhaltenen Copolymere:
      d6i) Ester ungesättigter Alkohole und kurzkettiger gesättigter Carbonsäuren und/oder Ester kurzkettiger gesättigter Alkohole und ungesättigter Carbonsäuren,
      d6ii) ungesättigte Carbonsäuren,
      d6iii) Ester langkettiger Carbonsäuren und ungesättigter Alkohole und/oder Ester aus den Carbonsäuren der Gruppe d6ii) mit gesättigten oder ungesättigten, geradkettigen oder verzweigten C₈₋₁₈-Alkohols
   d7) Terpolymere aus Crotonsäure, Vinylacetat und einem Allyl- oder Methallylester
   d8) Tetra- und Pentapolymere aus
      d8i) Crotonsäure oder Allyloxyessigsäure
      d8ii) Vinylacetat oder Vinylpropionat
      d8iii) verzweigten Allyl- oder Methallylestern
      d8iv) Vinylethern, Vinylestern oder geradkettigen Allyl- oder Methallylestern
   d9) Crotonsäure-Copolymere mit einem oder mehreren Monomeren aus der Gruppe Ethylen, Vinylbenzol, Vinylmethylether, Acrylamid und deren wasserlöslicher Salze
   d10) Terpolymere aus Vinylacetat, Crotonsäure und Vinylestern einer gesättigten aliphatischen in α-Stellung verzweigten Monocarbonsäure
e) wasserlöslichen kationischen Polymeren aus der Gruppe der
   e1) quaternierten Cellulose-Derivate
   e2) Polysiloxane mit quaternären Gruppen
   e3) kationischen Guar-Derivate
   e4) polymeren Dimethyldiallylammoniumsalze und deren Copolymere mit Estern und Amiden von Acrylsäure und Methacrylsäure
   e5) Copolymere des Vinylpyrrolidons mit quaternierten Derivaten des Dialkylaminoacrylats und -methacrylats
   e6) Vinylpyrrolidon-Methoimidazoliniumchlorid-Copolymere
   e7) quaternierter Polyvinylalkohol
   e8) unter den INCI-Bezeichnungen Polyquaternium 2, Polyquaternium 17, Polyquaternium 18 und Polyquaternium 27 angegeben Polymere.

Wasserlösliche Polymere im Sinne der Erfindung sind solche Polymere, die bei Raumtemperatur in Wasser zu mehr als 2,5 Gew.-% löslich sind.

Die in den erfindungsgemäßen flüssigen Wasch- und Reinigungsmitteln dispergierten Feststoffteilchen sind vorzugsweise mit einem Polymer oder Polymergemisch beschichtet, wobei das Polymer (und dementsprechend die gesamte Beschichtung) bzw. mindestens 50 Gew.-% des Polymergemischs (und damit mindestens 50% der Beschichtung) aus bestimmten Polymeren ausgewählt ist. Dabei besteht die Beschichtung ganz oder zu mindestens 50% ihres Gewichts aus wasserlöslichen Polymeren aus der Gruppe der nichtionischen, amphoteren, zwitterionischen, anionischen und/oder kationischen Polymere. In einer weiteren bevorzugten Ausführungsform besteht die Beschichtung des Phosphats aus einem weiteren anorganischen Salz, welches als Bindemittel eines der genannten Polymere enthält. Bevorzugte Poylmere aus diesen Gruppen wurden vorstehend aufgelistet und werden nachfolgend näher beschrieben.

Erfindungsgemäß bevorzugte wasserlösliche Polymere sind nichtionisch. Geeignete nichtionogene Polymere sind beispielsweise:
Polyvinylpyrrolidone, wie sie beispielsweise unter der Bezeichnung Luviskol® (BASF) vertrieben werden. Polyvinylpyrrolidone sind bevorzugte nichtionische Polymere im Rahmen der Erfindung.
   Polyvinylpyrrolidone [Poly(1-vinyl-2-pyrrolidinone)], Kurzzeichen PVP, sind Polymere der allg. Formel (I) 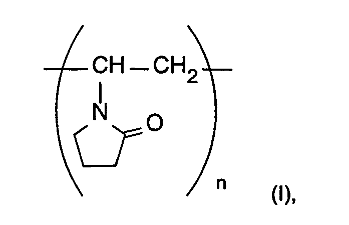 die durch radikalische Polymerisation von 1-Vinylpyrrolidon nach Verfahren der Lösungs- oder Suspensionspolymerisation unter Einsatz von Radikalbildnern (Peroxide, AzoVerbindungen) als Initiatoren hergestellt werden. Die ionische Polymerisation des Monomeren liefert nur Produkte mit niedrigen Molmassen. Handelsübliche Polyvinylpyrrolidone haben Molmassen im Bereich von ca. 2500-750000 g/mol, die über die Angabe der K-Werte charakterisiert werden und - K-Wert-abhängig - Glasübergangstemperaturen von 130-175° besitzen. Sie werden als weiße, hygroskopische Pulver oder als wäßrige. Lösungen angeboten. Polyvinylpyrrolidone sind gut löslich in Wasser und einer Vielzahl von organischen Lösungsmitteln (Alkohole, Ketone, Eisessig, Chlorkohlenwasserstoffe, Phenole u.a.).

- VinylpyrrolidonNinylester-Copolymere, wie sie beispielsweise unter dem Warenzeichen Luviskol^{®} (BASF) vertrieben werden. Luviskol^{®} VA 64 und Luviskol^{®} VA 73, jeweils VinylpyrrolidonNinylacetat-Copolymere, sind besonders bevorzugte nichtionische Polymere. Die Vinylester-Polymere sind aus Vinylestern zugängliche Polymere mit der Gruppierung der Formel (II) 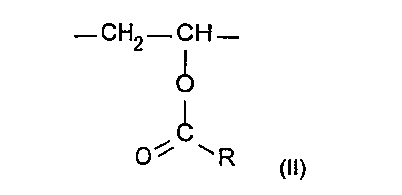 als charakteristischem Grundbaustein der Makromoleküle. Von diesen haben die Vinylacetat-Polymere (R = CH₃) mit Polyvinylacetaten als mit Abstand wichtigsten Vertretern die größte technische Bedeutung.
   Die Polymerisation der Vinylester erfolgt radikalisch nach unterschiedlichen Verfahren (Lösungspolymerisation, Suspensionspolymerisation, Emulsionspolymerisation, Substanzpolymerisation.). Copolymere von Vinylacetat mit Vinylpyrrolidon enthalten Monomereinheiten der Formeln (I) und (II)
- Celluloseether, wie Hydroxypropylcellulose, Hydroxyethylcellulose und Methylhydroxypropylcellulose, wie sie beispielsweise unter den Warenzeichen Culminal^{®} und Benecel^{®} (AQUALON) vertrieben werden.
   Celluloseether lassen sich durch die allgemeine Formel (III) beschreiben, 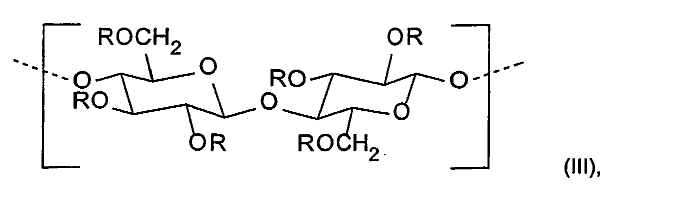 in R für H oder einen Alkyl-, Alkenyl-, Alkinyl-, Aryl- oder Alkylarylrest steht. In bevorzugten Produkten steht mindestens ein R in Formel (III) für -CH₂CH₂CH₂-OH oder -CH₂CH₂-OH. Celluloseether werden technisch durch Veretherung von Alkalicellulose (z.B. mit Ethylenoxid) hergestellt. Celluloseether werden charakterisiert über den durchschnittlichen Substitutionsgrad DS bzw. den molaren Substitutionsgrad MS, die angeben, wieviele Hydroxy-Gruppen einer Anhydroglucose-Einheit der Cellulose mit dem Veretherungsreagens reagiert haben bzw. wieviel mol des Veretherungsreagens im Durchschnitt an eine Anhydroglucose-Einheit angelagert wurden. Hydroxyethylcellulosen sind ab einem DS von ca. 0,6 bzw. einem MS von ca. 1 wasserlöslich. Handelsübliche Hydroxyethyl- bzw. Hydroxypropylcellulosen haben Substitutionsgrade im Bereich von 0,85-1,35 (DS) bzw. 1,5-3 (MS). Hydroxyethyl- und -propylcellulosen werden als gelblich-weiße, geruch- und geschmacklose Pulver in stark unterschiedlichen Polymerisationsgraden vermarktet. Hydroxyethyl- und -propylcellulosen sind in kaltem und heißem Wasser sowie in einigen (wasserhaltigen) organischen Lösungsmitteln löslich, in den meisten (wasserfreien) organischen Lösungsmitteln dagegen unlöslich; ihre wäßrigen Lösungen sind relativ unempfindlich gegenüber Änderungen des pH-Werts oder Elektrolyt-Zusatz.

Weitere erfindungsgemäß bevorzugte Polymere sind wasserlösliche Amphopolymere. Unter dem Oberbegriff Ampho-Polymere sind amphotere Polymere, d.h. Polymere, die im Molekül sowohl freie Aminogruppen als auch freie -COOH- oder SO₃H-Gruppen enthalten und zur Ausbildung innerer Salze befähigt sind, zwitterionische Polymere, die im Molekül quartäre Ammoniumgruppen und -COO⁻- oder -SO₃⁻-Gruppen enthalten, und solche Polymere zusammengefaßt, die -COOH- oder SO₃H-Gruppen und quartäre Ammoniumgruppen enthalten. Ein Beispiel für ein erfindungsgemäß einsetzbares Amphopolymer ist das unter der Bezeichnung Amphomer^{®} erhältliche Acrylharz, das ein Copolymer aus tert.-Butylaminoethylmethacrylat, N-(1,1,3,3-Tetramethylbutyl)acrylamid sowie zwei oder mehr Monomeren aus der Gruppe Acrylsäure, Methacrylsäure und deren einfachen Estern darstellt. Ebenfalls bevorzugte Amphopolymere setzen sich aus ungesättigten Carbonsäuren (z.B. Acryl- und Methacrylsäure), kationisch derivatisierten ungesättigten Carbonsäuren (z.B. Acrylamidopropyl-trimethyl-ammoniumchlorid) und gegebenenfalls weiteren ionischen oder nichtionogenen Monomeren zusammen, wie beispielsweise in der deutschen Offenlegungsschrift **39 29 973** und dem dort zitierten Stand der Technik zu entnehmen sind. Terpolymere von Acrylsäure, Methylacrylat und Methacrylamidopropyltrimoniumchlorid, wie sie unter der Bezeichnung Merquat^{®}2001 N im Handel erhältlich sind, sind erfindungsgemäß besonders bevorzugte Ampho-Polymere. Weitere geeignete amphotere Polymere sind beispielsweise die unter den Bezeichnungen Amphomer^{®} und Amphomer^{®} LV-71 (DELFT NATIONAL) erhältlichen Octylacrylamid/Methylmethacrylat/tert: Butylaminoethylmethacrylat/2-Hydroxypropylmethacrylat-Copolymere.

Geeignete zwitterionische Polymere sind beispielsweise Acrylamidopropyltrimethylammoniumchlorid/Acrylsäure- bzw. -Methacrylsäure-Copolymerisate und deren Alkali- und Ammoniumsalze. Weiterhin geeignete zwitterionische Polymere sind Methacroylethylbetain/Methacrylat-Copolymere, die unter der Bezeichnung Amersette^{®} (AMERCHOL) im Handel erhältlich sind.

Erfindungsgemäß geeignete anionische Polymere sind u. a.:
- Vinylacetat/Crotonsäure-Copolymere, wie sie beispielsweise unter den Bezeichnungen Resyn^{®} (NATIONAL STARCH), Luviset^{®} (BASF) und Gafset^{®} (GAF) im Handel sind. Diese Polymere weisen neben Monomereinheiten der vorstehend genannten Formel (II) auch Monomereinheiten der allgemeinen Formel (IV) auf:

   [-CH(CH₃)-CH(COOH)-]ₙ (IV)
- Vinylpyrrolidon/Vinylacrylat-Copolymere, erhältlich beispielsweise unter dem Warenzeichen Luviflex^{®} (BASF). Ein bevorzugtes Polymer ist das unter der Bezeichnung Luviflex^{®} VBM-35 (BASF) erhältliche Vinylpyrrolidon/Acrylat-Terpolymere.
- Acrylsäure/Ethylacrylat/N-tert.Butylacrylamid-Terpolymere, die beispielsweise unter der Bezeichnung Ultrahold^{®} strong (BASF) vertrieben werden.
- Pfropfpolymere aus Vinylestern, Estern von Acrylsäure oder Methacrylsäure allein oder im Gemisch, copolymerisiert mit Crotonsäure, Acrylsäure oder Methacrylsäure mit Polyalkylenoxiden und/oder Polykalkylenglycolen
   Solche gepfropften Polymere von Vinylestern, Estern von Acrylsäure oder Methacrylsäure allein oder im Gemisch mit anderen copolymerisierbaren Verbindungen auf Polyalkylenglycolen werden durch Polymerisation in der Hitze in homogener Phase dadurch erhalten, daß man die Polyalkylenglycole in die Monomeren der Vinylester, Ester von Acrylsäure oder Methacrylsäure, in Gegenwart von Radikalbildner einrührt.
   Als geeignete Vinylester haben sich beispielsweise Vinylacetat, Vinylpropionat, Vinylbutyrat, Vinylbenzoat und als Ester von Acrylsäure oder Methacrylsäure diejenigen, die mit aliphatischen Alkoholen mit niedrigem Molekulargewicht, also insbesondere Ethanol, Propanol, Isopropanol, 1-Butanol, 2-Butanol, 2-Methy-1-Propanol, 2-Methyl-2-Propanol, 1-Pentanol, 2-Pentanol, 3-Pentanol, 2,2-Dimethyl-1-Propanol, 3-Methyl-1-butanol; 3-Methyl-2-butanol, 2-Methyl-2-butanol, 2-Methyl-1-Butanol, 1-Hexanol, erhältlich sind, bewährt.
   Als Polyalkylenglycole kommen insbesondere Polyethylenglycole und Polypropylenglycole in Betracht. Polymere des Ethylenglycols, die der allgemeinen Formel V

   H-(O-CH₂-CH₂)ₙ-OH (V)

   genügen, wobei n Werte zwischen 1 (Ethylenglycol) und mehreren tausend annehmen kann. Für Polyethylenglycole existieren verschiedene Nomenklaturen, die zu Verwirrungen führen können. Technisch gebräuchlich ist die Angabe des mittleren relativen Molgewichts im Anschluß an die Angabe "PEG", so daß "PEG 200" ein Polyethylenglycol mit einer relativen Molmasse von ca. 190 bis ca. 210 charakterisiert. Für kosmetische Inhaltsstoffe wird eine andere Nomenklatur verwendet, in der das Kurzzeichen PEG mit einem Bindestrich versehen wird und direkt an den Bindestrich eine Zahl folgt, die der Zahl n in der oben genannten Formel V entspricht. Nach dieser Nomenklatur (sogenannte INCI-Nomenklatur, CTFA International Cosmetic Ingredient Dictionary and Handbook, 5^{th} Edition, The Cosmetic, Toiletry and Fragrance Association, Washington, 1997) sind beispielsweise PEG-4, PEG-6, PEG-8, PEG-9, PEG-10, PEG-12, PEG-14 und PEG-16 einsetzbar. Kommerziell erhältlich sind Polyethylenglycole beispielsweise unter den Handelsnamen Carbowax^{®} PEG 200 (Union Carbide), Emkapol^{®} 200 (ICI Americas), Lipoxol^{®} 200 MED (HÜLS America), Polyglycol^{®} E-200 (Dow Chemical), Alkapol^{®} PEG 300 (Rhone-Poulenc), Lutrol^{®} E300 (BASF) sowie den entsprechenden Handelsnamen mit höheren Zahlen. Polypropylenglycole (Kurzzeichen PPG) sind Polymere des Propylenglycols, die der allgemeinen Formel VI 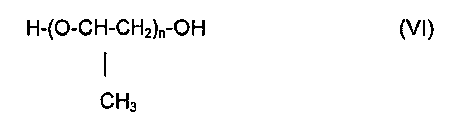 genügen, wobei n Werte zwischen 1 (Propylenglycol) und mehreren tausend annehmen kann. Technisch bedeutsam sind hier insbesondere Di-, Tri- und Tetrapropylenglycol, d.h. die Vertreter mit n=2, 3 und 4 in Formel VI. Insbesondere können die auf Polyethylenglycole gepfropften Vinylacetatcopolymeren und die auf Polyethylenglycole gepfropften Polymeren von Vinylacetat und Crotonsäure eingesetzt werden.
- gepfropfte und vemetzte Copolymere aus der Copolymerisation von
   i) mindesten einem Monomeren vom nicht-ionischen Typ,
   ii) mindestens einem Monomeren vom ionischen Typ,
   iii) von Polyethylenglycol und
   iv) einem Vernetzter
      Das verwendete Polyethylenglycol weist ein Molekulargewicht zwischen 200 und mehreren Millionen, vorzugsweise zwischen 300 und 30.000, auf. Die nicht-ionischen Monomeren können von sehr unterschiedlichem Typ sein und unter diesen sind folgende bevorzugt: Vinylacetat, Vinylstearat, Vinyllaurat, Vinylpropionat, Allylstearat, Allyllaurat, Diethylmaleat, Allylacetat, Methylmethacrylat, Cetylvinylether, Stearylvinylether und 1-Hexen.
      Die ionischen Monomeren können gleichermaßen von sehr unterschiedlichen Typen sein, wobei unter diesen besonders bevorzugt Crotonsäure, Allyloxyessigsäure, Vinylessigsäure, Maleinsäure, Acrylsäure und Methacrylsäure in den Pfropfpolameren enthalten sind.
      Als Vernetzer werden vorzugsweise Ethylenglycoldimethacrylat, Diallylphthalat, ortho-, meta- und para-Divinylbenzol, Tetraallyloxyethan und Polyallylsaccharosen mit 2 bis 5 Allylgruppen pro Molekül Saccharin.
   Die vorstehend beschriebenen gepfropften und vernetzten Copolymere werden vorzugsweise gebildet aus:
   i) 5 bis 85 Gew.-% mindesten eine Monomeren vom nicht-ionischen Typ,
   ii) 3 bis 80 Gew.-% mindestens eines Monomeren vom ionischen Typ,
   iii) 2 bis 50 Gew.-%, vorzugsweise 5 bis 30 Gew.-% Polyethylenglycol und
   iv) 0,1 bis 8 Gew.-% eines Vemetzers, wobei der Prozentsatz des Vernetzers durch das Verhältnis der Gesamtgewichte von i), ii) und iii) ausgebildet ist.
- durch Copolymerisation mindestens eines Monomeren jeder der drei folgenden Gruppen erhaltene Copolymere:
   i) Ester ungesättigter Alkohole und kurzkettiger gesättigter Carbonsäuren und/oder Ester kurzkettiger gesättigter Alkohole und ungesättigter Carbonsäuren,
   ii) ungesättigte Carbonsäuren,
   iii) Ester langkettiger Carbonsäuren und ungesättigter Alkohole und/oder Ester aus den Carbonsäuren der Gruppe ii) mit gesättigten oder ungesättigten, geradkettigen oder verzweigten C₈₋₁₈-Alkohols
   Unter kurzkettigen Carbonsäuren bzw. Alkoholen sind dabei solche mit 1 bis 8 Kohlenstoffatomen zu verstehen, wobei die Kohlenstoffketten dieser Verbindungen gegebenenfalls durch zweibindige Heterogruppen wie -O-, -NH-, -S_ unterbrochen sein können.
- Terpolymere aus Crotonsäure, Vinylacetat und einem Allyl- oder Methallylester
   Diese Terpolymere enthalten Monomereinheiten der allgemeinen Formeln (II) und (IV) (siehe oben) sowie Monomereinheiten aus einem oder mehreren Allyl- oder Methallyestern der Formel VII: 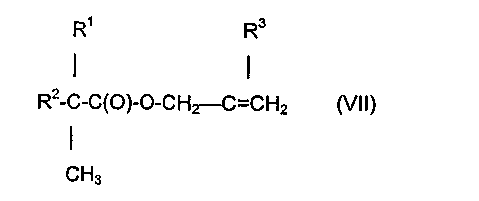 worin R³ für -H oder -CH₃, R² für -CH₃ oder -CH(CH₃)₂ und R¹ für -CH₃ oder einen gesättigten geradkettigen oder verzweigten C₁₋₆-Alkylrest steht und die Summe der
   Kohlenstoffatome in den Resten R¹ und R² vorzugsweise 7, 6, 5, 4, 3 oder 2 ist. Die vorstehend genannten Terpolymeren resultieren vorzugsweise aus der Copolymerisation von 7 bis 12 Gew.-% Crotonsäure, 65 bis 86 Gew.%, vorzugsweise 71 bis 83 Gew.-% Vinylacetat und 8 bis 20 Gew.-%, vorzugsweise 10 bis 17 Gew.-% Allyl- oder Methallylestern der Formel VII.
- Tetra- und Pentapolymere aus
   i) Crotonsäure oder Allyloxyessigsäure
   ii) Vinylacetat oder Vinylpropionat
   iii) verzweigten Allyl- oder Methallylestern
   iv) Vinylethern, Vinylestern oder geradkettigen Allyl- oder Methallylestern
- Crotonsäure-Copolymere mit einem oder mehreren Monomeren aus der Gruppe Ethylen, Vinylbenzol, Vinylmethylether, Acrylamid und deren wasserlöslicher Salze
- Terpolymere aus Vinylacetat, Crotonsäure und Vinylestern einer gesättigten aliphatischen in □-Stellung verzweigten Monocarbonsäure.

Weitere, bevorzugt als Bestandteil der Beschichtung einsetzbare Polymere sind kationische Polymere. Unter den kationischen Polymeren sind dabei die permanent kationischen Polymere bevorzugt. Als "permanent kationisch" werden erfindungsgemäß solche Polymeren bezeichnet, die unabhängig vom pH-Wert der Mittels (also sowohl der Beschichtung als auch des Formkörpers) eine kationische Gruppe aufweisen. Dies sind in der Regel Polymere, die ein quartäres Stickstoffatom, beispielsweise in Form einer Ammoniumgruppe, enthalten.
Bevorzugte kationische Polymere sind beispielsweise
- quatemisierte Cellulose-Derivate, wie sie unter den Bezeichnungen Celquat^{®} und Polymer JR^{®} im Handel erhältlich sind. Die Verbindungen Celquat^{®} H 100, Celquat^{®} L 200 und Polymer JR^{®}400 sind bevorzugte quaternierte Cellulose-Derivate.
- Polysiloxane mit quaternären Gruppen, wie beispielsweise die im Handel erhältlichen Produkte Q2-7224 (Hersteller: Dow Corning; ein stabilisiertes Trimethylsilylamodimethicon), Dow Corning^{®} 929 Emulsion (enthaltend ein hydroxyl-amino-modifiziertes Silicon, das auch als Amodimethicone bezeichnet wird), SM-2059 (Hersteller: General Electric), SLM-55067 (Hersteller: Wacker) sowie Abil^{®}-Quat 3270 und 3272 (Hersteller: Th. Goldschmidt; diquaternäre Polydime- thylsiloxane, Quaternium-80),
- Kationische Guar-Derivate, wie insbesondere die unter den Handelsnamen Cosmedia^{®}Guar und Jaguar^{®} vertriebenen Produkte,
- Polymere Dimethyldiallylammoniumsalze und deren Copolymere mit Estern und Amiden von Acrylsäure und Methacrylsäure. Die unter den Bezeichnungen Merquat^{®}100 (Poly(dimethyldiallylammoniumchlorid)) und Merquat^{®}550 (Dimethyldiallylammoniumchlorid-Acrylamid-Copolymer) im Handel erhältlichen Produkte sind Beispiele für solche kationischen Polymere.
- Copolymere des Vinylpyrrolidons mit quaternierten Derivaten des Dialkylaminoacrylats und -methacrylats, wie beispielsweise mit Diethylsulfat quaternierte Vinylpyrrolidon-Dimethylaminomethacrylat-Copolymere. Solche Verbindungen sind unter den Bezeichnungen Gafquat^{®}734 und Gafquat^{®}755 im Handel erhältlich.
- Vinylpyrrolidon-Methoimidazoliniumchlorid-Copolymere, wie sie unter der Bezeichnung Luviquat^{®} angeboten werden.
- quaternierter Polyvinylalkohol
   sowie die unter den Bezeichnungen
- Polyquaternium 2,
- Polyquaternium 17,
- Polyquaternium 18 und
- Polyquaternium 27
bekannten Polymeren mit quartären Stickstoffatomen in der Polymerhauptkette. Die genannten Polymere sind dabei nach der sogenannten INCI-Nomenklatur bezeichnet, wobei sich detaillierte Angaben im CTFA International Cosmetic Ingredient Dictionary and Handbook, 5^{th} Edition, The Cosmetic, Toiletry and Fragrance Association, Washington, 1997, finden, auf die hier ausdrücklich Bezug genommen wird.

Erfindungsgemäß bevorzugte kationische Polymere sind quaternisierte Cellulose-Derivate sowie polymere Dimethyldiallylammoniumsalze und deren Copolymere. Kationische Cellulose-Derivate, insbesondere das Handelsprodukt Polymer^{®}JR 400, sind ganz besonders bevorzugte kationische Polymere.

Ein im Rahmen der vorliegenden Anmeldung besonders bevorzugtes Beschichtungsmaterial für die dispergierten Feststoffteilchen ist Polyvinylalkohol (PVA). Bezüglich des Hydrolysegrades und des Molekulargewichts der bevorzugt für das Coating eingesetzten Polyvinylalkohole gelten die weiter unten in der Beschreibung bezüglich der bevorzugten Behältermaterialien gemachten Angaben, auf die an dieser Stelle zur Vermeidung von Wiederholungen verwiesen wird.
Wie bereits erwähnt kann die Beschichtung der Feststoffteilchen auch aus einem Gemisch der vorgenannten Polymere mit Salzen, vorzugsweise anorganischen Salzen, bestehen.

Zusammenfassend werden im Rahmen der vorliegenden Anmeldung Wasch- oder Reinigungsmittelzusammensetzungen bevorzugt, bei denen die Beschichtung des/der in der flüssigen Matrix dispergierten Feststoffteilchen(s) mindestens eine Substanz ausgewählt aus der Gruppe der wasserlöslichen organischen Polymere, bevorzugt der wasserlöslichen organischen Homo- und/oder Copolymere, besonders bevorzugt aus der Gruppe der wasserlöslichen Homopolymere, insbesondere bevorzugt aus der Gruppe der Polyethylenglycole und/oder Polypropylenglycole und insbesondere aus der Gruppe der Polyethylenglycole und/oder Poylpropylenglycole mit einem Molekulargewicht oberhalb 2000, enthält, wobei bei der Wahl der vorgenannten Beschichtungsmaterialien im Hinblick auf ihre Verarbeitbarkeit und thermische Beständigkeit solche Substanzen besonders bevorzugt sind, die einen Schmelzpunkt oberhalb 30°C, vorzugsweise oberhalb 60°C, besonders bevorzugt oberhalb 90°C und insbesondere oberhalb 120°C aufweisen.

Eine zweite Gruppe erfindungsgemäß bevorzugter Beschichtungsmaterialien sind die wasserunlöslichen Beschichtungsmaterialien, insbesondere die Beschichtungsmaterialien aus der Gruppe der Fette, Triglyceride und Wachse.

Fett(e) oder Triglycerid(e) ist die Bezeichnung für Verbindungen des Glycerins, bei denen die drei Hydroxy-Gruppen des Glycerins durch Carbonsäuren verestert sind. Die natürlich vorkommenden Fette sind Triglyceride, die in der Regel verschiedene Fettsäuren im gleichen Glycerin-Molekül enthalten. Durch Verseifung der Fette und nachfolgende Veresterung bzw. Umsetzung mit Acylchloriden sind jedoch auch synthetische Triglyceride, in denen nur eine Fettsäure gebunden ist, zugänglich (z.B. Tripalmitin, Triolein oder Tristearin). Natürliche und/oder synthetische Fette und/oder Mischungen der beiden sind als Beschichtungsmaterial für die dispergierten Feststoffe im Rahmen der vorliegenden Erfindung bevorzugt.

Als Fettsäuren werden in der vorliegenden Anmeldung aliphatische gesättigte oder ungesättigte, Carbonsäuren mit verzweigter oder unverzweigter Kohlenstoff-Kette bezeichnet. Für die Herstellung der Fettsäuren existieren eine Vielzahl von Herstellungsmethoden. Während die niederen Fettsäuren meist auf oxidative Verfahren ausgehend von Alkoholen und/oder Aldehyden sowie aliphatischen bzw. acyclischen Kohlenwasserstoffen beruhen, sind die höheren homologen meistenteils auch heute noch am einfachsten durch Verseifung natürlicher Fette zugänglich. Durch die Fortschritte im Bereich der transgenen Pflanzen sind inzwischen fast unbegrenzte Möglichkeiten zur Variation des Fettsäure-Spektrums in den Speicherfetten von Ölpflanzen gegeben. Bevorzugte Fettsäuren weisen im Rahmen der vorliegenden Erfindung einen Schmelzpunkt auf, der eine Verarbeitung dieser Fette als Material oder Bestandteil eines Gießkörpers erlaubt. Dabei haben sich Fettsäuren als besonders vorteilhaft erwiesen, die einen Schmelzpunkt oberhalb 25°C aufweisen. Bevorzugte Matrixmaterialien und/oder -bestandteile sind daher Caprinsäure und/oder Undecansäure und/oder Laurinsäure und/oder Tridecansäure und/oder Myristinsäure und/oder Pentadecansäure und/oder Palmitinsäure und/oder Margarinsäure und/oder Stearinsäure und/oder Nonadecansäure und/oder Arachinsäure und/oder Erucasäure und/oder Elaeosterarinsäure. Aber auch Fettsäuren mit einem Schmelzpunkt unterhalb 25°C können Bestandteil der Beschichtung der dispergierten Feststoffteilchen sein.

Fettalkohol ist eine Sammelbezeichnung für die durch Reduktion der Triglyceride, Fettsäuren bzw. Fettsäureester erhältlichen linearen, gesättigten oder ungesättigten primären Alkohole mit 6 bis 22 Kohlenstoffatomen. Die Fettalkohole können in Abhängigkeit vom Herstellungsverfahren gesättigt oder ungesättigt sein. Myristylalkohol und/oder 1-Pentadecanol und/oder Cetylalkohol und/oder 1-Heptadecanl und/oder Stearylalkohol und/oder Erucylalkohol und/oder 1-Nonadecanol und/oder Arachidylalkohol und/oder 1-Heneicosanol und/oder Behenylalkohol und/oder Erucylalkohol und/oder Brassidylalkohol sind bevorzugte Bestandteile der Beschichtungen von dem/den in der flüssigen Matrix erfindungsgemäßer Mittel dispergierten Feststoffteilchen.

Es hat sich ebenfalls als vorteilhaft erwiesen, wenn die in der flüssigen Matrix dispergierten Feststoffteilchen als Matrixmaterial Wachse enthalten. Bevorzugte Wachse weisen dabei einen Schmelzbereich auf, der zwischen etwa 45°C und etwa 75°C liegt. Das heißt im vorliegenden Fall, daß der Schmelzbereich innerhalb des angegebenen Temperaturintervalls auftritt und bezeichnet nicht die Breite des Schmelzbereichs. Wachse mit einem solchen Schmelzbereich sind zum einem bei Raumtemperatur formstabil schmelzen jedoch bei für die maschinelle Geschirreinigung typischen Temperaturen von 30°C bis 90°C und sind daher bei diesen Temperaturen leichter wasserdispergierbar.

Unter "Wachsen" wird eine Reihe natürlicher oder künstlich gewonnener Stoffe verstanden, die in der Regel über 40°C ohne Zersetzung schmelzen und schon wenig oberhalb des Schmelzpunktes verhältnismäßig niedrigviskos und nicht fadenziehend sind. Sie weisen eine stark temperaturabhängige Konsistenz und Löslichkeit auf.

Nach ihrer Herkunft teilt man die Wachse in drei Gruppen ein, die natürlichen Wachse, chemisch modifizierte Wachse und die synthetischen Wachse.

Zu den natürlichen Wachsen zählen beispielsweise pflanzliche Wachse wie Candelillawachs, Carnaubawachs, Japanwachs, Espartograswachs, Korkwachs, Guarumawachs, Reiskeimölwachs, Zuckerrohrwachs, Ouricurywachs, oder Montanwachs, tierische Wachse wie Bienenwachs, Schellackwachs, Walrat, Lanolin (Wollwachs), oder Bürzelfett, Mineralwachse wie Ceresin oder Ozokerit (Erdwachs), oder petrochemische Wachse wie Petrolatum, Paraffin wachse oder Mikrowachse.

Zu den chemisch modifizierten Wachsen zählen beispielsweise Hartwachse wie Montanesterwachse, Sassolwachse oder hydrierte Jojobawachse.

Unter synthetischen Wachsen werden in der Regel Polyalkylenwachse oder Polyalkylenglycolwachse verstanden. Als schmelz- oder erweichbaren Substanzen für die durch Abkühlung aushärtenden Massen einsetzbar sind auch Verbindungen aus anderen Stoffklassen, die die genannten Erfordernisse hinsichtlich des Erweichungspunkts erfüllen. Als geeignete synthetische Verbindungen haben sich beispielsweise höhere Ester der Phthalsäure, insbesondere Dicyclohexylphthalat, das kommerziell unter dem Namen Unimoll^{®} 66 (Bayer AG) erhältlich ist, erwiesen. Geeignet sind auch synthetisch hergestellte Wachse aus niederen Carbonsäuren und Fettalkoholen, beispielsweise Dimyristyl Tartrat, das unter dem Namen Cosmacol^{®} ETLP (Condea) erhältlich ist. Umgekehrt sind auch synthetische oder teilsynthetische Ester aus niederen Alkoholen mit Fettsäuren aus nativen Quellen einsetzbar. In diese Stoffklasse fällt beispielsweise das Tegin^{®} 90 (Goldschmidt), ein Glycerinmonostearat-palmitat. Auch Schellack, beispielsweise Schellack-KPS-Dreiring-SP (Kalkhoff GmbH) ist erfindungsgemäß als Beschichtungsmaterial einsetzbar.

Ebenfalls zu den Wachsen im Rahmen der vorliegenden Erfindung werden beispielsweise die sogenannten Wachsalkohole gerechnet. Wachsalkohole sind höhermolekulare, wasserunlösliche Fettalkohole mit in der Regel etwa 22 bis 40 Kohlenstoffatomen. Die Wachsalkohole kommen beispielsweise in Form von Wachsestem höhermolekularer Fettsäuren (Wachssäuren) als Hauptbestandteil vieler natürlicher Wachse vor. Beispiele für Wachsalkohole sind Lignocerylalkohol (1-Tetracosanol), Cetylalkohol, Myristylalkohol oder Melissylalkohol. Die Umhüllung der erfindungsgemäß umhüllten Feststoffpartikel kann gegebenenfalls auch Wollwachsalkohole enthalten, worunter man Triterpenoid- und Steroidalkohole, beispielsweise Lanolin, versteht, das beispielsweise unter der Handelsbezeichnung Argowax^{®} (Pamentier & Co) erhältlich ist.

In einer weiteren bevorzugten Ausführungsform weisen die dispergierten Feststoffteilchen im überwiegenden Anteil Paraffinwachs als Beschichtungsmaterial auf. Das heißt, daß wenigstens 50 Gew.-% des Beschichtungsmaterials, vorzugsweise mehr, aus Paraffinwachs bestehen. Besonders geeignet sind Paraffinwachsgehalte (bezogen auf das Gesamtgewicht der Beschichtungsmaterialien) von etwa 60 Gew.-%, etwa 70 Gew.-% oder etwa 80 Gew.-%, wobei noch höhere Anteile von beispielsweise mehr als 90 Gew.-% besonders bevorzugt sind. In einer besonderen Ausführungsform der Erfindung besteht die Gesamtmenge des Beschichtungsmaterials aus Paraffinwachs.

Parafinwachse bestehen hauptsächlich aus Alkanen, sowie niedrigen Anteilen an Iso- und Cycloalkanen. Das erfindungsgemäß einzusetzende Paraffin weist bevorzugt im wesentlichen keine Bestandteile mit einem Schmelzpunkt von mehr als 70°C, besonders bevorzugt von mehr als 60°C auf.

Bevorzugte Feststoffteilchen weisen als Beschichtungsmaterial oder als Bestandteil der Beschichtung mindestens ein Paraffinwachs mit einem Schmelzbereich von 40°C bis 60°C auf.

Weitere vorteilhafte Bestandteile der Beschichtung von Feststoffteilchen sind Wachsalkohole, also Fettalkohole mit ca. 24-36 Kohlenstoffatomen, die in Form von Wachsestern höhermolekularer Fettsäuren (Wachssäuren) Hauptbestandteil vieler natürlicher Wachse sind. Beispielhaft für bevorzugte Wachsalkohole seien hier Lignocerylalkohol, Cerylalkohol, Myricylalkohol oder Melissylalkohol genannt.

Selbstverständlich können für den Fall, daß ein erfindungsgemäßes Mittel mehr als ein beschichtetes dispergiertes Feststoffteilchen in der flüssigen Matrix aufweist, diese Teilchen voneinander abweichende Beschichtungen aufweisen.

Es ist im Rahmen der vorliegenden Erfindung bevorzugt, daß die Menge des/der Beschichtungssubstanz(en), bezogen auf das Gesamtgewicht des/der beschichteten dispergierten Feststoffteilchen zwischen 0,5 und 15 Gew.-%, vorzugsweise zwischen 1 und 12 Gew.-% und insbesondere zwischen 2 und 8 Gew.-% beträgt/betragen.

Wie vorstehend ausgefürht sind beschichtete dispergierte Feststoffteilchen geeignet miteinander unverträgliche Aktivsubstanzen oder feuchtigkeitsempfindliche Aktivsubstanzen in einer kompakten Angebotsform lagerstabil zu konfektionieren. Dabei ergibt sich aus der Größe der dispergierten Feststoffteilchen zwischen 12 000-20 000 µm gegenüber Mitteln mit dispergierten Feststoffteilchen geringerer Größe ein weiterer Vorteil der vorliegenden Erfindung, da mit zunehmender Teilchengröße auf Grund des abnehmenden Verhältnisses der Teilchenoberfläche zum Teilchenvolumen zur Beschichtung des gleichen Volumeninhalts eine geringere Menge des Beschichtungsmittels eingesetzt werden muß. In einer Ausführungsform ist die durch Vergrößerung der Feststoffteilchen erreichte Verringerung der Feststoffoberfläche bereits ausreichend zur Stabilisierung miteinander unverträglicher Aktivsubstanzen, welche sich getrennt in der flüssigen Matrix und dem dispergierten Feststoffteilchen befinden.

Zu den vorgenannten gegen Zersetzung empfindlichen Aktivsubstanzen zählen beispielsweise die Enzyme und die Bleichmittel.

Enzyme werden in Wasch- oder Reinigungsmitteln in der Regel auf Trägermaterialien konfektioniert eingesetzt, so daß der bevorzugte Weg zur Stabilisierung derartiger Enzyme im Rahmen der vorliegenden Anmeldung die Einarbeitung dieser Enzyme in die beschichteten oder unbeschichteten dispergierten Feststoffteilchen ist. Ein weiterer bevorzugter Gegenstand der vorliegenden Anmeldung sind daher portionierte Wasch- oder Reinigungsmittelzusammensetzungen, dadurch gekennzeichnet, daß das/die dispergierten Feststoffteilchen mindestens ein Enzym, vorzugsweise aus der Gruppe der Proteasen, Amylasen oder Lipasen, in Mengen von 0,01 bis 15 Gew.-%, vorzugsweise von 0,1 bis 10 Gew.-% und insbesondere von 0,2 bis 7 Gew.-%, jeweils bezogen auf das Gesamtgewicht des/der Enzymhältigen dispergierten Feststoffteilchen, enthält/enthalten. Für eine detaillierte Beschreibung der vorgenannten Enzyme wird zur Vermeidung von Wiederholungen auf die nachfolgenden Abschnitte verwiesen.

Ein weiterer bevorzugter Gegenstand der vorliegenden Anmeldung sind erfindungsgemäße portionierte Wasch- oder Reinigungsmittelzusammensetzungen, dadurch gekennzeichnet, daß das/die dispergierte(n) Feststoffteilchen mindestens ein Bleichmittel, vorzugsweise aus der Gruppe der in Wasser H₂O₂ liefernden Verbindungen, besonders bevorzugt aus der Gruppe Natriumperborattetrahydrat, Natriumperboratmonohydrat oder Natriumpercarbonat, in Mengen von 0,1 bis 50 Gew.-%, vorzugsweise von 0,5 bis 40 Gew.-% und insbesondere von 1,0 bis 30 Gew.-%, jeweils bezogen auf das Gesamtgewicht des/der Bleichmittel-haltigen dispergierten Feststoffteilchen, enthält/enthalten.

Ein weiterer bevorzugter Gegenstand der vorliegenden Anmeldung sind erfindungsgemäße portionierte Wasch- oder Reinigungsmittelzusammensetzungen, dadurch gekennzeichnet, daß das/die dispergierte(n) Feststoffteilchen mindestens ein Polymer, vorzugsweise eine Polymer aus der Gruppe der homo- oder copolymeren Carbonsäuren und/oder der homo- oder copolymeren Polycarbonsäuren und/oder der homo- oder copoylmeren Sulfonsäuren, in Mengen von 1 bis 70 Gew.-%, vorzugsweise von 2 bis 60 Gew.-% und insbesondere von 5 bis Gew.-%, jeweils bezogen auf das Gesamtgewicht des/der Polymer-haltigen dispergierten Feststoffteilchen, enthält.

Ein weiterer bevorzugter Gegenstand der vorliegenden Anmeldung sind erfindungsgemäße portionierte Wasch- oder Reinigungsmittelzusammensetzun, dadurch gekennzeichnet, daß das/die dispergierte(n) Feststoffteilchen mindestens ein Tensid, vorzugsweise ein anionisches, besonders bevorzugt ein Alkylbenzolsulfonat, oder ein nichtionisches Tensid, bevorzugt ein alkoxyliertes Niotensid, insbesondere ein ethoxyliertes Niotensid, in Mengen von 0,5 bis 30 Gew.-%, vorzugsweise von 1 bis 25 Gew.-% und insbesondere von 2 bis 20 Gew.-%, jeweils bezogen auf das Gesamtgewicht des/der Tensid-haltigen dispergierten Feststoffteilchen, enthält/enthalten.

Die erfindungsgemäßen flüssigen Wasch- oder Reinigungsmittelzusammensetzungen, die in den Behältern aus wasserlöslicher oder wasserdispergierbarer Folie verpackt werden, können dünnflüssig bis hochviskos sein. "Flüssig" kennzeichnet dabei im Rahmen der vorliegenden Erfindung bei Raumtemperatur fließfähige Mittel, die unter der Einwirkung der Schwerkraft aus Behältnissen auslaufen können. Wie bereits vorstehend erwähnt, spielt die Viskosität der Wasch- oder Reinigungsmittelzusammensetzungen bei der Lösung der Problematik des Nachtropfens und Fadenziehens sowie daraus resultierender Behälternahtundichtigkeiten nicht die ausschlaggebende Rolle. Die Vorteile der erfindungsgemäßen Mittel hinsichtlich der Lösung der geschilderten Problematik können aber weiter ausgebaut werden, wenn die Viskosität der Mittel in bestimmten Bereichen liegt. Besonders bevorzugt sind dabei erfindungsgemäße portionierte Wasch- oder Reinigungsmittelzusammensetzungen, bei denen die flüssige Wasch- oder Reinigungsmittelzusammensetzung eine Viskosität (Brookfield-Viskosimeter LVT-II bei 20 U/min und 20°C, Spindel 3) von 500 bis 100.000 mPas, vorzugsweise von 1000 bis 50.000 mPas, besonders bevorzugt von 1200 bis 10000 mPas und insbesondere von 1300 bis 5000 mPas aufweist.

Die erfindungsgemäßen Mittel sind in Behältern aus wasserlöslicher oder wasserdispergierbarer Folie verpackt. Der Einsatz derartiger Folien schließt jedoch die Verpackung wasserhaltiger Zusammensetzungen grundsätzlich nicht aus. Zusammensetzungen mit einem Wassergehalt unterhalb 6 Gew.-% greifen wasserdispergierbare oder wasserlösliche Verpackungsmaterialien wie beispielsweise Polyvinylalkohol-Folien (PVA-Folien) generell nicht an. Im Rahmen der vorliegenden Anmeldung bevorzugte erfindungsgemäße Mittel ist die flüssige Matrix daher wasserfrei und weist einen Wassergehalt unterhalb 6 Gew.-%, bevorzugt zwischen 0,5 und 5 Gew.-%, besonders bevorzugt zwischen 1 und 4 Gew.-%, jeweils bezogen auf das Gesamtgewicht der Wasch- oder Reinigungsmittelzusammensetzung, auf. Trotz der Verwendung wasserlöslicher oder wasserdispergierbare Behältermaterialien bestehen jedoch auch für die Verpackung wasserhaltiger Zusammensetzungen mit Wassergehalten oberhalb 6 Gew.-% Möglichkeiten die unerwünschte Auflösung der verpackungsbildenden Substanzen durch die enthaltenen Mitteln zu unterbinden. So beschreibt die europäische Patentschrift **EP 518 689 B1** (Rhone-Poulenc Agrochimie) den Zusatz organischer oder anorganischer Salze zu wasserhaltigen Zusammensetzungen, welche in einer Erhöhung der Elektrolytkonzentration und einer Verringerung der Wasserlöslichkeit der Verpackungsmaterialien, wie Polyethylenoxid, Methylcellulose oder Polyvinylalkohol resultiert. Auch die Beschichtung wasserlöslicher Folien mit wasserunlöslichen Folien (Laminat-Folien) oder Partikeln aus PVdC (Polyvinylidendichlorid) oder PTFE (Polytetrafluoroethylen) sind im Stand der Technik beschrieben. Von den zuvor genannten Methoden zur Löslichkeitsverringerung hat sich im Rahmen der vorliegenden Erfindung die Erhöhung der Elektrolytkonzentration als besonders vorteilhaft erwiesen. Diese Methode ermöglicht es, daß bevorzugte in den Behältern enthaltene Wasch- oder Reinigungsmittelzusammensetzung einen Wassergehalt oberhalb 6 Gew.-% aufweisen können, ohne den sie umgebenden wasserlöslichen oder wasserdispergierbaren Behälter anzulösen. In einer weiteren bevorzugten Ausführungsform der der vorliegenden Erfindung ist die flüssige Matrix der portionierten Wasch- oder Reinigungsmittelzusammensetzung wasserhaltig und weist einen Wassergehalt oberhalb 6 Gew.-%, bevorzugt zwischen 10 bis 70 Gew.-%, besonders bevorzugt zwischen 20 und 60 Gew.-% und insbesondere zwischen 30 und 50 Gew.-%, jeweils bezogen auf das Gesamtgewicht der Wasch- oder Reinigungsmittelzusammensetzung, auf. Derartige wasserhaltige Wasch- oder Reinigungsmittelzusammensetzungen enthalten in der flüssigen Matrix gelöste Salze, wobei der Gewichtsanteil dieser Salze am Gesamtgewicht der Wasch- oder Reinigungsmittelzusammensetzung vorzugsweise mindestens 5 Gew.-%, besonders bevorzugt mindestens 7 Gew.-% und insbesondere mindestens 12 Gew.-% beträgt.

Die erfindungsgemäßen Mittel enthalten eine flüssige Matrix, welche außer dem Wasser auch weitere nichtwäßrige Lösungsmittel enthalten kann. Diese nichtwäßrigen Lösungsmittel stammen beispielsweise aus den Gruppen der Mono-Alkohole, Diole, Triole bzw. Polyole, der Ether, Ester und/oder Amide. Besonders bevorzugt sind dabei nichtwäßrige Lösungsmittel, die wasserlöslich sind, wobei "wasserlösliche" Lösungsmittel im Sinne der vorliegenden Anmeldung Lösungsmittel sind, die bei Raumtemperatur mit Wasser vollständig, d.h. ohne Mischungslücke, mischbar sind.

Nichtwäßrige Lösungsmittel, die in den erfindungsgemäßen Mitteln eingesetzt werden können, stammen vorzugsweise aus der Gruppe ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Etheylenglykolmonon-butylether, Diethylenglykolmethylether, Di-ethylenglykolethylether, Propylenglykolmethyl-, - ethyl- oder -propylether, Dipropylenglykolmethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether sowie Mischungen dieser Lösungsmittel.

Eine im Rahmen der vorliegenden Erfindung besonders bevorzugte portionierte Wasch- oder Reinigungsmittelzusammensetzung ist dadurch gekennzeichnet, daß sie nichtwäßrige(s) Lösungsmittel in Mengen von 0,1 bis 70 Gew.-%, vorzugsweise von 0,5 bis 60 Gew.-%, besonders bevorzugt von 1 bis 50 Gew.-%, ganz besonders bevorzugt von 2 bis 40 Gew.-% und insbesondere von 2,5 bis 30 Gew.-%, jeweils bezogen auf die gesamte Zusammensetzung, enthält, wobei bevorzugte(s) nichtwäßrige(s) Lösungsmittel ausgewählt ist/sind aus der Gruppe der bei Raumtemperatur flüssigen nichtionischen Tenside, der Polyethylenglycole und Polypropylenglycole, Glycerin, Glycerincarbonat, Triacetin, Ethylenglycol, Propylengylcol, Propylencarbonat, Hexylenglycol, Ethanol sowie n-Propanol und/oder iso-Propanol.

Die bei Raumtemperatur flüssigen nichtionischen Tenside werden als wasch- bzw. reinigungsaktive Substanzen weiter unten ausführlich beschrieben.

Erfindungsgemäß einsetzbare Polyethylenglycole (Kurzzeichen PEG) sind bei Raumtemperatur flüssig. PEG sind Polymere des Ethylenglycols, die der allgemeinen Formel (I)

H-(O-CH₂-CH₂)ₙ-OH (I)

genügen, wobei n Werte zwischen 1 (Ethylenglykol, siehe unten) und ca. 16 annehmen kann. Für Polyethylenglykole existieren verschiedene Nomenklaturen, die zu Verwirrungen führen können. Technisch gebräuchlich ist die Angabe des mittleren relativen Molgewichts im Anschluß an die Angabe "PEG", so daß "PEG 200" ein Polyethylenglycol mit einer relativen Molmasse von ca. 190 bis ca. 210 charakterisiert. Nach dieser Nomenklatur sind im Rahmen der vorliegenden Erfindung die technisch gebräuchlichen Polyethylenglycole PEG 200, PEG 300, PEG 400 und PEG 600 einsetzbar.

Für kosmetische Inhaltsstoffe wird eine andere Nomenklatur verwendet, in der das Kurzzeichen PEG mit einem Bindestrich versehen wird und direkt an den Bindestrich eine Zahl folgt, die der Zahl n in der oben genannten Formel entspricht. Nach dieser Nomenklatur (sogenannte INCI-Nomenklatur, CTFA International Cosmetic Ingredient Dictionary and Handbook, 5^{th} Edition, The Cosmetic, Toiletry and Fragrance Association, Washington, 1997) sind erfindungsgemäß beispielsweise PEG-4, PEG-6, PEG-8, PEG-9, PEG-10, PEG-12, PEG-14 und PEG-16 erfindungsgemäß einsetzbar.

Kommerziell erhältlich sind Polyethylenglycole beispielsweise unter den Handelnamen Carbowax^{®} PEG 200 (Union Carbide), Emkapol^{®} 200 (ICI Americas), Lipoxol^{®} 200 MED (HÜLS America), Polyglycol^{®} E-200 (Dow Chemical), Alkapol^{®} PEG 300 (Rhone-Poulenc), Lutrol^{®} E300 (BASF) sowie den entsprechenden Handelnamen mit höheren Zahlen.

Erfindungsgemäß einsetzbare Polypropylenglycole (Kurzzeichen PPG) sind Polymere des Propylenglycols, die der allgemeinen Formel (II) 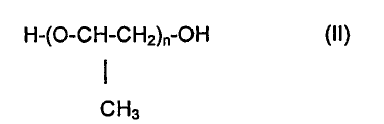 genügen, wobei n Werte zwischen 1 (Propylenglycol, siehe unten) und ca. 12 annehmen kann. Technisch bedeutsam sind hier insbesondere Di-, Tri- und Tetrapropylenglycol, d.h. die Vertreter mit n=2, 3 und 4 in der vorstehenden Formel.

Glycerin ist eine farblose, klare, schwerbewegliche, geruchlose süß schmeckende hygroskopische Flüssigkeit der Dichte 1,261, die bei 18,2°C erstarrt. Glycerin war ursprünglich nur ein Nebenprodukt der Fettverseifung, wird heute aber in großen Mengen technisch synthetisiert. Die meisten technischen Verfahren gehen von Propen aus, das über die Zwischenstufen Allylchlorid, Epichlorhydrin zu Glycerin verarbeitet wird. Ein weiteres technisches Verfahren ist die Hydroxylierung von Allylalkohol mit Wasserstoffperoxid am WO₃-Kontakt über die Stufe des Glycids.

Glycerincarbonat ist durch Umesterung von Ethylencarbonat oder Dimethylcarbonat mit Glycerin zugänglich, wobei als Nebenprodukte Ethylenglycol bzw. Methanol anfallen. Ein weiterer Syntheseweg geht von Glycidol (2,3-Epoxy-1-propanol) aus, das unter Druck in Gegenwart von Katalysatoren mit CO₂ zu Glycerincarbonat umgesetzt wird. Glycerincarbonat ist eine klare, leichtbewegliche Flüssigkeit mit einer Dichte von 1,398 gcm⁻³, die bei 125-130°C (0,15 mbar) siedet.

Ethylenglycol (1,2-Ethandiol, "Glykol") ist eine farblose, viskose, süß schmeckende, stark hygroskopische Flüssigkeit, die mit Wasser, Alkoholen und Aceton mischbar ist und eine Dichte von 1,113 aufweist. Der Erstarrungspunkt von Ethylenglycol liegt bei -11,5°C, die Flüssigkeit siedet bei 198°C. Technisch wird Ethylenglycol aus Ethylenoxid durch Erhitzen mit Wasser unter Druck gewonnen. Aussichtsreiche Herstellungsverfahren lassen sich auch auf der Acetoxylierung von Ethylen und nachfolgender Hydrolyse oder auf Synthesegas-Reaktionen aufbauen.

Vom Propylengylcol existieren zwei Isomere, das 1,3-Propandiol und das 1,2-Propandiol. 1,3-Propandiol (Trimethylenglykol) ist eine neutrale, farb- und geruchlose, süß schmeckende Flüssigkeit der Dichte 1,0597, die bei -32°C erstarrt und bei 214°C siedet. Die Herstellung von 1,3-Propandiol gelingt aus Acrolein und Wasser unter anschließender katalytischer Hydrierung.

Technisch weitaus bedeutender ist 1,2-Propandiol (Propylenglykol), das eine ölige, farblose, fast geruchlose Flüssigkeit, der Dichte 1,0381 darstellt, die bei -60°C erstarrt und bei 188°C siedet. 1,2-Propandiol wird aus Propylenoxid durch Wasseranlagerung hergestellt.

Propylencarbonat ist eine wasserhelle, leichtbewegliche Flüssigkeit, mit einer Dichte von 1,21 gcm⁻³, der Schmelzpunkt liegt bei -49°C, der Siedepunkt bei 242°C. Auch Propylencarbonat ist großtechnisch durch Reaktion von Propylenoxid und CO₂ bei 200°C und 80 bar zugänglich.

In einer flüssigen Matrix, welche bevorzugt weiterhin eine oder mehrere der vorstehend genannten oder anderen nichtwäßrigen Lösungsmittel enthält, werden Feststoffe der erfindungsgemäßen Partikelgröße suspendiert. Diese Feststoffe können ebenso die flüssige Matrix einen oder mehrere Bestandteile aus der Gruppe der Bleichmittel, Bleichaktivatoren, Polymere, Gerüststoffe, Tenside, Enzyme, Elektrolyte, pH-Stellmittel, Duftstoffe, Parfümträger, Farbstoffe, Hydrotrope, Schauminhibitoren, Antiredepositionsmittel, optischen Aufheller, Vergrauungsinhibitoren, Einlaufverhinderer, Knitterschutzmittel, Farbübertragungs-inhibitoren, antimikrobiellen Wirkstoffe, Germizide, Fungizide, Antioxidantien, Korrosionsinhibitoren, Antistatika, Phobier- und Imprägniermittel, Quell- und Schiebefestmittel, nichtwässrigen Lösungsmittel, Weichspüler, Proteinhydrolysatte, sowie UV-Absorber enthalten. Ein weiterer bevorzugter Gegenstand der vorliegenden Anmeldung ist daher eine portionierte Wasch- oder Reinigungsmittelzusammensetzung, dadurch gekennzeichnet, daß das/die enthaltene(n) dispergierte(n) Feststoffteilchen und/oder die flüssige Matrix mindestens eine Aktivsubstanz aus der Gruppe der aus der Gruppe der Bleichmittel, Bleichaktivatoren, Polymere, Gerüststoffe, Tenside, Enzyme, Elektrolyte, pH-Stellmittel, Duftstoffe, Parfümträger, Farbstoffe, Hydrotrope, Schauminhibitoren, Antiredepositionsmittel, optischen Aufheller, Vergrauungsinhibitoren, Einlaufverhinderer, Knitterschutzmittel, Farbübertragungs-inhibitoren, antimikrobiellen Wirkstoffe, Germizide, Fungizide, Antioxidantien, Korrosionsinhibitoren, Antistatika, Phobier- und Imprägniermittel, Quell- und Schiebefestmittel, nichtwässrigen Lösungsmittel, Weichspüler, Proteinhydrolysatte, sowie UV-Absorber enthält/enthalten.
beispielsweise aus den Gruppen der Gerüststoffe, Cobuilder, Polymere, Bleichmittel, Bleichaktivatoren, Silberschutzmittel, optischen Aufheller, Enzyme usw. stammen. Bevorzugt sind Gerüststoffe der Hauptbestandteil der suspendierten Feststoffphase.

Gerüststoffe werden in den erfindungsgemäßen Zusammensetzungen vor allem zum Binden von Calcium und Magnesium eingesetzt. Übliche Builder, die im Rahmen der Erfindung beispielsweise in Mengen von 22,5 bis 45 Gew.-%, vorzugsweise von 25 bis 40 Gew.-% und insbesondere von 27,5 bis 35 Gew.-%, jeweils bezogen auf das gesamte Mittel, zugegen sein können, sind die niedermolekularen Polycarbonsäuren und ihre Salze, die homopolymeren und copolymeren Polycarbonsäuren und ihre Salze, die Carbonate, Phosphate und Natrium- und Kaliumsilikate. Für die erfindungsgemäßen Reinigungsmittel werden bevorzugt Trinatriumcitrat und/oder Pentanatriumtripolyphosphat und silikatische Builder aus der Klasse der Alkalidisilikate eingesetzt. Generell sind bei den Alkalimetallsalzen die Kaliumsalze den Natriumsalzen vorzuziehen, da sie oftmals eine höherer Wasserlöslichkeit besitzen. Bevorzugte wasserlösliche Gerüststoffe sind beispielsweise Trikaliumcitrat, Kaliumcarbonat und die Kaliwassergläser.

Besonders bevorzugte maschinelle Geschirrspülmittel enthalten als Gerüststoffe Phosphate, vorzugsweise Alkalimetallphosphate unter besonderer Bevorzugung von Pentanatrium- bzw. Pentakaliumtriphosphat (Natrium- bzw. Kaliumtripolyphosphat).

AJkalimetallphosphate ist dabei die summarische Bezeichnung für die Alkalimetall- (insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken las Alkaliträger, verhindern Kalkbeläge und tragen überdies zur Reinigungsleistung bei.

Natriumdihydrogenphosphat, NaH₂PO₄, existiert als Dihydrat (Dichte 1,91 gcm⁻³, Schmelzpunkt 60°) und als Monohydrat (Dichte 2,04 gcm⁻³). Beide Salze sind weiße, in Wasser sehr leicht lösliche Pulver, die beim Erhitzen das Kristallwasser verlieren und bei 200°C in das schwach saure Diphosphat (Dinatriumhydrogendiphosphat, Na₂H₂P₂O₇), bei höherer Temperatur in Natiumtrimetaphosphat (Na₃P₃O₉) und Maddrellsches Salz (siehe unten), übergehen. NaH₂PO₄ reagiert sauer; es entsteht, wenn Phosphorsäure mit Natronlauge auf einen pH-Wert von 4,5 eingestellt und die Maische versprüht wird. Kaliumdihydrogenphosphat (primäres oder einbasiges Kaliumphosphat, Kaliumbiphosphat, KDP), KH₂PO₄, ist ein weißes Salz der Dichte 2,33 gcm⁻³, hat einen Schmelzpunkt 253° [Zersetzung unter Bildung von Kaliumpolyphosphat (KPO₃)ₓ] und ist leicht löslich in Wasser.

Dinatriumhydrogenphosphat (sekundäres Natriumphosphat), Na₂HPO₄, ist ein farbloses, sehr leicht wasserlösliches kristallines Salz. Es existiert wasserfrei und mit 2 Mol. (Dichte 2,066 gcm⁻³, Wasserverlust bei 95°), 7 Mol. (Dichte 1,68 gcm⁻³, Schmelzpunkt 48° unter Verlust von 5 H₂O) und 12 Mol. Wasser (Dichte 1,52 gcm⁻³, Schmelzpunkt 35° unter Verlust von 5 H₂O), wird bei 100° wasserfrei und geht bei stärkerem Erhitzen in das Diphosphat Na₄P₂O₇ über. Dinatriumhydrogenphosphat wird durch Neutralisation von Phosphorsäure mit Sodalösung unter Verwendung von Phenolphthalein als Indikator hergestellt. Dikaliumhydrogenphosphat (sekundäres od. zweibasiges Kaliumphosphat), K₂HPO₄, ist ein amorphes, weißes Salz, das in Wasser leicht löslich ist.

Trinatriumphosphat, tertiäres Natriumphosphat, Na₃PO₄, sind farblose Kristalle, die als Dodecahydrat eine Dichte von 1,62 gcm⁻³ und einen Schmelzpunkt von 73-76°C (Zersetzung), als Decahydrat (entsprechend 19-20% P₂O₅) einen Schmelzpunkt von 100°C und in wasserfreier Form (entsprechend 39-40% P₂O₅) eine Dichte von 2,536 gcm⁻³ aufweisen. Trinatriumphosphat ist in Wasser unter alkalischer Reaktion leicht löslich und wird durch Eindampfen einer Lösung aus genau 1 Mol Dinatriumphosphat und 1 Mol NaOH hergestellt. Trikaliumphosphat (tertiäres oder dreibasiges Kaliumphosphat), K₃PO₄, ist ein weißes, zerfließliches, körniges Pulver der Dichte 2,56 gcm⁻³, hat einen Schmelzpunkt von 1340° und ist in Wasser mit alkalischer Reaktion leicht löslich. Es entsteht z.B. beim Erhitzen von Thomasschlacke mit Kohle und Kaliumsulfat. Trotz des höheren Preises werden in der Reinigungsmittel-Industrie die leichter löslichen, daher hochwirksamen, Kalium- phosphate gegenüber entsprechenden Natrium-Verbindungen vielfach bevorzugt.

Tetranatriumdiphosphat (Natriumpyrophosphat), Na₄P₂O₇, existiert in wasserfreier Form (Dichte 2,534 gcm⁻³, Schmelzpunkt 988°, auch 880° angegeben) und als Decahydrat (Dichte 1,815-1,836 gcm⁻³, Schmelzpunkt 94° unter Wasserverlust). Bei Substanzen sind farblose, in Wasser mit alkalischer Reaktion lösliche Kristalle. Na₄P₂O₇ entsteht beim Erhitzen von Dinatriumphosphat auf >200° oder indem man Phosphorsäure mit Soda im stöchiometrischem Verhältnis umsetzt und die Lösung durch Versprühen entwässert. Das Decahydrat komplexiert Schwermetall-Salze und Härtebildner und verringert daher die Härte des Wassers. Kaliumdiphosphat (Kaliumpyrophosphat), K₄P₂O₇, existiert in Form des Trihydrats und stellt ein farbloses, hygroskopisches Pulver mit der Dichte 2,33 gcm⁻³ dar, das in Wasser löslich ist, wobei der pH-Wert der 1%igen Lösung bei 25° 10,4 beträgt.

Durch Kondensation des NaH₂PO₄ bzw. des KH₂PO₄ entstehen höhermol. Natrium- und Kaliumphosphate, bei denen man cyclische Vertreter, die Natrium- bzw. Kaliummetaphosphate und kettenförmige Typen, die Natrium- bzw. Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Maddrellsches Salz. Alle höheren Natrium- und Kaliumphosphate werden gemeinsam als kondensierte Phosphate bezeichnet.

Das technisch wichtige Pentanatriumtriphosphat, Na₅P₃O₁₀ (Natriumtripolyphosphat), ist ein wasserfrei oder mit 6 H₂O kristallisierendes, nicht hygroskopisches, weißes, wasserlösliches Salz der allgemeinen Formel NaO-[P(O)(ONa)-O]ₙ-Na mit n=3. In 100 g Wasser lösen sich bei Zimmertemperatur etwa 17 g, bei 60° ca. 20 g, bei 100° rund 32 g des kristallwasserfreien Salzes; nach zweistündigem Erhitzen der Lösung auf 100° entstehen durch Hydrolyse etwa 8% Orthophosphat und 15% Diphosphat. Bei der Herstellung von Pentanatriumtriphosphat wird Phosphorsäure mit Sodalösung oder Natronlauge im stöchiometrischen Verhältnis zur Reaktion gebracht und die Lsg. durch Versprühen entwässert. Ähnlich wie Grahamsches Salz und Natriumdiphosphat löst Pentanatriumtriphosphat viele unlösliche Metall-Verbindungen (auch Kalkseifen usw.). Pentakaliumtriphosphat, K₅P₃O₁₀ (Kaliumtripolyphosphat), kommt beispielsweise in Form einer 50 Gew.-%-igen Lösung (> 23% P₂O₅, 25% K₂O) in den Handel. Die Kaliumpolyphosphate finden in der Wasch- und Reinigungsmittel-Industrie breite Verwendung.
Bevorzugte maschinelle Geschirrspülmittel enthalten 20 bis 60 Gew.-% eines oder mehrerer wasserlöslicher Gerüststoffe, vorzugsweise Citrate und/oder Phosphate, bevorzugt Alkalimetallphosphate unter besonderer Bevorzugung von Pentanatrium- bzw. Pentakaliumtriphosphat (Natrium- bzw. Kaliumtripolyphosphat).

In bevorzugten Ausführungsformen der vorliegenden Erfindung liegt der Gehalt der Mittel an wasserlöslichen Gerüststoffen innerhalb engerer Grenzen. Hier sind maschinelle Geschirrspülmittel bevorzugt, die den oder die wasserlöslichen Gerüststoff(e) in Mengen von 22,5 bis 55 Gew.%, vorzugsweise von 25 bis 50 Gew.-% und insbesondere von 27,5 bis 45 Gew.-%, jeweils bezogen auf das gesamte Mittel, enthalten.

Mit besonderem Vorzug können die erfindungsgemäßen Mittel als wasserenthärtende Substanzen kondensierte Phosphate enthalten. Diese Stoffe bilden eine Gruppe von - aufgrund ihrer Herstellung auch Schmelz- oder Glühphosphate genannten - Phosphaten, die sich von sauren Salzen der Orthophosphorsäure (Phosphorsäuren) durch Kondensation ableiten lassen. Die kondensierten Phosphate lassen sich in die Metaphosphate [Mln(PO₃)ₙ] und Polyphosphate (M¹ₙ₊₂PₙO₃ₙ₊₁ bzw. M¹ₙH₂PₙO₃ₙ₊₁) einteilen.

Der Begriff "Metaphosphate" war ursprünglich die allgemeine Bezeichnung für kondensierte Phosphate der Zusammensetzung Mₙ[PₙO₃ₙ] (M = einwertiges Metall), ist heute aber meist eingegrenzt auf Salze mit ringförmigen Cyclo(poly)phosphat-Anionen. Bei n = 3, 4, 5, 6 usw. spricht man von Tri-, Tetra-, Penta-, Hexa-Metaphosphaten. usw. Nach der systematischen Nomenklatur der Isopolyanionen wird z. B. das Anion mit n = 3 als cyclo-Triphosphat bezeichnet.

Metaphosphate erhält man als Begleitstoffe des - fälschlicherweise als Natriumhexametaphosphat bezeichneten - Grahamschen Salzes durch Schmelzen von NaH₂PO₄ auf Temperaturen über 620 °C, wobei intermediär auch sogenanntes Maddrellsches Salz entsteht. Dieses und Kurrolsches Salz sind lineare Polyphosphate, die man heute meist nicht zu den Metaphosphaten zählt, die aber im Rahmen der vorliegenden Erfindung ebenfalls mit Vorzug als wasserenthärtende Substanzen einsetzbar sind.

Das kristalline, wasserunlösliche Maddrellsche Salz, (NaPO₃)ₓ mit x >1000, das bei 200-300 °C aus NaH₂PO₄ erhalten werden kann, geht bei ca. 600 °C in das cyclische Metaphosphat [Na₃(PO₃)₃] über, das bei 620 °C schmilzt. Die abgeschreckte, glasige Schmelze ist je nach Reaktionsbedingungen das wasserlösliche Grahamsche Salz, (NaPO₃)₄₀₋₅₀, oder ein glasiges kondensiertes Phosphat der Zusammensetzung (NaPO₃)₁₅₋₂₀, das als Calgon bekannt ist. Für beide Produkte ist noch immer die irreführende Bezeichnung Hexametaphosphate in Gebrauch. Das sogenannte Kurrolsche Salz, (NaPO₃)ₙ mit n » 5000, entsteht ebenfalls aus der 600 °C heißen Schmelze des Maddrellschen Salzes, wenn diese für kurze Zeit bei ca. 500 °C belassen wird. Es bildet hochpolymere wasserlösliche Fasern.

Als besonders bevorzugte wasserenthärtende Substanzen aus den vorstehend genannten Klassen der kondensierten Phosphate haben sich die "Hexametaphosphate" Budit^{®} H6 bzw. H8 der Fa. Budenheim erwiesen.

Zusammenfassend sind besonders bevorzugt portionierte Wasch- oder Reinigungsmittelzusammensetzung dadurch gekennzeichnet, daß die dispergierten Feststoffteilchen ein oder mehrere wasserlösliche organische und/oder anorganische Salze, vorzugsweise wasserlösliche Gerüststoffe, vorzugsweise Citrate und/oder Phosphate, bevorzugt Alkalimetallphosphate unter besonderer Bevorzugung von Pentanatrium- bzw. Pentakaliumtriphosphat (Natrium- bzw. Kaliumtripolyphosphat) umfassen, wobei Zusammensetzungen bevorzugt sind, die die genannten dispergierten Feststoffe in Mengen von 5 bis 70 Gew.-%, vorzugsweise von 10 bis 65 Gew.-%, besonders bevorzugt von 15 bis 60 Gew.-%, ganz besonders bevorzugt von 20 bis 55 Gew.-% und insbesondere von 25 bis 50 Gew.-%, jeweils bezogen auf die gesamte Zusammensetzung, enthalten.

Neben der flüssigen Matrix und den darin suspendierten Gerüststoffen können weitere Inhaltsstoffe in den erfindungsgemäßen Wasch- oder Reinigungsmittel-zusammensetzungen enthalten sein. Als mengenmäßig nächstwichtigste Stoffklasse sind hier die Tenside zu nennen, wobei nichtionische Tenside eine herausragende Bedeutung besitzen.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄₋Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Außerdem können als weitere nichtionische Tenside auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanol-amide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (III),

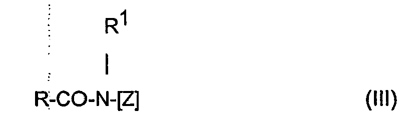

in der RCO für einen aliphatischen Acylrest mit 6 bis 22 Kohlenstoffatomen, R¹ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (IV),

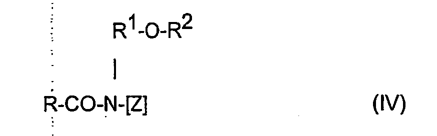

in der R für einen linearen oder verzweigten Alkyl- oder Alkenylrest mit 7 bis 12 Köhlenstoffatomen, R¹ für einen linearen, verzweigten oder cyclischen Alkylrest oder einen Arylrest mit 2 bis 8 Kohlenstoffatomen und R² für einen linearen, verzweigten oder cyclischen Alkylrest oder einen Arylrest oder einen Oxy-Alkylrest mit 1 bis 8 Kohlenstoffatomen steht, wobei C₁₋₄-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können durch Umsetzung mit Fettsäuremethylestern in Gegenwart eines Alkoxids als Katalysator in die gewünschten Polyhydroxyfettsäureamide überführt werden.

Als bevorzugte Tenside werden schwachschäumende nichtionische Tenside eingesetzt. Mit besonderem Vorzug enthalten die erfindungsgemäßen maschinellen Geschirrspülmittel ein nichtionisches Tensid, das einen Schmelzpunkt oberhalb Raumtemperatur aufweist. Demzufolge sind bevorzugte Mittel dadurch gekennzeichnet, daß sie nichtionische(s) Tensid(e) mit einem Schmelzpunkt oberhalb von 20°C, vorzugsweise oberhalb von 25°C, besonders bevorzugt zwischen 25 und 60°C und insbesondere zwischen 26,6 und 43,3°C, enthalten.

Geeignete nichtionische Tenside, die Schmelz- bzw. Erweichungspunkte im genannten Temperaturbereich aufweisen, sind beispielsweise schwachschäumende nichtionische Tenside, die bei Raumtemperatur fest oder hochviskos sein können. Werden bei Raumtemperatur hochviskose Niotenside eingesetzt, so ist bevorzugt, daß diese eine Viskosität oberhalb von 20 Pas, vorzugsweise oberhalb von 35 Pas und insbesondere oberhalb 40 Pas aufweisen. Auch Niotenside, die bei Raumtemperatur wachsartige Konsistenz besitzen, sind bevorzugt.

Bevorzugt als bei Raumtemperatur feste einzusetzende Niotenside stammen aus den Gruppen der alkoxylierten Niotenside, insbesondere der ethoxylierten primären Alkohole und Mischungen dieser Tenside mit strukturell komplizierter aufgebauten Tensiden wie Polyoxypropylen/Polyoxyethylen/Polyoxypropylen (PO/EO/PO)-Tenside. Solche (PO/EO/PO)-Niotenside zeichnen sich darüber hinaus durch gute Schaumkontrolle aus.

In einer bevorzugten Ausführungsform der vorliegenden Erfindung ist das nichtionische Tensid mit einem Schmelzpunkt oberhalb Raumtemperatur ein ethoxyliertes Niotensid, das aus der Reaktion von einem Monohydroxyalkanol oder Alkylphenol mit 6 bis 20 C-Atomen mit vorzugsweise mindestens 12 Mol, besonders bevorzugt mindestens 15 Mol, insbesondere mindestens 20 Mol Ethylenoxid pro Mol Alkohol bzw. Alkylphenol hervorgegangen ist.

Ein besonders bevorzugtes bei Raumtemperatur festes, einzusetzendes Niotensid wird aus einem geradkettigen Fettalkohol mit 16 bis 20 Kohlenstoffatomen (C₁₆₋₂₀-Alkohol), vorzugsweise einem C₁₈-Alkohol und mindestens 12 Mol, vorzugsweise mindestens 15 Mol und insbesondere mindestens 20 Mol Ethylenoxid gewonnen. Hierunter sind die sogenannten "narrow range ethoxylates" (siehe oben) besonders bevorzugt.

Demnach enthalten besonders bevorzugte erfindungsgemäße Mittel ethoxylierte(s) Niotensid(e), das/die aus C₆₋₂₀-Monohydroxyalkanolen oder C₆₋₂₀-Alkylphenolen oder C₁₆₋₂₀-Fettalkoholen und mehr als 12 Mol, vorzugsweise mehr als 15 Mol und insbesondere mehr als 20 Mol Ethylenoxid pro Mol Alkohol gewonnen wurde(n).

Das Niotensid besitzt vorzugsweise zusätzlich Propylenoxideinheiten im Molekül. Vorzugsweise machen solche PO-Einheiten bis zu 25 Gew.-%, besonders bevorzugt bis zu 20 Gew.-% und insbesondere bis zu 15 Gew.-% der gesamten Molmasse des nichtionischen Tensids aus. Besonders bevorzugte nichtionische Tenside sind ethoxylierte Monohydroxyalkanole oder Alkylphenole, die zusätzlich Polyoxyethylen-Polyoxypropylen Blockcopolymereinheiten aufweisen. Der Alkohol- bzw. Alkylphenolteil solcher Niotensidmoleküle macht dabei vorzugsweise mehr als 30 Gew.-%, besonders bevorzugt mehr als 50 Gew.-% und insbesondere mehr als 70 Gew.-% der gesamten Molmasse solcher Niotenside aus. Bevorzugte Wasch- oder Reinigungsmittelzusammensetzungen sind dadurch gekennzeichnet, daß sie ethoxylierte und propoxylierte Niotenside enthalten, bei denen die Propylenoxideinheiten im Molekül bis zu 25 Gew.-%, bevorzugt bis zu 20 Gew.-% und insbesondere bis zu 15 Gew.-% der gesamten Molmasse des nichtionischen Tensids ausmachen, enthalten.

Weitere besonders bevorzugt einzusetzende Niotenside mit Schmelzpunkten oberhalb Raumtemperatur enthalten 40 bis 70% eines Polyoxypropylen/Polyoxyethylen/Poly-oxypropylen-Blockpolymerblends, der 75 Gew.-% eines umgekehrten Block-Copolymers von Polyoxyethylen und Polyoxypropylen mit 17 Mol Ethylenoxid und 44 Mol Propylenoxid und 25 Gew.-% eines Block-Copolymers von Polyoxyethylen und Polyoxypropylen, initiiert mit Trimethylolpropan und enthaltend 24 Mol Ethylenoxid und 99 Mol Propylenoxid pro Mol Trimethylolpropan.

Nichtionische Tenside, die mit besonderem Vorzug eingesetzt werden können, sind beispielsweise unter dem Namen Poly Tergent^{®} SLF-18 von der Firma Olin Chemicals erhältlich.

Eine weiter bevorzugte erfindungsgemäße Wasch- oder Reinigungsmittelzusammensetzung enthält nichtionische Tenside der Formel

R¹O[CH₂CH(CH₃)O]ₓ[CH₂CH₂O]_{y}[CH₂CH(OH)R²],

in der R¹ für einen linearen oder verzweigten aliphatischen Kohlenwasserstoffrest mit 4 bis 18 Köhlenstoffatomen oder Mischungen hieraus steht, R² einen linearen oder verzweigten Kohlenwasserstoffrest mit 2 bis 26 Kohlenstoffatomen oder Mischungen hieraus bezeichnet und x für Werte zwischen 0,5 und 1,5 und y für einen Wert von mindestens 15 steht.

Weitere bevorzugt einsetzbare Niotenside sind die endgruppenverschlossenen Poly(oxyalkylierten) Niotenside der Formel

R¹O[CH₂CH(R³)O]ₓ[CH₂]ₖCH(OH)[CH₂]ⱼOR²

in der R¹ und R² für lineare oder verzweigte, gesättigte oder ungesättigte, aliphatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen. Wenn der Wert x ≥ 2 ist, kann jedes R³ in der obenstehenden Formel unterschiedlich sein. R¹ und R² sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest R³ sind H, -CH₃ oder - CH₂CH₃ besonders bevorzugt. Besonders bevorzugte Werte für x liegen im Bereich von 1 bis 20, insbesondere von 6 bis 15.

Wie vorstehend beschrieben, kann jedes R³ in der obenstehenden Formel unterschiedlich sein, falls x ≥ 2 ist. Hierdurch kann die Alkylenoxideinheit in der eckigen Klammer variiert werden. Steht x beispielsweise für 3, kann der Rest R³ ausgewählt werden, um Ethylenoxid- (R³ = H) oder Propylenoxid- (R³ = CH₃) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO), (PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)-Gruppen einschließt, oder umgekehrt.

Insbesondere bevorzugte endgruppenverschlossenen Poly(oxyalkylierte) Alkohole der obenstehenden Formel weisen Werte von k = 1 und j = 1 auf, so daß sich die vorstehende Formel zu

R¹O[CH₂CH(R³)O]ₓCH₂CH(OH)CH₂OR²

vereinfacht. In der letztgenannten Formel sind R¹, R² und R³ wie oben definiert und x steht für Zahlen von 1 bis 30, vorzugsweise von 1 bis 20 und insbesonders von 6 bis 18. Besonders bevorzugt sind Tenside, bei denen die Reste R¹ und R² 9 bis 14 C-Atome aufweisen, R³ für H steht und x Werte von 6 bis 15 annimmt.

Faßt man die letztgenannten Aussagen zusammen, sind erfindungsgemäße Wasch- oder Reinigungsmittelzusammensetzungen bevorzugt, die endgruppenverschlossenen Poly(oxyalkylierten) Niotenside der Formel

R¹O[CH₂CH(R³)O]ₓ[CH₂]ₖCH(OH)[CH₂]ⱼOR²

enthalten, in der R¹ und R² für lineare oder verzweigte, gesättigte oder ungesättigte, ali-phatische oder aromatische Kohlenwasserstoffreste mit 1 bis 30 Kohlenstoffatomen stehen, R³ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen, wobei Tenside des Typs

R¹O[CH₂CH(R³)O]ₓCH₂CH(OH)CH₂OR²

in denen x für Zahlen von 1 bis 30, vorzugsweise von 1 bis 20 und insbesonders von 6 bis 18 steht, besonders bevorzugt sind.

In Verbindung mit den genannten Tensiden können - vor allem in Textilwaschmitteln - auch anionische, kationische und/oder amphotere Tenside eingesetzt werden, wobei diese wegen ihres Schaumverhaltens in maschinellen Geschirrspülmitteln nur untergeordnete Bedeutung besitzen und zumeist nur in Mengen unterhalb von 10 Gew.-%, meistens sogar unterhalb von 5 Gew.-%, beispielsweise von 0,01 bis 2,5 Gew.-%, jeweils bezogen auf das Mittel, eingesetzt werden. Die erfindungsgemäßen Mittel können somit als Tensidkomponente auch anionische, kationische und/oder amphotere Tenside enthalten.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, d.h. Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), z.B. die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅₋Alkylsulfate sowie C₁₄-C₁₅-Alkylsulfate bevorzugt. Auch 2,3-Alkylsulfate, welche als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbemsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z:B. Kokos-, Palmkern- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Als kationische Aktivsubstanzen können die erfindungsgemäßen Mittel beispielsweise kationische Verbindungen der Formeln V, VI oder VII enthalten: 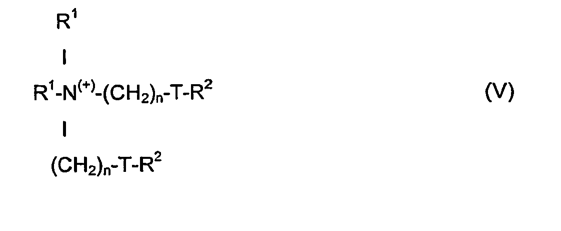 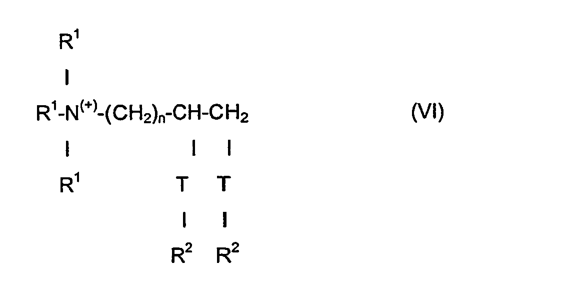 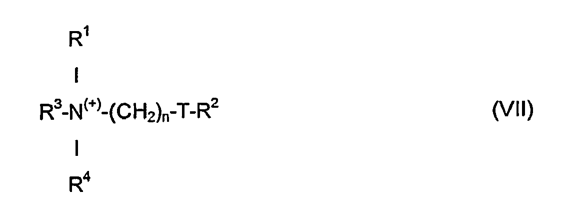 worin jede Gruppe R¹ unabhängig voneinander ausgewählt ist aus C₁₋₆-Alkyl-, -Alkenyl- oder -Hydroxyalkylgruppen; jede Gruppe R² unabhängig voneinander ausgewählt ist aus C₈₋₂₈-Alkyl- oder -Alkenylgruppen; R³ = R¹ oder (CH₂)ₙ-T-R²; R⁴ = R¹ oder R² oder (CH₂)ₙ-T-R²; T = -CH₂-, -O-CO- oder -CO-O- und n eine ganze Zahl von 0 bis 5 ist.

Neben den Tensiden und Gerüststoffen sind insbesondere Bleichmittel, Bleichaktivatoren, Enzyme, Silberschutzmittel, Farb- und Duftstoffe usw. bevorzugte Inhaltsstoffe von maschinellen Geschirrspülmitteln. Daneben können weitere Inhaltsstoffe zugegen sein, wobei erfindungsgemäße maschinelle Geschirrspülmittel bevorzugt sind, die zusätzlich einen oder mehrere Stoffe aus der Gruppe der Acidifizierungsmittel, Chelatkomplexbildner oder der belagsinhibierenden Polymere enthalten.

Als Acidifizierungsmittel bieten sich sowohl anorganische Säuren als auch organische Säuren an, sofern diese mit den übrigen Inhaltsstoffen verträglich sind. Aus Gründen des Verbraucherschutzes und der Handhabungssicherheit sind insbesondere die festen Mono-, Oligo- und Polycarbonsäuren einsetzbar. Aus dieser Gruppe wiederum bevorzugt sind Citronensäure, Weinsäure, Bernsteinsäure, Malonsäure, Adipinsäure, Maleinsäure, Fumarsäure, Oxalsäure sowie Polyacrylsäure. Auch die Anhydride dieser Säuren können als Acidifizierungsmittel eingesetzt werden, wobei insbesondere Maleinsäureanhydrid und Bemsteinsäureanhydrid kommerziell verfügbar sind. Organische Sulfonsäuren wie Amidosulfonsäure sind ebenfalls einsetzbar. Kommerziell erhältlich und als Acidifizierungsmittel im Rahmen der vorliegenden Erfindung ebenfalls bevorzugt einsetzbar ist Sokalan^{®} DCS (Warenzeichen der BASF), ein Gemisch aus Bernsteinsäure (max. 31 Gew.-%), Glutarsäure (max. 50 Gew.-%) und Adipinsäure (max. 33 Gew.-%).

Eine weitere mögliche Gruppe von Inhaltsstoffen stellen die Chelatkomplexbildner dar. Chelatkomplexbildner sind Stoffe, die mit Metallionen cyclische Verbindungen bilden, wobei ein einzelner Ligand mehr als eine Koordinationsstelle an einem Zentralatom besetzt, d. h. mind. "zweizähnig" ist. In diesem Falle werden also normalerweise gestreckte Verbindungen durch Komplexbildung über ein Ion zu Ringen geschlossen. Die Zahl der gebundenen Liganden hängt von der Koordinationszahl des zentralen Ions ab.

Gebräuchliche und im Rahmen der vorliegenden Erfindung bevorzugte Chelatkomplexbilder sind beispielsweise Polyoxycarbonsäuren, Polyamine, Ethylendiamintetraessigsäure (EDTA) und Nitrilotriessigsäure (NTA). Auch komplexbildende Polymere, also Polymere, die entweder in der Hauptkette selbst oder seitenständig zu dieser funktionelle Gruppen tragen, die als Liganden wirken können und mit geeigneten Metall-Atomen in der Regel unter Bildung von ChelatKomplexen reagieren, sind erfindungsgemäß einsetzbar. Die Polymer-gebundenen Liganden der entstehenden Metall-Komplexe können dabei aus nur einem Makromolekül stammen oder aber zu verschiedenen Polymerketten gehören. Letzteres führt zur Vernetzung des Materials, sofern die komplexbildenden Polymere nicht bereits zuvor über kovalente Bindungen vernetzt waren.

Komplexierende Gruppen (Liganden) üblicher komplexbildender Polymere sind Iminodiessigsäure-, Hydroxychinolin-, Thiohamstoff-, Guanidin-, Dithiocarbamat-, Hydroxamsäure-, Amidoxim-, Aminophosphorsäure-, (cycl.) Polyamino-, Mercapto-, 1,3-Dicarbonyl- und Kronenether-Reste mit z. T. sehr spezif. Aktivitäten gegenüber Ionen unterschiedlicher Metalle. Basispolymere vieler auch kommerziell bedeutender komplexbildender Polymere sind Polystyrol, Polyacrylate, Polyacrylnitrile, Polyvinylalkohole, Polyvinylpyridine und Polyethylenimine. Auch natürliche Polymere wie Cellulose, Stärke od. Chitin sind komplexbildende Polymere. Darüber hinaus können diese durch polymeranaloge Umwandlungen mit weiteren Ligand-Funktionalitäten versehen werden.

Besonders bevorzugt sind im Rahmen der vorliegenden Erfindung maschinelle Geschirrspülmittel, die ein oder mehrere Chelatkomplexbildner aus den Gruppen der
(i) Polycarbonsäuren, bei denen die Summe der Carboxyl- und gegebenenfalls Hydroxylgruppen mindestens 5 beträgt,
(ii) stickstoffhaltigen Mono- oder Polycarbonsäuren,
(iii) geminalen Diphosphonsäuren,
(iv) Aminophosphonsäuren,
(v) Phosphonopolycarbonsäuren,
(vi) Cyclodextrine
in Mengen oberhalb von 0,1 Gew.-%, vorzugsweise oberhalb von 0,5 Gew.-%, besonders bevorzugt oberhalb von 1 Gew.-% und insbesondere oberhalb von 2,5 Gew.-%, jeweils bezogen auf das Gewicht des Geschirrspülmittels, enthalten.

Im Rahmen der vorliegenden Erfindung können alle Komplexbildner des Standes der Technik eingesetzt werden. Diese können unterschiedlichen chemischen Gruppen angehören. Vorzugsweise werden einzeln oder im Gemisch miteinander eingesetzt:
a) Polycarbonsäuren, bei denen die Summe der Carboxyl- und gegebenenfalls Hydroxylgruppen mindestens 5 beträgt wie Gluconsäure,
b) stickstoffhaltige Mono- oder Polycarbonsäuren wie Ethylendiamintetraessigsäure (EDTA), N-Hydroxyethylethylendiamintriessigsäure, Diethylentriaminpentaessig-säure, Hydroxyethyliminodiessigsäure, Nitridodiessigsäure-3-propionsäure, Isoserindiessigsäure, N,N-Di-(β-hydroxyethyl)-glycin, N-(1,2-Dicarboxy-2-hydroxyethyl)-gly-cin, N-(1,2-Dicarboxy-2-hydroxyethyl)-asparaginsäure oder Nitrilotriessigsäure (NTA),
c) geminale Diphosphonsäuren wie 1-Hydroxyethan-1,1-diphosphonsäure (HEDP), deren höhere Homologe mit bis zu 8 Kohlenstoffatomen sowie Hydroxy- oder Aminogruppen-haltige Derivate hiervon und 1-Aminoethan-1,1-diphosphonsäure, deren höhere Homologe mit bis zu 8 Kohlenstoffatomen sowie Hydroxy- oder Aminogruppen-haltige Derivate hiervon,
d) Aminophosphonsäuren wie Ethylendiamintetra(methylenphosphonsäure), Diethylentriaminpenta(methylenphosphonsäure) oder Nitrilotri(methylenphosphonsäure),
e) Phosphonopolycarbonsäuren wie 2-Phosphonobutan-1,2,4-tricarbonsäure sowie
f) Cyclodextrine.

Als Polycarbonsäuren a) werden im Rahmen dieser Patentanmeldung Carbonsäuren -auch Monocarbonsäuren- verstanden, bei denen die Summe aus Carboxyl- und den im Molekül enthaltenen Hydroxylgruppen mindestens 5 beträgt. Komplexbildner aus der Gruppe der stickstoffhaltigen Polycarbonsäuren, insbesondere EDTA, sind bevorzugt. Bei den erfindungsgemäß erforderlichen alkalischen pH-Werten der Behandlungslösungen liegen diese Komplexbildner zumindest teilweise als Anionen vor. Es ist unwesentlich, ob sie in Form der Säuren oder in Form von Salzen eingebracht werden. Im Falle des Einsatzes als Salze sind Alkali-, Ammonium- oder Alkylammoniumsalze, insbesondere Natriumsalze, bevorzugt.

Belagsinhibierende Polymere können ebenfalls in den erfindungsgemäßen Mitteln enthalten sein. Diese Stoffe, die chemisch verschieden aufgebaut sein könne, stammen beispielsweise aus den Gruppen der niedermolekularen Polyacrylate mit Molmassen zwischen 1000 und 20.000 Dalton, wobei Polymere mit Molmassen unter 15.000 Dalton bevorzugt sind.

Belagsinhibierende Polymere können auch Cobuildereigenschaften aufweisen. Als organische Cobuilder können in den erfindungsgemäßen maschinellen Geschirrspülmitteln insbesondere Polycarboxylate / Polycarbonsäuren, polymere Polycarboxylate, Asparaginsäure, Polyacetale, Dextrine, weitere organische Cobuilder (siehe unten) sowie Phosphonate eingesetzt werden. Diese Stoffklassen werden nachfolgend beschrieben.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bernsteinsäure, Glutarsäure, Weinsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bernsteinsäure, Glutarsäure, Adipinsäure, Gluconsäure und beliebige Mischungen aus diesen zu nennen.

Als Builder bzw. Belagsinhibitor sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Bei den für polymere Polycarboxylate angegebenen Molmassen handelt es sich im Sinne dieser Schrift um gewichtsmittlere Molmassen M_{w} der jeweiligen Säureform, die grundsätzlich mittels Gelpermeationschromatographie (GPC) bestimmt wurden, wobei ein UV-Detektor eingesetzt wurde. Die Messung erfolgte dabei gegen einen extemen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 2000 bis 20000 g/mol aufweisen. Aufgrund ihrer überlegenen Löslichkeit können aus dieser Gruppe wiederum die kurzkettigen Polyacrylate, die Molmassen von 2000 bis 10000 g/mol, und besonders bevorzugt von 3000 bis 5000 g/mol, aufweisen, bevorzugt sein.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 70000 g/mol, vorzugsweise 20000 bis 50000 g/mol und insbesondere 30000 bis 40000 g/mol.

Die (co-)polymeren Polycarboxylate können entweder als Pulver oder als wäßrige Lösung eingesetzt werden. Der Gehalt der Mittel an (co-)polymeren Polycarboxylaten beträgt vorzugsweise 0,5 bis 20 Gew.-%, insbesondere 3 bis 10 Gew.-%.

Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten. Weitere bevorzugte Copolymere sind solche, die als Monomere vorzugsweise Acrolein und Acrylsäure/Acrylsäuresalze bzw. Acrolein und Vinylacetat aufweisen.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate, die neben Cobuilder-Eigenschaften auch eine bleichstabilisierende Wirkung aufweisen.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000 g/mol.

Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Ein an C₆ des Saccharidrings oxidiertes Produkt kann besonders vorteilhaft sein.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate. Geeignete Einsatzmengen liegen in zeolithhaltigen und/oder silicathaltigen Formulierungen bei 3 bis 15 Gew.-%.

Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten.

Eine weitere Substanzklasse mit Cobuildereigenschaften stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphos-phonat (EDTMP), Diethylentriaminpentamethylenphosphonat (DTPMP) sowie deren höhere Homologe in Frage. Sie werden vorzugsweise in Form der neutral reagierenden Natriumsalze, z. B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Die erfindungsgemäßen portionierten Mittel können darüber hinaus Copolymere aus ungesättigten Carbonsäuren, Sulfonsäuregruppen-haltigen Monomeren und gegebenenfalls weiteren ionischen oder nichtionogenen Monomeren enthalten. Diese Copolymere bewirken, daß die mit solchen Mitteln behandelten Geschirrteile bei nachfolgenden Reinigungsvorgängen deutlich sauberer werden, als Geschirrteile, die mit herkömmlichen Mitteln gespült wurden. Als zusätzlicher positiver Effekt tritt eine Verkürzung der Trocknungszeit der mit dem Reinigungsmittel behandelten Geschirrteile auf, d.h. der Verbraucher kann nach dem Ablauf des Reinigungsprogramms das Geschirr früher aus der Maschine nehmen und wiederbenutzen.

Die Erfindung zeichnet sich durch eine verbesserte "Reinigbarkeit" der behandelten Substrate bei späteren Reinigungsvorgängen und durch ein erhebliche Verkürzung der Trocknungszeit gegenüber vergleichbaren Mitteln ohne den Einsatz Sulfonsäuregruppen-haltiger Polymere aus. Unter *Trocknungszeit* wird im Rahmen der erfindungsgemäßen Lehre im allgemeinen die wortsinngemäße Bedeutung verstanden, also die Zeit, die verstreicht, bis eine in einer Geschirrspülmaschine behandelte Geschirroberfläche getrocknet ist, im besonderen aber die Zeit, die verstreicht, bis 90 % einer mit einem Reinigungs- oder Klarspülmittel in konzentrierter oder verdünnter Form behandelten Oberfläche getrocknet ist.

Vorteilhaft ist weiterhin, daß die genannten Polymere in geeigneten Mengen als Salzersatzstoff wirken. Bei der Verwendung derartiger Mittel muß der Verbraucher den Regeneriersalzvorrat seiner Geschirrspülmaschine nicht auffüllen und erhält trotzdem streifen, flecken- und belagfreies Geschirr.

Im Rahmen der vorliegenden Erfindung sind ungesättigte Carbonsäuren der Formel VIII als Monomer bevorzugt,

R¹(R²)C=C(R³)COOH (VIII),

in der R¹ bis R³ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist.

Unter den ungesättigten Carbonsäuren, die sich durch die Formel I beschreiben lassen, sind insbesondere Acrylsäure (R¹ = R² = R³ = H), Methacrylsäure (R¹ = R² = H; R³ = CH₃) und/oder Maleinsäure (R¹ = COOH; R² = R³ = H) bevorzugt.

Bei den Sulfonsäuregruppen-haltigen Monomeren sind solche der Formel IX bevorzugt,

R⁵(R⁶)C=C(R⁷)-X-SO₃H (IX),

in der R⁵ bis R⁷ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-.

Unter diesen Monomeren bevorzugt sind solche der Formeln IXa, IXb und/oder lXc,

H₂C=CH-X-SO₃H (IXa),

H₂C=C(CH₃)-X-SO₃H (IXb),

HO₃S-X-(R⁶)C=C(R⁷)-X-SO₃H (IXc),

in denen R⁶ und R⁷ unabhängig voneinander ausgewählt sind aus -H, -CH₃, -CH₂CH₃, -CH₂CH₂CH₃, -CH(CH₃)₂ und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-.

Besonders bevorzugte Sulfonsäuregruppen-haltige Monomere sind dabei 1-Acrylamido-1-propansulfonsäure (X = -C(O)NH-CH(CH₂CH₃) in Formel IXa), 2-Acrylamido-2-propansulfonsäure (X=-C(O)NH-C(CH₃)₂ in Formel IXa), 2-Acrylamido-2-methyl-1-propansulfonsäure (X =-C(O)NH-CH(CH₃)CH₂- in Formel IXa), 2-Methacrylamido-2-methyl-1-propansulfonsäure (X = -C(O)NH-CH(CH₃)CH₂- in Formel IXb), 3-Meth-acrylamido-2-hydroxy-propansulfonsäure (X = -C(O)NH-CH₂CH(OH)CH₂- in Formel IXb), Allylsulfonsäure (X = CH₂ in Formel IXa), Methallylsulfonsäure (X = CH₂ in Formel IXb), Allyloxybenzolsulfonsäure (X = -CH₂-O-C₆H₄- in Formel IXa), Methallyloxybenzolsulfonsäure (X = -CH₂-O-C₆H₄- in Formel IXb), 2-Hydroxy-3-(2-propenyloxy)propansulfonsäure, 2-Methyl-2-propenl-sulfonsäure (X = CH₂ in Formel IXb), Styrolsulfonsäure (X = C₆H₄ in Formel IXa), Vinylsulfonsäure (X nicht vorhanden in Formel IXa), 3-Sulfopropylacrylat (X = -C(O)NH-CH₂CH₂CH₂- in Formel IXa), 3-Sulfopropylmethacrylat (X = - C(O)NH-CH₂CH₂CH₂- in Formel IXb), Sulfomethacrylamid (X = -C(O)NH- in Formel IXb), Sulfomethylmethacrylamid (X = -C(O)NH-CH₂- in Formel IXb) sowie wasserlösliche Salze der genannten Säuren.

Als weitere ionische oder nichtionogene Monomere kommen insbesondere ethylenisch ungesättigte Verbindungen in Betracht. Vorzugsweise beträgt der Gehalt der erfindungsgemäß eingesetzten Polymere an Monomeren der Gruppe iii) weniger als 20 Gew.-%, bezogen auf das Polymer. Besonders bevorzugt zu verwendende Polymere bestehen lediglich aus Monomeren der Gruppen i) und ii).

Zusammenfassend sind Copolymere aus

### i) ungesättigten Carbonsäuren der Formel VIII.

R¹(R²)C=C(R³)COOH (VIII),

in der R¹ bis R³ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist,

### ii) Sulfonsäuregruppen-haltigen Monomeren der Formel IX

R⁵(R⁶)C=C(R⁷)-X-SO₃H (IX),

in der R⁵ bis R⁷ unabhängig voneinander für -H -CH₃, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -NH₂, -OH oder - COOH substituierte Alkyl- oder Alkenylreste wie vorstehend definiert oder für -COOH oder - COOR⁴ steht, wobei R⁴ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -(CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-

### iii) gegebenenfalls weiteren ionischen oder nichtionogenen Monomeren

besonders bevorzugt.

Besonders bevorzugte Copolymere bestehen aus
i) einer oder mehrerer ungesättigter Carbonsäuren aus der Gruppe Acrylsäure, Methacrylsäure und/oder Maleinsäure
ii) einem oder mehreren Sulfonsäuregruppen-haltigen Monomeren der Formeln IIa, IIb und/oder IXc:

   H₂C=CH-X-SO₃H (IXa),

   H₂C=C(CH₃)-X-SO₃H (IXb),

   HO₃S-X-(R⁶)C=C(R⁷)-X-SO₃H (IXc),
in der R⁶ und R⁷ unabhängig voneinander ausgewählt sind aus -H, -CH₃, -CH₂CH₃, -CH₂CH₂CH₃, -CH(CH₃)₂ und X für eine optional vorhandene Spacergruppe steht, die aus-gewählt ist aus - (CH₂)ₙ- mit n = 0 bis 4, -COO-(CH₂)ₖ- mit k = 1 bis 6, -C(O)-NH-C(CH₃)₂- und -C(O)-NH-CH(CH₂CH₃)-

### iii) gegebenenfalls weiteren ionischen oder nichtionogenen Monomeren.

Die erfindungsgemäß in den Mitteln enthaltenen Copolymere können die Monomere aus den Gruppen i) und ii) sowie gegebenenfalls iii) in variierenden Mengen enthalten, wobei sämtliche Vertreter aus der Gruppe i) mit sämtlichen Vertretern aus der Gruppe ii) und sämtlichen Vertretern aus der Gruppe iii) kombiniert werden können. Besonders bevorzugte Polymere weisen bestimmte Struktureinheiten auf, die nachfolgend beschrieben werden.

So sind beispielsweise erfindungsgemäße Mittel bevorzugt, die dadurch gekennzeichnet sind, daß sie ein oder mehrere Copolymere enthalten, die Struktureinheiten der Formel X

-[CH₂-CHCOOH]ₘ-[CH₂-CHC(O)-Y-SO₃H]ₚ- (X),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

Diese Polymere werden durch Copolymerisation von Acrylsäure mit einem Sulfonsäuregruppen-haltigen Acrylsäurederivat hergestellt. Copolymerisiert man das Sulfonsäuregruppen-haltige Acrylsäurederivat mit Methacrylsäure, gelangt man zu einem anderen Polymer, dessen Einsatz in den erfindungsgemäßen Mitteln ebenfalls bevorzugt und dadurch gekennzeichnet ist, daß die Mittel ein oder mehrere Copolymere enthalten, die Struktureinheiten der Formel XI

-[CH₂-C(CH₃)COOH]ₘ-[CH₂-CHC(O)-Y-SO₃H]ₚ- (XI),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

Völlig analog lassen sich Acrylsäure und/oder Methacrylsäure auch mit Sulfonsäuregruppenhältigen Methacrylsäurederivaten copolymerisieren, wodurch die Struktureinheiten im Molekül verändert werden. So sind erfindungsgemäße Mittel, die ein oder mehrere Copolymere enthalten, welche Struktureinheiten der Formel XII

-[CH₂-CHCOOH]ₘ-[CH₂-C(CH₃)C(O)-Y-SO₃H]ₚ- (XII),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind, ebenfalls eine bevorzugte Ausführungsform der vorliegenden Erfindung, genau wie auch Mittel bevorzugt sind, die dadurch gekennzeichnet sind, daß sie ein oder mehrere Copolymere enthalten, die Struktureinheiten der Formel XIII

-[CH₂-C(CH₃)COOH]ₘ-[CH₂-C(CH₃)C(O)-Y-SO₃H]ₚ- (XIII),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Köhlenstoffatomen, wobei Spacergruppen, in denen Y für -O-(CH₂)ₙ mit n = 0 bis 4, für -O-(C₆H₄)-, für -NH-C(CH₃)₂- oder -NH-CH(CH₂CH₃)- steht, bevorzugt sind.

Anstelle von Acrylsäure und/oder Methacrylsäure bzw. in Ergänzung hierzu kann auch Maleinsäure als besonders bevorzugtes Monomer aus der Gruppe i) eingesetzt werden. Man gelangt auf diese Weise zu erfindungsgemäß bevorzugten Mitteln, die dadurch gekennzeichnet sind, daß sie ein oder mehrere Copolymere enthalten, die Struktureinheiten der Formel XIV

-[HOOCCH-CHCOOH]ₘ-[CH₂-CHC(O)-Y-SO₃H]ₚ- (XIV),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind und zu Mitteln, welche dadurch gekennzeichnet sind, daß sie ein oder mehrere Copolymere enthalten, die Struktureinheiten der Formel XV

-[HOOCCH-CHCOOH]ₘ-[CH₂-C(CH₃)C(O)O-Y-SO₃H]ₚ- (XV),

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Köhlenstoffatomen, wobei Spacergruppen, in denen Y für -O-(CH₂)ₙ mit n = 0 bis 4, für -O-(C₆H₄)-, für -NH-C(CH₃)₂- oder -NH-CH(CH₂CH₃)- steht, bevorzugt sind.

Zusammenfassend sind erfindungsgemäße maschinelle Geschirrspülmittel bevorzugt, die als Inhaltsstoff b) ein oder mehrere Copolymere enthält, die Struktureinheiten der Formeln III und/oder IV und/oder V und/oder VI und/oder VII und/oder VIII

-[CH₂-CHCOOH]ₘ-[CH₂-CHC(O)-Y-SO₃H]ₚ- (X),

-[CH₂-C(CH₃)COOH]ₘ-[CH₂-CHC(O)-Y-SO₃H]ₚ- (XI),

-[CH₂-CHCOOH]ₘ-[CH₂-C(CH₃)C(O)-Y-SO₃H]ₚ- (XII),

-[CH₂-C(CH₃)COOH]ₘ-[CH₂-C(CH₃)C(O)-Y-SO₃H]ₚ- (XIII),

-[HOOCCH-CHCOOH]ₘ-[CH₂-CHC(O)-Y-SO₃H]ₚ- (XIV),

-[HOOCCH-CHCOOH]ₘ-[CH₂-C(CH₃)C(O)O-Y-SO₃H]ₚ- (XV),

enthalten, in denen m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für -O-(CH₂)ₙ- mit n = 0 bis 4, für -O-(C₆H₄)-, für -NH-C(CH₃)₂- oder -NH-CH(CH₂CH₃)- steht, bevorzugt sind.

In den Polymeren können die Sulfonsäuregruppen ganz oder teilweise in neutralisierter Form vorliegen, d.h. daß das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Entsprechende Mittel, die dadurch gekennzeichnet sind, daß die Sulfonsäuregruppen im Copolymer teil- oder vollrieutralisiert vorliegen, sind erfindungsgemäß bevorzugt.

Die Monomerenverteilung der in den erfindungsgemäßen Mitteln eingesetzten Copolymeren beträgt bei Copolymeren, die nur Monomere aus den Gruppen i) und ii) enthalten, vorzugsweise jeweils 5 bis 95 Gew.-% i) bzw. ii), besonders bevorzugt 50 bis 90 Gew.-% Monomer aus der Gruppe i) und 10 bis 50 Gew.-% Monomer aus der Gruppe ii), jeweils bezogen auf das Polymer.

Bei Terpolymeren sind solche besonders bevorzugt, die 20 bis 85 Gew.-% Monomer aus der Gruppe i), 10 bis 60 Gew.-% Monomer aus der Gruppe ii) sowie 5 bis 30 Gew.-% Monomer aus der Gruppe iii) enthalten.

Die Molmasse der in den erfindungsgemäßen Mitteln eingesetzten Polymere kann variiert werden, um die Eigenschaften der Polymere dem gewünschten Verwendungszweck anzupassen.

Bevorzugte maschinelle Geschirrspülmittel sind dadurch gekennzeichnet, daß die Copolymere Molmassen von 2000 bis 200.000 gmol⁻¹, vorzugsweise von 4000 bis 25.000 gmol⁻¹ und insbesondere von 5000 bis 15.000 gmol⁻¹ aufweisen.

Der Gehalt an einem oder mehreren Copolymeren in den erfindungsgemäßen Mitteln kann je nach Anwendungszweck und gewünschter Produktleistung variieren, wobei bevorzugte erfindungsgemäße maschinelle Geschirrspülmittel dadurch gekennzeichnet sind, daß sie das bzw. die Copolymer(e) in Mengen von 0,25 bis 50 Gew.-%, vorzugsweise von 0,5 bis 35 Gew.-%, besonders bevorzugt von 0,75 bis 20 Gew.-% und insbesondere von 1 bis 15 Gew.-% enthalten.

Zur Viskositätsregelung können die erfindungsgemäßen Mittel weitere Inhaltsstoffe enthalten, mit deren Einsatz beispielsweise das Absetzverhalten oder die Gieß- bzw. Fließfähigkeit gezielt gesteuert werden kann. In nichtwäßrigen Systemen haben sich dabei insbesondere Kombinationen aus Strukturgebern und Verdickern bewährt.

Im Rahmen der vorliegenden Erfindung bevorzugte maschinelle Geschirrspülmittel enthalten weiterhin
a) 0,1 bis 1,0 Gew.-% eines oder mehrerer Strukturgeber aus der Gruppe der Bentonite und/oder mindestens teilweise veretherten Sorbitole sowie
b) 5,0 bis 30 Gew.-% eines oder mehrerer Verdicker aus der Gruppe der Carbonate, Sulfate und amorphen oder kristallinen Disilikate.

Der Strukturgeber a) stammt aus der Gruppe der Bentonite und/oder mindestens teilweise veretherten Sorbitole. Diese Stoffe werden eingesetzt, um die physikalische Stabilität der Mittel zu gewährleisten und die Viskosität einzustellen. Obwohl herkömmliche Verdickungsmittel wie Polyacrylate oder Polyurethane in nichtwäßrigen Medien versagen, gelingt die Viskositätsregelung mit den genannten Substanzen im nichtwäßrigen System.

Bentonite sind verunreinigte Tone, die durch Verwitterung vulkanischer Tuffe entstanden sind. Aufgrund ihres hohen Gehalts an Montmorillonit besitzen Bentonite wertvolle Eigenschaften wie Quellfähigkeit, Ionenaustauschvermögen und Thixotropie. Es ist dabei möglich, die Eigenschaften der Bentonite dem Verwendungszweck entsprechend zu modifizieren. Bentonite sind als Tonbestandteil in tropischen Böden häufig und werden als Natrium-Bentonit z.B. in Wyoming/USA abgebaut. Natrium-Bentonit weist die günstigsten anwendungstechnischen Eigenschaften (Quellfähigkeit) auf, so daß seine Verwendung im Rahmen der vorliegenden Erfindung bevorzugt ist. Natürlich vorkommende Calcium-Bentonite stammen beispielsweise aus Mississippi/USA oder Texas/USA bzw. aus Landshut/D. Die natürlich gewonnenen Ca-Bentonite werden künstlich durch Austausch von Ca gegen Na in die quellfähigeren Na-Bentonite umgewandelt.

Den Hauptbestandteile der Bentonite bilden sogenannte Montmorillonite, die im Rahmen der vorliegenden Erfindung auch in reiner Form eingesetzt werden können. Montmorillonite sind zu den Phyllosilicaten und hier zu den dioktaedrischen Smektiten gehörende Tonminerale, die monoklin-pseudohexagonal kristallisieren. Montmorillonite bilden überwiegend weiße, grauweiße bis gelbliche, völlig amorph erscheinende, leicht zerreibliche, im Wasser quellende, aber nicht plastisch werdende Massen, die durch die allgemeinen Formeln

Al₂[(OH)₂/Si₄O₁₀]·nH₂O bzw.

Al₂O₃·4SiO₂·H₂O·nH₂O bzw.

Al₂[(OH)₂/Si₄O₁₀] (bei 150° getrocknet)

beschrieben werden können.

Bevorzugte maschinelle Geschirrspülmittel sind dadurch gekennzeichnet, daß als Strukturgeber Montmorillonite eingesetzt werden. Montmorillonite besitzen eine Dreischicht-Struktur, die aus zwei Tetraeder-Schichten besteht, die über die Kationen einer Oktaeder-Zwischenschicht elektrostatisch vemetzt sind. Die Schichten sind nicht starr verbunden, sondern können durch reversible Einlagerung von Wasser (in der 2-7fachen Menge) und anderen Substanzen wie z.B. Alkoholen, Glykolen, Pyridin, α-Picolin, Ammonium-Verbindungen, Hydroxy-Aluminosilicat-Ionen usw. aufquellen. Die oben angegebenen. Formeln stellen nur angenäherte Formeln dar, da Montmorillonite ein großes lonenaustausch-Vermögen besitzen. So kann Al gegen Mg, Fe²⁺, Fe³⁺, Zn, Cr, Cu und andere Ionen ausgetauscht werden. Als Folge einer solchen Substitution resultiert eine negative Ladung der Schichten, die durch andere Kationen, bes. Na⁺ und Ca²⁺ ausgeglichen wird.

In Kombination mit den Bentoniten oder als Ersatz für sie, wenn ihre Verwendung nicht gewünscht wird, können mindestens teilweise veretherte Sorbitole als Strukturgeber eingesetzt werden.

Sorbitol ist ein zu den Hexiten gehörender 6-wertiger Alkohol (Zuckeralkohol), der intramolekular relativ leicht ein oder zwei Mol Wasser abspaltet und cyclische Ether bildet (beispielsweise Sorbitan und Sorbid). Die Abspaltung von Wasser ist auch intermolekular möglich, wobei sich nichtcyclische Ether aus Sorbitol und den betreffenden Alkoholen bilden. Auch hier ist die Ausbildung von Mono-Ethern und Bis-Ethern möglich, wobei auch höhere Veretherungsgrade wie 3 und 4 auftreten können. Im Rahmen der vorliegenden Erfindung bevorzugt einzusetzende mindestens teilweise veretherte Sorbitole sind zweifach veretherte Sorbitole, von denen das Dibenzylidensorbitol besonders bevorzugt ist. Hier sind maschinelle Geschirrspülmittel bevorzugt, die als Strukturgeber zweifach ver-etherte Sorbitole, insbesondere Dibenzylidensorbitol, enthalten.

Die erfindungsgemäßen Mittel können die Strukturgeber in Mengen von 0,1 bis 1,0 Gew.-%, bezogen auf das gesamte Mittel und auf die Aktivsubstanz der Strukturgeber enthalten. Bevorzugte Mittel enthalten den Strukturgeber in Mengen von 0,2 bis 0,9 Gew.-%, vorzugsweise in Mengen von 0,25 bis 0,75 Gew.-% und insbesondere in Mengen von 0,3 bis 0,5 Gew.-%, jeweils bezogen auf das gesamte Mittel.

Als Verdicker können die bevorzugten erfindungsgemäßen Mittel anorganische Salze aus der Gruppe der Carbonate, Sulfate und amorphen oder kristallinen Disilikate enthalten. Prinzipiell können hierbei die genannten Salze aller Metalle eingesetzt werden, wobei die Alkalimetallsalze bevorzugt sind. Besonders bevorzugt werden im Rahmen der vorliegenden Erfindung als Verdicker Alkalicarbonat(e), Alkalisulfat(e) und/oder amorphe(s) und/oder kristalline(s) Alkalidisilikat(e), vorzugsweise Natriumcarbonat, Natriumsulfat und/oder amorphes oder kristallines Natriumdisilikat eingesetzt.

Die bevorzugten erfindungsgemäßen Mittel enthalten die Verdicker in Mengen von 5 bis 30 Gew.-%, bezogen auf das gesamte Mittel. Besonders bevorzugte Mittel enthalten den oder die Verdicker in Mengen von 7,5 bis 28 Gew.-%, vorzugsweise in Mengen von 10 bis 26 Gew.-% und insbesondere in Mengen von 12,5 bis 25 Gew.-%, jeweils bezogen auf das gesamte Mittel.

Im Hinblick auf eine erhöhte Absetzstabilität ist es bevorzugt, daß die in den erfindungsgemäßen Mitteln enthaltenen Feststoffe möglichst feinteilig eingesetzt werden. Dies ist insbesondere bei den anorganischen Verdickern und bei den Bleichmitteln von Vorteil. Hier sind erfindungsgemäße maschinelle Geschirrspülmittel bevorzugt, bei denen die mittlere Teilchengröße der Bleichmittel und Verdicker sowie der optional einzusesetzenden Builder weniger als 75 µm, vorzugsweise weniger als 50 µm und insbesondere weniger als 25 µm beträgt.

Die erfindungsgemäßen flüssigen maschinellen Geschirrspülmittel können zur Einstellung einer eventuell gewünschten höheren Viskosität auch andere Viskositätsregler bzw. Verdickungsmittel enthalten. Hierbei sind sämtliche bekannten Verdickungsmittel einsetzbar, also solche auf der Basis natürlicher oder synthetischer Polymere.

Aus der Natur stammende Polymere, die als Verdickungsmittel Verwendung finden, sind beispielsweise Agar-Agar, Carrageen, Tragant, Gummi arabicum, Alginate, Pektine, Polyosen, Guar-Mehl, Johannisbrotbaumkernmehl, Stärke, Dextrine, Gelatine und Casein.

Abgewandelte Naturstoffe stammen vor allem aus der Gruppe der modifizierten Stärken und Cellulosen, beispielhaft seien hier Carboxymethylcellulose und andere Celluloseether, Hydroxyethyl- und -propylcellulose sowie Kernmehlether genannt.

Im Rahmen der vorliegenden Erfindung bevorzugte maschinelle Geschirrspülmittel enthalten als Verdickungsmittel Hydroxyethylcellulose und/oder Hydroxypropylcellulose, vorzugsweise in Mengen von 0,01 bis 4,0 Gew.-%, besonders bevorzugt in Mengen von 0,01 bis 3,0 Gew.-% und insbesondere in Mengen von 0,01 bis 2,0 Gew.-%, jeweils bezogen auf das gesamte Mittel.

Eine große Gruppe von Verdickungsmitteln, die breite Verwendung in den unterschiedlichsten Anwendungsgebieten finden, sind die vollsynthetischen Polymere wie Polyacryl- und Polymethacryl-Verbindungen, Vinylpolymere, Polycarbonsäuren, Polyether, Polyimine, Polyamide und Polyurethane.

Verdickungsmittel aus den genannten Substanzklassen sind kommerziell breit erhältlich und werden beispielsweise unter den Handelsnamen Acusol^{®}-820 (Methacrylsäure(stearylalkohol-20-EO)ester-Acrylsäure-Copolymer, 30%ig in Wasser, Rohm & Haas), Dapral^{®}-GT-282-S (Alkylpolyglykolether, Akzo), Deuterol^{®}-Polymer-11 (Dicarbon-säure-Copolymer, Schöner GmbH), Deuteron^{®}-XG (anionisches Heteropolysaccharid auf Basis von β-D-Glucose, D-Manose, D-Glucuronsäure, Schöner GmbH), Deuteron^{®}-XN (nichtionogenes Polysaccharid, Schöner GmbH), Dicrylan^{®}-Verdicker-O (Ethylenoxid-Addukt, 50%ig in Wasser/lsopropanol, Pfersse Chemie), EMA^{®}-81 und EMA^{®}-91 (Ethylen-Maleinsäureanhydrid-Copolymer, Monsanto), Verdicker-QR-1001 (Polyurethan Emulsion, 19-21%ig in Wasser/Diglykolether, Rohm & Haas), Mirox^{®}-AM (anionische Acrylsäure-Acrylsäureester-Copolymer-Dispersion, 25%ig in Wasser, Stockhausen), SER-AD-FX-1100 (hydrophobes Urethanpolymer, Servo Delden), Shellflo^{®}-S (hochmolekulares Polysaccharid, mit Formaldehyd stabilisiert, Shell) sowie Shellflo^{®}-XA (Xanthan-Biopolymer, mit Formaldehyd stabilisiert, Shell) erhältlich.

Ein bevorzugt einzusetzendes polymeres Verdickungsmittel ist Xanthan, ein mikrobielles anionisches Heteropolysaccharid, das von Xanthomonas campestris und einigen anderen Species unter aeroben Bedingungen produziert wird und eine Molmasse von 2 bis 15 Millionen Dalton aufweist. Xanthan wird aus einer Kette mit β-1,4-gebundener Glucose (Cellulose) mit Seitenketten gebildet. Die Struktur der Untergruppen besteht aus Glucose, Mannose, Glucuronsäure, Acetat und Pyruvat, wobei die Anzahl der Pyruvat-Einheiten die Viskosität des Xanthan bestimmt.

Im Rahmen der vorliegenden Erfindung ebenfalls bevorzugt einzusetzende Verdickungsmittel sind Polyurethane oder modifizierte Polyacrylate, die, bezogen auf das gesamte Mittel, beispielsweise in Mengen von 0,1 bis 5 Gew.-% eingesetzt werden können.

Polyurethane (PUR) werden durch Polyaddition aus zwei- und höherwertigen Alkoholen und Isocyanaten hergestellt und lassen sich durch die allgemeine Formel XVI beschreiben

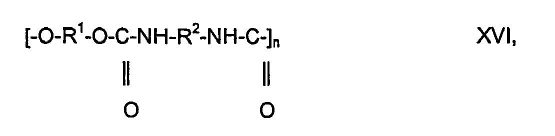

in der R¹ für einen niedermolekularen oder polymeren Diol-Rest, R² für eine aliphatische oder aromatische Gruppe und n für eine natürliche Zahl steht. R¹ ist dabei vorzugsweise eine lineare oder verzweigte C₂₋₁₂-Alk(en)ylgruppe, kann aber auch ein Rest eines höherwertigen Alkohols sein, wodurch quervernetzte Polyurethane gebildet werden, die sich von der oben angegebenen Formel XVI dadurch unterscheiden, daß an den Rest R¹ weitere -O-CO-NH-Gruppen gebunden sind.

Technisch wichtige PUR werden aus Polyester- und/oder Polyetherdiolen und beispielsweise z.B. aus 2,4- bzw. 2,6-Toluoldiisocyanat (TDI, R² = C₆H₃-CH₃), 4,4'-Methylendi(phenylisocyanat) (MDI, R² = C₆H₄-CH₂-C₆H₄) oder Hexamethylendiisocyanat [HMDI, R² = (CH₂)₆] hergestellt.

Handelsübliche Verdickungsmittel auf Polyurethan-Basis sind beispielsweise unter den Namen Acrysol^{®}PM 12 V (Gemisch aus 3-5% modifizierter Stärke und 14-16% PUR-Harz in Wasser, Rohm&Haas), Borchigel^{®} L75-N (nichtionogene PUR-Dispersion, 50%ig in Wasser, Borchers), Coatex^{®} BR-100-P (PUR-Dispersion, 50%ig in Wasser /Butylglycol, Dimed), Nopco^{®} DSX-1514 (PUR-Dispersion, 40%ig in Wasser/Butyltrigylcol, Henkel-Nopco), Verdicker QR 1001 (20%ige PUR-Emulsion in Wasser/Digylcolether, Rohm&Haas) und Rilanit^{®} VPW-3116 (PUR-Dispersion, 43%ig in Wasser, Henkel) erhältlich. Für die Zwecke der vorliegenden Erfindung ist bei der Verwendung wäßriger Dispersionen darauf zu achten, daß der Wassergehalt der erfindungsgemäßen Mittel innerhalb der vorstehend genannten Grenzen bleibt. Falls der Einsatz der wäßrigen Dispersionen aus diesen Gründen nicht möglich ist, können Dispersionen in anderen Lösungsmitteln, oder auch die Feststoffe eingesetzt werden.

Modifizierte Polyacrylate, die im Rahmen der vorliegenden Erfindung eingesetzt werden können, leiten sich beispielsweise von der Acrylsäure bzw. der Methacrylsäure ab und lassen sich durch die allgemeine Formel XVII beschreiben

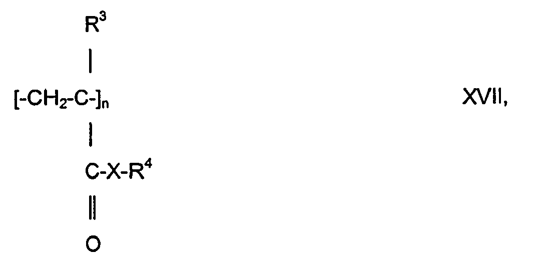

in der R³ für H oder einen verzweigten oder unverzweigten C₁₋₄-Alk(en)ylrest, X für N-R⁵ oder O, R⁴ für einen gegebenenfalls alkoxylierten verzweigten oder unverzweigten, evtl. substituierten C₈₋₂₂-Alk(en)ylrest, R⁵ für H oder R⁴ und n für eine natürliche Zahl steht. Allgemein sind solche modifizierten Polyacrylate Ester oder Amide von Acrylsäure bzw. einer α-substituierten Acrylsäure. Unter diesen Polymeren bevorzugt sind solche, bei denen R³ für H oder eine Methylgruppe steht. Bei den Polyacrylamiden (X = N-R⁵) sind sowohl einfach (R⁵ = H) als auch zweifach (R⁵ = R⁴) N-substituierte Amidstrukturen möglich, wobei die beiden Kohlenwasserstoffreste, die an das N-Atom gebunden sind, unabhängig voneinander aus gegebenenfalls alkoxylierten verzweigten oder unverzweigten C₈₋₂₂-Alk(en)ylresten ausgewählt Werden können. Unter den Polyacrylestern (X = O) sind solche bevorzugt, in denen der Alkohol aus natürlichen oder synthetischen Fetten bzw. Ölen gewonnen wurde und zusätzlich alkoxyliert, vorzugsweise ethoxyliert ist. Bevorzugte Alkoxlierungsgrade liegen zwischen 2 und 30, wobei Alkoxylierungsgrade zwischen 10 und 15 besonders bevorzugt sind.

Da es sich bei den einsetzbaren Polymeren um technische Verbindungen handelt, stellt die Bezeichnung der an X gebundenen Reste einen statistischen Mittelwert dar, der im Einzelfall hinsichtlich Kettenlänge bzw. Alkoxylierungsgrad variieren kann. Die Formel XVII gibt dabei lediglich Formeln für idealisierte Homopolymere an. Einsetzbar sind im Rahmen der vorliegenden Erfindung aber auch Copolymere, in denen der Anteil von Monomereinheiten, die der Formel XVII genügen, mindestens 30 Gew.-% beträgt. So sind beispielsweise auch Copolymere aus modifizierten Polyacrylaten und Acrylsäure bzw. deren Salzen einsetzbar, die noch acide H-Atome oder basische -COO⁻-Gruppen besitzen.

Im Rahmen der vorliegenden Erfindung bevorzugt einzusetzende modifizierte Polyacrylate sind Polyacrylat-Polymethacrylat-Copolymerisate, die der Formel XVIIa genügen

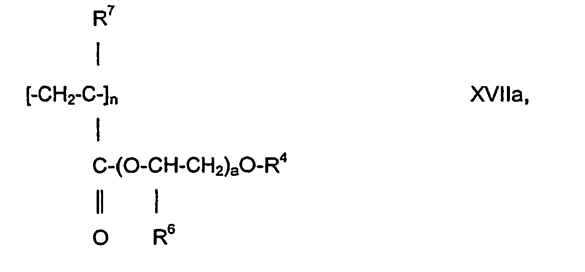

in der R⁴ für einen vorzugsweise unverzweigten, gesättigten oder ungesättigten C₈₋₂₂₋Alk(en)ylrest, R⁶ und R⁷ unabhängig voneinander für H oder CH₃ stehen, der Polymerisationsgrad n eine natürliche Zahl und der Alkoxylierungsgrad a eine natürliche Zahl zwischen 2 und 30, vorzugsweise zwischen 10 und 20 ist. R⁴ ist dabei vorzugsweise ein Fettalkoholrest, der aus natürlichen oder synthetischen Quellen gewonnen wurde, wobei der Fettalkohol wiederum bevorzugt ethoxyliert (R⁶=H)ist.

Produkte der Formel XVIIa sind kommerziell beispielsweise unter dem Namen Acusol^{®} 820 (Rohm&Haas) in Form 30 Gew.-%iger Dispersionen in Wasser erhältlich. Bei dem genannten Handelsprodukt steht R⁴ für einen Stearylrest, R⁶ ist ein Wasserstoffatom, R⁷ ist H oder CH₃ und der Ethoxylierungsgrad a ist 20. Auch bei dieser Dispersion gilt das zum Wassergehalt der Mittel vorstehend Gesagte.

Im Rahmen der vorliegenden Erfindung bevorzugte portionierte Wasch- oder Reinigungsmittelzusammensetzungen enthalten zusätzlich 0,01 bis 5 Gew.-%, vorzugsweise 0,02 bis 4 Gew.-%, besonders bevorzugt 0,05 bis 3 Gew.-% und insbesondere 0,1 bis 1,5 Gew.-%, eines Verdickungsmittels, vorzugsweise eines polymeren Verdickungsmittels, wobei als Verdickungsmittel Hydroxyethylcellulose und/oder Hydroxypropylcellulose und/oder Verdickungsmittel aus der Gruppe der Polysaccharide, vorzugsweise Xanthan, der Polyurethane oder der modifizierten Polyacrylate unter besonderer Bevorzugung von Verdickungsmitteln der Formel XVII 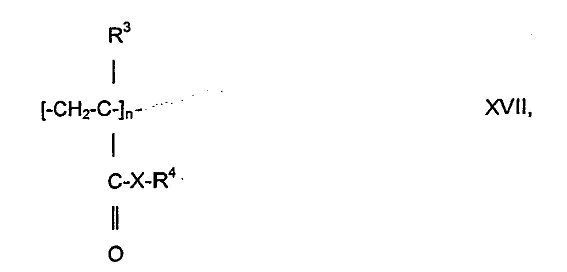 in der R³ für H oder einen verzweigten oder unverzweigten C₁₋₄-Alk(en)ylrest, X für N-R⁵ oder O, R⁴ für einen gegebenenfalls alkoxylierten verzweigten oder unverzweigten, evtl. substituierten C₈₋₂₂₋-Alk(en)ylrest, R⁵ für H oder R⁴ und n für eine natürliche Zahl steht, bevorzugt sind.

Zusätzlich zu den Stoffen aus den genannten Stoffklassen können die erfindungsgemäßen Mittel weitere übliche Inhaltsstoffe von Reinigungsmitteln enthalten, wobei insbesondere Bleichmittel, Bleichaktivatoren, Enzyme, Silberschutzmittel, Farb- und Duftstoffe von Bedeutung sind. Diese Stoffe werden nachstehend beschrieben.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Erfindungsgemäße Reinigungsmittel können auch Bleichmittel aus der Gruppe der organischen Bleichmittel enthalten. Typische organische Bleichmittel sind die Diacylperoxide, wie z.B. Dibenzoylperoxid. Weitere typische organische Bleichmittel sind die Peroxysäuren, wobei als Beispiele besonders die Alkylperoxysäuren und die Arylperoxysäuren genannt werden. Bevorzugte Vertreter sind (a) die Peroxybenzoesäure und ihre ringsubstituierten Derivate, wie Alkylperoxybenzoesäuren, aber auch Peroxy-α-Naphtoesäure und Magnesiummonoperphthalat, (b) die aliphatischen oder substituiert aliphatischen Peroxysäuren, wie Peroxylaurinsäure, Peroxystearinsäure, ε-Phthalimido-peroxycapronsäure [Phthaloiminoperoxyhexansäure (PAP)], o-Carboxybenzamido-peroxycapronsäure, N-nonenylamidoperadipinsäure und N-nonenylamidopersuccinate, und (c) aliphatische und araliphatische Peroxydicarbonsäuren, wie 1,12-Diperoxy-carbonsäure, 1,9-Diperoxyazelainsäure, Diperocysebacinsäure, Diperoxybrassylsäure, die Diperoxyphthalsäuren, 2-Decyldiperoxybutan-1,4-disäure, N,N-Terephthaloyl-di(6-ami-nopercapronsäue) können eingesetzt werden.

Als Bleichmittel in den erfindungsgemäßen Reinigungsmitteln für das maschinelle Geschirrspülen können auch Chlor oder Brom freisetzende Substanzen eingesetzt werden. Unter den geeigneten Chlor oder Brom freisetzenden Materialien kommen beispielsweise heterocyclische N-Brom- und N-Chloramide, beispielsweise Trichlorisocyanursäure, Tribromisocyanursäure, Dibromisocyanursäure und/oder Dichlorisocyanursäure (DICA) und/oder deren Salze mit Kationen wie Kalium und Natri um in Betracht. Hydantoinverbindungen, wie 1,3-Dichlor-5,5-dimethylhydanthoin sind ebenfalls geeignet. Bleichaktivatoren, die die Wirkung der Bleichmittel unterstützen, wurden bereits weiter oben als möglicher Inhaltsstoff der Klarspülerpartikel erwähnt. Bekannte Bleichaktivatoren sind Verbindungen, die eine oder mehrere N- bzw. O-Acylgruppen enthalten, wie Substanzen aus der Klasse der Anhydride, der Ester, der Imide und der acylierten Imidazole oder Oxime. Beispiele sind Tetraacetylethylendiamin TAED, Tetraacetylmethylendiamin TAMD und Tetraacetylhexylendiamin TAHD, aber auch Pentaacetylglucose PAG, 1,5-Diacetyl-2,2-dioxo-hexahydro-1,3,5-triazin DADHT und Isatosäureanhydrid ISA.

Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat, 2,5-Diacetoxy-2,5-dihydrofuran, n-Methyl-Morpholinium-Acetonitril-Methylsulfat (MMA), und Enolester sowie acetyliertes Sorbitol und Mannitol beziehungsweise deren Mischungen (SORMAN), acylierte Zuckerderivate, insbesondere Pentaacetylglukose (PAG), Pentaacetylfructose, Tetraacetylxylose und Octaacetyllactose sowie acetyliertes, gegebenenfalls N-alkyliertes Glucamin und Gluconolacton, und/oder N-acylierte Lactame, beispielsweise N-Benzoylcaprolactam. Hydrophil substituierte Acyl-acetale und Acyllactame werden ebenfalls bevorzugt eingesetzt. Auch Kombinationen konventioneller Bleichaktivatoren können eingesetzt werden.

Weitere im Rahmen der vorliegenden Anmeldung bevorzugt eingesetzte Bleichaktivatoren sind Verbindungen aus der Gruppe der kationischen Nitrile, insebsondere kationische Nitril der Formel 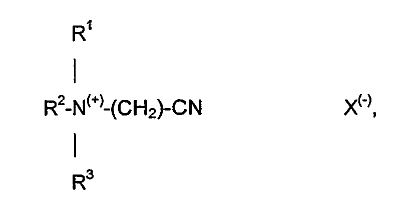 in der R¹ für -H, -CH₃, einen C₂₋₂₄-Alkyl- oder -Alkenylrest, einen substituierten C₂₋₂₄-Alkyl- oder -Alkenylrest mit mindestens einem Substituenten aus der Gruppe -Cl, -Br, -OH, -NH₂, -CN, einen Alkyl- oder Alkenylarylrest mit einer C₁₋₂₄-Alkylgruppe, oder für einen substituierten Alkyl- oder Alkenylarylrest mit einer C₁₋₂₄-Alkylgruppe und mindestens einem weiteren Substituenten am aromatischen Ring steht, R² und R³ unabhängig voneinander ausgewählt sind aus -CH₂-CN, -CH₃, -CH₂-CH₃, -CH₂-CH₂-CH₃, -CH(CH₃)-CH₃, -CH₂-OH, -CH₂-CH₂-OH, -CH(OH)-CH₃, -CH₂₋CH₂-CH₂-OH, -CH₂-CH(OH)-CH₃, -CH(OH)-CH₂-CH₃, -(CH₂CH₂-O)ₙH mit n = 1, 2, 3, 4, 5 oder 6 und X ein Anion ist.

In besonders bevorzugten erfindungsgemäßen Mitteln ist ein kationisches Nitril der Formel 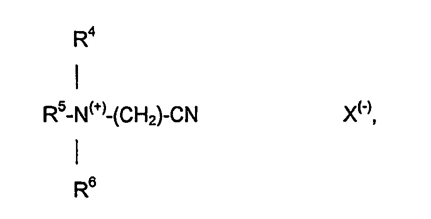 enthalten, in der R⁴, R⁵ und R⁶ unabhängig voneinander ausgewählt sind aus -CH₃, -CH₂-CH₃, -CH₂-CH₂-CH₃, -CH(CH₃)-CH₃, wobei R⁴ zusätzlich auch -H sein kann und X ein Anion ist, wobei vorzugsweise R⁵ = R⁶ = -CH₃ und insbesondere R⁴ = R⁵ = R⁶ = -CH₃ gilt und Verbindungen der Formeln (CH₃)₃N⁽⁺⁾CH₂-CN X⁻, (CH₃CH₂)₃N⁽⁺⁾CH₂-CN X⁻ (CH₃CH₂CH₂)₃N⁽⁺⁾CH₂-CN X⁻, (CH₃CH(CH₃))₃N⁽⁺⁾CH₂-CN X⁻, oder (HO-CH₂-CH₂)₃N⁽⁺⁾CH₂-CN X⁻ besonders bevorzugt sind, wobei aus der Gruppe dieser Substanzen wiederum das kationische Nitril der Formel (CH₃)₃N⁽⁺⁾CH₂-CN X⁻, in welcher X für ein Anion steht, das aus der Gruppe Chlorid, Bromid, lodid, Hydrogensulfat, Methosulfat, p-Toluolsulfonat (Tosylat) oder Xylolsulfonat ausgewählt ist, besonders bevorzugt wird.

Zusätzlich zu den konventionellen Bleichaktivatoren oder an deren Stelle können auch sogenannte Bleichkatalysatoren in die Klarspülerpartikel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit N-haltigen Tripod-Liganden sowie Co-, Fe-, Cu- und Ru-Amminkomplexe sind als Bleichkatalysatoren verwendbar.
Bevorzugt werden Bleichaktivatoren aus der Gruppe der mehrfach acylierte Alkylendiamine, insbesondere Tetraacetylethylendiamin (TAED), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), n-Methyl-Morpholinium-Acetonitril-Methylsulfat (MMA), vorzugsweise in Mengen bis 10 Gew.-%, insbesondere 0,1 Gew.-% bis 8 Gew.-%, besonders 2 bis 8 Gew.-% und besonders bevorzugt 2 bis 6 Gew.-% bezogen auf das gesamte Mittel, eingesetzt.

Bleichverstärkende Übergangsmetallkomplexe, insbesondere mit den Zentralatomen Mn, Fe, Co, Cu, Mo, V, Ti und/oder Ru, bevorzugt ausgewählt aus der Gruppe der Mangan und/oder Cobaltsalze und/oder -komplexe, besonders bevorzugt der Cobalt(ammin)-Komplexe, der Cöbalt(acetat)-Komplexe, der Cobalt(Carbonyl)-Komplexe, der Chloride des Cobalts oder Mangans, des Mangansulfats werden in üblichen Mengen, vorzugsweise in einer Menge bis zu 5 Gew.-%, insbesondere von 0,0025 Gew.-% bis 1 Gew.-% und besonders bevorzugt von 0;01 Gew.-% bis 0,25 Gew.-%, jeweils bezogen auf das gesamte Mittel, eingesetzt. Aber in spezielle Fällen kann auch mehr Bleichaktivator eingesetzt werden.

Erfindungsgemäße Mittel können zur Steigerung der Wasch-, beziehungsweise Reinigungsleistung Enzyme enthalten, wobei prinzipiell alle im Stand der Technik für diese Zwecke etablierten Enzyme einsetzbar sind. Hierzu gehören insbesondere Proteasen, Amylasen, Lipasen, Hemicellulasen, Cellulasen oder Oxidoreduktasen, sowie vorzugsweise deren Gemische. Diese Enzyme sind im Prinzip natürlichen Ursprungs; ausgehend von den natürlichen Molekülen stehen für den Einsatz in Wasch- und Reinigungsmitteln verbesserte Varianten zur Verfügung, die entsprechend bevorzugt eingesetzt werden. Erfindungsgemäße Mittel enthalten Enzyme vorzugsweise in Gesamtmengen von 1 x 10⁻⁶ bis 5 Gewichts-Prozent bezogen auf aktives Protein. Die Proteinkonzentration kann mit Hilfe bekannter Methoden, zum Beispiel dem BCA-Verfahren (Bicinchoninsäure; 2,2'-Bichinolyl-4,4'-dicarbonsäure) oder dem Biuret-Verfahren bestimmt werden.

Unter den Proteasen sind solche vom Subtilisin-Typ bevorzugt. Beispiele hierfür sind die Subtilisine BPN' und Carlsberg, die Protease PB92, die Subtilisine 147 und 309, die Alkalische Protease aus *Bacillus lentus,* Subtilisin DY und die den Subtilasen, nicht mehr jedoch den Subtilisinen im engeren Sinne zuzuordnenden Enzyme Thermitase, Proteinase K und die Proteasen TW3 und TW7. Subtilisin Carlsberg ist in weiterentwickelter Form unter dem Handelsnamen Alcalase^{®} von der Firma Novozymes A/S, Bagsværd, Dänemark, erhältlich. Die Subtilisine 147 und 309 werden unter den Handelsnamen Esperase^{®}, beziehungsweise Savinase^{®} von der Firma Novozymes vertrieben. Von der Protease aus *Bacillus lentus* DSM 5483 leiten sich die unter der Bezeichnung BLAP^{®} geführten Varianten ab.

Weitere brauchbare Proteasen sind beispielsweise die unter den Handelsnamen Durazym^{®}, Relase^{®}, Everlase^{®}, Nafizym, Natalase^{®}, Kannase^{®} und Ovozymes^{®} von der Firma Novozymes, die unter den Handelsnamen, Purafect^{®}, Purafect^{®} OxP und Properase^{®} von der Firma Genencor, das unter dem Handelsnamen Protosol^{®} von der Firma Advanced Biochemicals Ltd., Thane, Indien, das unter dem Handelsnamen Wuxi^{®} von der Firma Wuxi Snyder Bioproducts Ltd., China, die unter den Handelsnamen Proleather^{®} und Protease P^{®} von der Firma Amano Pharmaceuticals Ltd., Nagoya, Japan, und das unter der Bezeichnung Proteinase K-16 von der Firma Kao Corp., Tokyo, Japan, erhältlichen Enzyme.

Beispiele für erfindungsgemäß einsetzbare Amylasen sind die α-Amylasen aus *Bacillus licheniformis,* aus *B. amyloliquefaciens* oder aus *B. stearothermophilus* sowie deren für den Einsatz in Wasch- und Reinigungsmitteln verbesserte Weiterentwicklungen. Das Enzym aus *B. licheniformis* ist von der Firma Novozymes unter dem Namen Termamyl^{®} und von der Firma Genencor unter dem Namen Purastar^{®}ST erhältlich. Weiterentwicklungsprodukte dieser α-Amylase sind von der Firma Novozymes unter den Handelsnamen Duramyl^{®} und Termamyl^{®}ultra, von der Firma Genencor unter dem Namen Purastar^{®}OxAm und von der Firma Daiwa Seiko Inc., Tokyo, Japan, als Keistase^{®} erhältlich. Die α-Amylase von *B. amyloliquefaciens* wird von der Firma Novozymes unter dem Namen BAN^{®} vertrieben, und abgeleitete Varianten von der α-Alnylase aus *B. stearothermophilus* unter den Namen BSG^{®} und Novamyl^{®}, ebenfalls von der Firma Novozymes.

Desweiteren sind für diesen Zweck die α-Amylase aus *Bacillus sp.* A 7-7 (DSM 12368) und die Cyclodextrin-Glucanotransferase (CGTase) aus *B. agaradherens* (DSM 9948) hervorzuheben; ebenso sind Fusionsprodukte der genannten Moleküle einsetzbar.

Darüber hinaus sind die unter den Handelsnamen Fungamyl^{®} von der Firma Novozymes erhältlichen Weiterentwicklungen der α-Amylase aus *Aspergillus niger* und *A. oryzae* geeignet. Ein weiteres Handelsprodukt ist beispielsweise die Amylase-LT^{®}.

Erfindungsgemäße Mittel können Lipasen oder Cutinasen, insbesondere wegen ihrer Triglyceridspaltenden Aktivitäten enthalten, aber auch, um aus geeigneten Vorstufen *in situ* Persäuren zu erzeugen. Hierzu gehören beispielsweise die ursprünglich aus *Humicola lanuginosa* (*Thermomyces lanuginosus*) erhältlichen, beziehungsweise weiterentwickelten Lipasen, insbesondere solche mit dem Aminosäureaustausch D96L. Sie werden beispielsweise von der Firma Novozymes unter den Handelsnamen Lipolase^{®}, Lipolase^{®}Ultra, LipoPrime^{®}, Lipozyme^{®} und Lipex^{®} vertrieben. Desweiteren sind beispielsweise die Cutinasen einsetzbar, die ursprünglich aus *Fusarium solani pisi* und *Humicola insolens* isoliert worden sind. Ebenso brauchbare Lipasen sind von der Firma Amano unter den Bezeichnungen Lipase CE^{®}, Lipase P^{®}, Lipase B^{®}, beziehungsweise Lipase CES^{®}, Lipase AKG^{®}, Bacillis sp. Lipase^{®}, Lipase AP^{®}, Lipase M-AP^{®} und Lipase AML^{®} erhältlich. Von der Firma Genencor sind beispielsweise die Lipasen, beziehungsweise Cutinasen einsetzbar, deren Ausgangsenzyme ursprünglich aus *Pseudomonas mendocina* und *Fusarium solanii* isoliert worden sind. Als weitere wichtige Handelsprodukte sind die ursprünglich von der Firma Gist-Brocades vertriebenen Präparationen M1 Lipase^{®} und Lipomax^{®} und die von der Firma Meito Sangyo KK, Japan, unter den Namen Lipase MY-30^{®}, Lipase OF^{®} und Lipase PL^{®} vertriebenen Enzyme zu erwähnen, ferner das Produkt Lumafast^{®} von der Firma Genencor.

Erfindungsgemäße Mittel können, insbesondere wenn sie für die Behandlung von Textilien gedacht sind, Cellulasen enthalten, je nach Zweck als reine Enzyme, als Enzympräparationen oder in Form von Mischungen, in denen sich die einzelnen Komponenten vorteilhafterweise hinsichtlich ihrer verschiedenen Leistungsaspekte ergänzen. Zu diesen Leistungsaspekten zählen insbesondere Beiträge zur Primärwaschleistung, zur Sekundärwaschleistung des Mittels (Antiredepositionswirkung oder Vergrauungsinhibition) und Avivage (Gewebewirkung), bis hin zum Ausüben eines "stone washed"-Effekts.

Eine brauchbare pilzliche, Endoglucanase(EG)-reiche Cellulase-Präparation, beziehungsweise deren Weiterentwicklungen werden von der Firma Novozymes unter dem Handelsnamen Celluzyme^{®} angeboten. Die ebenfalls von der Firma Novozymes erhältlichen Produkte Endolase^{®} und Carezyme^{®} basieren auf der 50 kD-EG, beziehungsweise der 43 kD-EG aus *H. insolens* DSM 1800. Weitere mögliche Handelsprodukte dieser Firma sind Cellusoft^{®} und Renozyme^{®}. Ebenso ist die 20 kD-EG Cellulase aus *Melanocarpus,* die von der Firma AB Enzymes, Finnland, unter den Handelsnamen Ecostone^{®} und Biotouch^{®} erhältlich ist, einsetzbar. Weitere Handelprodukte der Firma AB Enzymes sind Econase^{®} und Ecopulp^{®}. Eine weitere geeignete Cellulase aus *Bacillus sp.* CBS 670.93 ist von der Firma Genencor unter dem Handelsnamen Puradax^{®} erhältlich. Weitere Handelsprodukte der Firma Genencor sind "Genencor detergent cellulase L" und IndiAge^{®}Neutra.

Erfindungsgemäße Mittel können weitere Enzyme enthalten, die unter dem Begriff Hemicellulasen zusammengefaßt werden. Hierzu gehören beispielsweise Mannanasen, Xanthanlyasen, Pektinlyasen (=Pektinasen), Pektinesterasen, Pektatlyasen, Xyloglucanasen (=Xylanasen), Pullulanasen und β-Glucanasen. Geeignete Mannanasen sind beispielsweise unter den Namen Gamanase^{®} und Pektinex AR^{®} von der Firma Novozymes, unter dem Namen Rohapec^{®} B1L von der Firma AB Enzymes und unter dem Namen Pyrolase^{®} von der Firma Diversa Corp., San Djego, CA, USA erhältlich. Die aus *B. subtilis* gewonnene β-Glucanase ist unter dem Namen Cereflo^{®} von der Firma Novozymes erhältlich.

Zur Erhöhung der bleichenden Wirkung können erfindungsgemäße Wasch- und Reinigungsmittel Oxidoreduktasen, beispielsweise Oxidasen, Oxygenasen, Katalasen, Peroxidasen, wie Halo-, Chloro-, Bromo-, Lignin-, Glucose- oder Mangan-peroxidasen, Dioxygenasen oder Laccasen (Phenoloxidasen, Polyphenoloxidasen) enthalten. Als geeignete Handelsprodukte sind Denilite^{®} 1 und 2 der Firma Novozymes zu nennen. Vorteilhafterweise werden zusätzlich vorzugsweise organische, besonders bevorzugt aromatische, mit den Enzymen wechselwirkende Verbindungen zugegeben, um die Aktivität der betreffenden Oxidoreduktasen zu verstärken (Enhancer) oder um bei stark unterschiedlichen Redoxpotentialen zwischen den oxidierenden Enzymen und den Anschmutzungen den Elektronenfluß zu gewährleisten (Mediatoren).

Die in erfindungsgemäßen Mitteln eingesetzten Enzyme stammen entweder ursprünglich aus Mikroorganismen, etwa der Gattungen *Bacillus, Streptomyces, Humicola,* oder *Pseudomonas,* und/oder werden nach an sich bekannten biotechnologischen Verfahren durch geeignete Mikroorganismen produziert, etwa durch transgene Expressionswirte der Gattungen *Bacillus* oder filamentöse Fungi.

Die Aufreinigung der betreffenden Enzyme erfolgt günstigerweise über an sich etablierte Verfahren, beispielsweise über Ausfällung, Sedimentation, Konzentrierung, Filtration der flüssigen Phasen, Mikrofiltration, Ultrafiltration, Einwirken von Chemikalien, Desodorierung oder geeignete Kombinationen dieser Schritte.

Erfindungsgemäßen Mitteln können die Enzyme in jeder nach dem Stand der Technik etablierten Form zugesetzt werden. Hierzu gehören beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren versetzt.

Alternativ können die Enzyme sowohl für die feste als auch für die flüssige Darreichungsform verkapselt werden, beispielsweise durch Sprühtrocknung oder Extrusion der Enzymlösung zusammen mit einem, vorzugsweise natürlichen Polymer oder in Form von Kapseln, beispielsweise solchen, bei denen die Enzyme wie in einem erstarrten Gel eingeschlossen sind oder in solchen vom Kern-Schale-Typ, bei dem ein enzymhaltiger Kern mit einer Wasser-, Luft- und/oder Chemikalien-undurchlässigen Schutzschicht überzogen ist. In aufgelagerten Schichten können zusätzlich weitere Wirkstoffe, beispielsweise Stabilisatoren, Emulgatoren, Pigmente, Bleich- oder Farbstoffe aufgebracht werden. Derartige Kapseln werden nach an sich bekannten Methoden, beispielsweise durch Schüttel- oder Rollgranulation oder in Fluid-bed-Prozessen aufgebracht. Vorteilhafterweise sind derartige Granulate, beispielsweise durch Aufbringen polymerer Filmbildner, staubarm und aufgrund der Beschichtung lagerstabil.

Weiterhin ist es möglich, zwei oder mehrere Enzyme zusammen zu konfektionieren, so daß ein einzelnes Granulat mehrere Enzymaktivitäten aufweist.

Ein in einem erfindungsgemäßen Mittel enthaltenes Protein und/oder Enzym kann besonders während der Lagerung gegen Schädigungen wie beispielsweise Inaktivierung, Denaturierung oder Zerfall etwa durch physikalische Einflüsse, Oxidation oder proteolytische Spaltung geschützt werden. Bei mikrobieller Gewinnung der Proteine und/oder Enzyme ist eine Inhibierung der Proteolyse besonders bevorzugt, insbesondere wenn auch die Mittel Proteasen enthalten. Erfindungsgemäße Mittel können zu diesem Zweck Stabilisatoren enthalten; die Bereitstellung derartiger Mittel stellt eine bevorzugte Ausführungsform der vorliegenden Erfindung dar.

Eine Gruppe von Stabilisatoren sind reversible Proteaseinhibitoren. Häufig werden Benzamidin-Hydrochlorid, Borax, Borsäuren, Boronsäuren oder deren Salze oder Ester verwendet, darunter vor allem Derivate mit aromatischen Gruppen, etwa ortho-,meta- oder para-substituierte Phenylboronsäuren, beziehungsweise deren Salze oder Ester. Weiterhin sind Peptidaldehyde, das heißt Oligopeptide mit reduziertem C-Terminus geeignet. Als peptidische Proteaseinhibitoren sind unter anderem Ovomucoid und Leupeptin zu erwähnen; eine zusätzliche Option ist die Bildung von Fusionsproteinen aus Proteasen und Peptid-Inhibitoren.

Weitere Enzymstabilisatoren sind Aminoalkohole wie Mono-, Di-, Triethanol- und -Propanolamin und deren Mischungen, aliphatische Carbonsäuren bis zu C₁₂, wie Bernsteinsäure, andere Dicarbonsäuren oder Salze der genannten Säuren. Auch endgruppenverschlossene Fettsäureamidalkoxylate sind als Stabilisatoren einsetzbar.

Niedere aliphatische Alkohole, vor allem aber Polyole, wie beispielsweise Glycerin, Ethylenglykol, Propylenglykol oder Sorbit sind weitere häufig eingesetzte Enzymstabilisatoren. Weiterhin schützt auch Di-Glycerinphosphat gegen Denaturierung durch physikalische Einflüsse. Ebenso werden Calciumsalze verwendet, wie beispielsweise Calciumacetat oder Calcium-Formiat sowie Magnesiumsalze.

Polyamid-Oligomere oder polymere Verbindungen wie Lignin, wasserlösliche Vinyl-Copolymere oder, wie Cellulose-Ether, Acryl-Polymere und/oder Polyamide stabilisieren die Enzym-Präparation unter anderem gegenüber physikalischen Einflüssen oder pH-Wert-Schwankungen. Polyamin-N-Oxid-enthaltende Polymere wirken gleichzeitig als Enzymstabilisatoren und als Farbübertragungsinhibitoren. Andere polymere Stabilisatoren sind die linearen C₈-C₁₈ Polyoxyalkylene. Alkylpolyglycoside können gemäß den ebenfalls die enzymatischen Komponenten des erfindungsgemäßen Mittels stabilisieren und sogar in ihrer Leistung steigern. Vemetzte N-haltige Verbindungen erfüllen eine Doppelfunktion als Soil-release-Agentien und als Enzym-Stabilisatoren.

Reduktionsmittel und Antioxidantien wie Natrium-Sulfit oder reduzierende Zucker erhöhen die Stabilität der Enzyme gegenüber oxidativem Zerfall.

Bevorzugt werden Kombinatonen von Stabilisatoren verwendet, beispielsweise aus Polyolen, Borsäure und/oder Borax, die Kombination von Borsäure oder Borat, reduzierenden Salzen und Bernsteinsäure oder anderen Dicarbonsäuren oder die Kombination von Borsäure oder Borat mit Polyolen oder Polyaminoverbindungen und mit reduzierenden Salzen. Die Wirkung von Peptid-Aldehyd-Stabilisatoren kann durch die Kombination mit Borsäure und/oder Borsäurederivaten und Polyolen gesteigert und gemäß durch die zusätzliche Verwendung von zweiwertigen Kationen, wie zum Beispiel Calcium-lonen weiter verstärkt werden.

Besonders bevorzugt ist im Rahmen der vorliegenden Erfindung der Einsatz flüssiger Enzymformulierungen. Hier sind erfindungsgemäße Mittel bevorzugt, die zusätzlich Enzyme und/oder Enzymzubereitungen, vorzugsweise feste und/oder flüssige Protease-Zubereitungen und/oder Amylase-Zubereitungen, in Mengen von 1 bis 5 Gew.-%, vorzugsweise von 1,5 bis 4,5 und insbesondere von 2 bis 4 Gew.-%, jeweils bezogen auf das gesamte Mittel, enthalten.

Farb- und Duftstoffe können den erfindungsgemäßen Mitteln zugesetzt werden, um den ästhetischen Eindruck der entstehenden Produkte zu verbessern und dem Verbraucher neben der Leistung ein visuell und sensorisch "typisches und unverwechselbares" Produkt zur Verfügung zu stellen. Als Parfümöle bzw. Duftstoffe können einzelne Riechstoffverbindungen, z.B. die synthetischen Produkte vom Typ der Ester, Ether, Aldehyde, Ketone, Alkohole und Kohlenwasserstoffe verwendet werden. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8-18 C-Atomen, Citral, Citronellal, Citronellyloxyacetaldehyd, Cyclamenaldehyd, Hydroxycitronellal, Lilial und Bourgeonal, zu den Ketonen z.B. die Jonone, α-Isomethylionon und Methylcedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z.B. Pine-, Citrus-, Jasmin-, Patchouly-, Rosen- oder Ylang-Ylang-Öl. Ebenfalls geeignet sind Muskateller, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.

Die Duftstoffe können direkt in die erfindungsgemäßen Wasch- oder Reinigungsmitteln eingearbeitet werden, es kann aber auch vorteilhaft sein, die Duftstoffe auf Träger aufzubringen, die die Haftung des Parfüms auf der Wäsche verstärken und durch eine langsamere Duftfreisetzung für langanhaltenden Duft der Textilien sorgen. Als solche Trägermaterialien haben sich beispielsweise Cyclodextrine bewährt, wobei die Cyclodextrin-Parfüm-Komplexe zusätzlich noch mit weiteren Hilfsstoffen beschichtet werden können.

Um den ästhetischen Eindruck der erfindungsgemäßen Mittel zu verbessern, kann es (oder Teile davon) mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber den mit den Mitteln zu behandelnden Substraten wie Textilien, Glas, Keramik oder Kunststoffgeschirr, um diese nicht anzufärben.

Die erfindungsgemäßen Reinigungsmittel können zum Schutze des Spülgutes oder der Maschine Korrosionsinhibitoren enthalten, wobei besonders Silberschutzmittel im Bereich des maschinellen Geschirrspülens eine besondere Bedeutung haben. Einsetzbar sind die bekannten Substanzen des Standes der Technik. Allgemein können vor allem Silberschutzmittel ausgewählt aus der Gruppe der Triazole, der Benzotriazole, der Bisbenzotriazole, der Aminotriazole, der Alkylaminotriazole und der Übergangsmetallsalze oder -komplexe eingesetzt werden. Besonders bevorzugt zu verwenden sind Benzotriazol und/oder Alkylaminotriazol. Man findet in Reinigerformulierungen darüber hinaus häufig aktivchlorhaltige Mittel, die das Korrodieren der Silberoberfläche deutlich vermindern können. In chlorfreien Reinigern werden besonders Sauerstoff- und stickstoffhaltige organische redoxaktive Verbindungen, wie zwei- und dreiwertige Phenole, z. B. Hydrochinon, Brenzkatechin, Hydroxyhydrochinon, Gallussäure, Phloroglucin, Pyrogallol bzw. Derivate dieser Verbindungsklassen. Auch salz- und komplexartige anorganische Verbindungen, wie Salze der Metalle Mn, Ti, Zr, Hf, V, Co und Ce finden häufig Verwendung. Bevorzugt sind hierbei die Übergangsmetallsalze, die ausgewählt sind aus der Gruppe der Mangan und/oder Cobaltsalze und/oder -komplexe, besonders bevorzugt der Cobalt(ammin)-Komplexe, der Cobalt(acetat)-Komplexe, der Cobalt-(Carbonyl)-Komplexe, der Chloride des Cobalts oder Mangans und des Mangansulfats. Ebenfalls können Zinkverbindungen zur Verhinderung der Korrosion am Spülgut eingesetzt werden.

Anstelle von oder zusätzlich zu den vorstehend beschriebenen Silberschutzmitteln, beispielsweise den Benzotriazolen, können in den erfindungsgemäßen portionierten Wasch- oder Reinigungsmittelzusammensetzungen redoxaktive Substanzen eingesetzt werden. Diese Substanzen sind vorzugsweise anorganische redoxaktive Substanzen aus der Gruppe der Mangan-, Titian-, Zirkonium-, Hafnium-, Vanadium-, Cobalt- und Cer-Salze und/oder -Komplexe enthält, wobei die Metalle vorzugsweise in einer der Oxidationsstufen II, III, IV, V oder VI vorliegen.

Die verwendeten Metallsalze bzw. Metallkomplexe sollen zumindest teilweise in Wasser löslich sein. Die zur Salzbildung geeigneten Gegenionen umfassen alle üblichen ein-, zwei-, oder dreifach negativ geladenen anorganischen Anionen, z. B. Oxid, Sulfat, Nitrat, Fluorid, aber auch organische Anionen wie z. B. Stearat.

Metallkomplexe im Sinne der Erfindung sind Verbindungen, die aus einem Zentralatom und einem oder mehreren Liganden sowie gegebenenfalls zusätzlich einem oder mehreren der o.g. Anionen bestehen. Das Zentralatom ist eines der o.g. Metalle in einer der o.g. Oxidationsstufen. Die Liganden sind neutrale Moleküle oder Anionen, die ein- oder mehrzähnig sind; der Begriff "Liganden" im Sinne der Erfindung ist z.B. in "Römpp Chemie Lexikon, Georg Thieme Verlag Stuttgart/New York, 9. Auflage, 1990, Seite 2507" näher erläutert. Ergänzen sich in einem Metallkomplex die Ladung des Zentralatoms und die Ladung des/der Liganden nicht auf Null, so sorgt, je nachdem, ob ein kationischer oder ein anionischer Ladungsüberschuß vorliegt, entweder eines oder mehrere der o.g. Anionen oder ein oder mehrere Kationen, z. B. Natrium-, Kalium-, Ammoniumionen, für den Ladungsausgleich. Geeignete Komplexbildner sind z.B. Citrat, Acetylacetonat oder 1-Hydroxyethan-1,1-diphosphonat.

Die in der Chemie geläufige Definition für "Oxidationsstufe" ist z.B. in "Römpp Chemie Lexikon, Georg Thieme Verlag Stuttgart/New York, 9. Auflage, 1991, Seite 3168" wiedergegeben.

Besonders bevorzugte Metallsalze und/oder Metallkomplexe sind ausgewählt aus der Gruppe MnSO₄, Mn(II)-citrat, Mn(II)-stearat, Mn(II)-acetylacetonat, Mn(II)-[1-Hydroxyethan-1,1-diphosphonat], V₂O₅, V₂O₄, VO₂, TiOSO₄, K₂TiF₆, K₂ZrF₆, CoSO₄, Co(NO₃)₂, Ce(NO₃)₃ sowie deren Gemische., so daß bevorzugte erfindungsgemäße maschinelle Geschirrspülmittel dadurch gekennzeichnet sind, daß die Metallsalze und/oder Metallkomplexe ausgewählt sind aus der Gruppe MnSO₄, Mn(II)-citrat, Mn(II)-stearat, Mn(II)-acetylacetonat, Mn(II)-[1-Hydroxyethan-1,1-diphosphonat], V₂O₅, V₂O₄, VO₂, TiOSO₄, K₂TiF₆, K₂ZrF₆, CoSO₄, Co(NO₃)₂, Ce(NO₃)₃.

Bei diesen Metallsalzen bzw. Metallkomplexen handelt es sich im allgemeinen um handelsübliche Substanzen, die zum Zwecke des Silberkorrosions-Schutzes ohne vorherige Reinigung in den erfindungsgemäßen Mitteln eingesetzt werden können. So ist z.B. das aus der SO₃-Herstellung (Kontaktverfahren) bekannte Gemisch aus fünf- und vierwertigem Vanadium (V₂O₅, VO₂, V₂O₄) geeignet, ebenso wie das durch Verdünnen einer Ti(SO₄)₂-Lösung entstehende Titanylsulfat, TiOSO₄.

Die anorganischen redoxaktiven Substanzen, insbesondere Metallsalze bzw. Metallkomplexe sind vorzugsweise gecoatet, d.h. vollständig mit einem wasserdichten, bei den Reinigungstemperaturen aber leichtlöslichen Material überzogen, um ihre vorzeitige Zersetzung oder Oxidation bei der Lagerung zu verhindern. Bevorzugte Coatingmaterialien, die nach bekannten Verfahren, etwa Schmelzcoatingverfahren nach Sandwik aus der Lebensmittelindustrie, aufgebracht werden, sind Paraffine, Mikrowachse, Wachse natürlichen Ursprungs wie Carnaubawachs, Candellilawachs, Bienenwachs, höherschmelzende Alkohole wie beispielsweise Hexadecanol, Seifen oder Fettsäuren. Dabei wird das bei Raumtemperatur feste Coatingmaterial in geschmolzenem Zustand auf das zu coatende Material aufgebracht, z.B. indem feinteiliges zu coatendes Material in kontinuierlichem Strom durch eine ebenfalls kontinuierlich erzeugte Sprühnebelzone des geschmolzenen Coatingmaterials geschleudert wird. Der Schmelzpunkt muß so gewählt sein, daß sich das Coatingmaterial während der Silberbehandlung leicht löst bzw. schnell aufschmilzt. Der Schmelzpunkt sollte idealerweise im Bereich zwischen 45°C und 65°C und bevorzugt im Bereich 50°C bis 60°C liegen.

Die genannten Metallsalze und/oder Metallkomplexe sind in den erfindungsgemäßen portionierten Wasch- oder Reinigungsmittelzusammensetzungen, insbesondere maschinellen Geschirrspülmitteln, vorzugsweise in einer Menge von 0,05 bis 6 Gew.-%, vorzugsweise 0,2 bis 2,5 Gew.-%, bezogen auf das gesamte Mittel, enthalten

Ein weiteres wichtiges Kriterium zur Beurteilung eines maschinellen Geschirrspülmittels ist neben dessen Reinigungsleistung das optische Erscheinungsbild des trockenen Geschirrs nach erfolgter Reinigung. Eventuell auftretende Calciumcarbonat-Ablagerungen auf Geschirr oder im Maschineninnenraum können beispielsweise die Kundenzufriedenheit beeinträchtigen und haben damit ursächlichen Einfluß auf den wirtschaftlichen Erfolg eines derartigen Reinigungsmittels. Ein weiteres seit langem bestehendes Problem beim maschinellen Geschirrspülen ist die Korrosion von Glasspülgut, die sich in der Regel durch Auftreten von Trübungen, Schlieren und Kratzern aber auch durch ein Irisieren der Glasoberfläche äußern kann. Die beobachteten Effekte beruhen dabei im wesentlichen auf zwei Vorgängen, dem Austritt von Alkali- und Erdalkaliionen aus dem Glas in Verbindung mit einer Hydrolyse des Silikat-Netzwerks, zum anderen in einer Ablagerung silikatischer Verbindungen auf der Glasoberfläche.

Die genannten Probleme können mit den erfindungsgemäßen Mitteln gelöst werden, wenn zusätzlich zu den vorstehend genannten zwingenden und gegebenenfalls oprionalen Inhaltsstoffen bestimmte Glaskorrosionsinhibitoren in die Mittel inkorporiert werden. Bevorzugte erfindungsgemäße Mittel enthalten daher zusätzlich ein oder mehrere Magnesium- und/oder Zinksalze und/oder Magnesium- und/oder Zinkkomplexe.

Eine bevorzugte Klasse von Verbindungen, die zur Verhinderung der Glaskorrosion den erfindungsgemäßen Mitteln zugesetzt werden können, sind unlösliche Zinksalze. Diese können sich während des Geschirrspülvorgangs an der Glasoberfläche anlagern und verhindern dort das in Lösung gehen von Metallionen aus dem Glasnetzwerk sowie die Hydrolyse der Silikate. Zusätzlich verhindern diese unlöslichen Zinksalze auch die Ablagerung von Silikat auf der Glasoberfläche, so daß das Glas vor den vorstehend geschilderten Folgen geschützt ist.

Unlösliche Zinksalze im Sinne dieser bevorzugten Ausführungsform sind Zinksalze, die eine Löslichkeit von maximal 10 Gramm Zinksalz pro Liter Wasser bei 20°C besitzen. Beispiele für erfindungsgemäß besonders bevorzugte unlösliche Zinksalze sind Zinksilikat, Zinkcarbonat, Zinkoxid, basisches Zinkcarbonat (Zn₂(OH)₂CO₃), Zinkhydroxid, Zinkoxalat, Zinkmonophosphat (Zn₃(PO₄)₂), und Zinkpyrophosphat (Zn₂(P₂O₇)).

Die genannten Zinkverbindungen werden in den erfindungsgemäßen Mitteln in Mengen eingesetzt, die einen Gehalt der Mittel an Zinkionen zwischen 0,02 und 10 Gew.-%, vorzugsweise zwischen 0,1 und 5,0 Gew.-% und insbesondere zwischen 0,2 und 1,0 Gew.-%, jeweils bezogen auf das Mittel, bewirken. Der exakte Gehalt der Mittel am Zinksalz bzw. den Zinksalzen ist naturgemäß abhängig von der Art der Zinksalze - je weniger löslich das eingesetzte Zinksalz ist, umso höher sollte dessen Konzentration in den erfindungsgemäßen Mitteln sein.

Da die unlöslichen Zinksalze während des Geschirreinigungsvorgangs größtenteils unverändert bleiben, ist die Partikelgröße der Salze ein zu beachtendes Kriterium, damit die Salze nicht auf Glaswaren oder Maschinenteilen anhaften. Hier sind erfindungsgemäße flüssige wäßrige maschinelle Geschirrspülmittel bevorzugt, bei denen die unlöslichen Zinksalze eine Partikelgröße unterhalb 1,7 Millimeter aufweisen.

Wenn die maximale Partikelgröße der unlöslichen Zinksalze unterhalb 1,7 mm liegt, sind unlösliche Rückstände in der Geschirrspülmaschine nicht zu befürchten. Vorzugsweise hat das unlösliche Zinksalz eine mittlere Partikelgröße, die deutlich unterhalb dieses Wertes liegt, um die Gefahr unlöslicher Rückstände weiter zu minimieren, beispielsweise eine mittlere Partikelgröße kleiner 250 µm. Dies gilt wiederum umso mehr, je weniger das Zinksalz löslich ist. Zudem steigt die glaskorrosionsinhibierende Effektivität mit sinkender Partikelgröße. Bei sehr schlecht löslichen Zinksalzen liegt die mittlere Partikelgröße vorzugsweise unterhalb von 100 µm. Für noch schlechter lösliche Salze kann sie noch niedriger liegen; beispielsweise sind für das sehr schlecht lösliche Zinkoxid mittlere Partikelgrößen unterhalb von 100 µm bevorzugt.

Eine weitere bevorzugte Klasse von Verbindungen sind Magnesium- und/oder Zinksalz(e) mindestens einer monomeren und/oder polymeren organischen Säure. Diese bewirken, daß auch bei wiederholter Benutzung die Oberflächen gläsemen Spülguts nicht korrosiv verändert, insbesondere keine Trübungen, Schlieren oder Kratzer aber auch kein Irisieren der Glasoberflächen verursacht werden.

Obwohl erfindungsgemäß alle Magnesium- und/oder Zinksalz(e) monomerer und/oder polymerer organischer Säuren in den beanspruchten Mitteln enthalten sein können, werden doch, wie vorstehend beschrieben, die Magnesium- und/oder Zinksalze monomerer und/oder polymerer organischer Säuren aus den Gruppen der unverzweigten gesättigten oder ungesättigten Monocarbonsäuren, der verzweigten gesättigten oder ungesättigten Monocarbonsäuren, der gesättigten und ungesättigten Dicarbonsäuren, der aromatischen Mono-, Di- und Tricarbonsäuren, der Zuckersäuren, der Hydroxysäuren, der Oxosäuren, der Aminosäuren und/oder der polymeren Carbonsäuren bevorzugt. Innerhalb dieser Gruppen werden im Rahmen der vorliegenden Erfindung wiederum die in der Folge genannten Säuren bevorzugt:

Aus der Gruppe der unverzweigten gesättigten oder ungesättigten Monocarbonsäuren: Methansäure (Ameisensäure), Ethansäure (Essigsäure), Propansäure (Propionsäure), Pentansäure (Valeriansäure), Hexansäure (Capronsäure), Heptansäure (Önanthsäure), Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure (Margarinsäure), Octadecansäure (Stearinsäure), Eicosansäure (Arachinsäure), Docosansäure (Behensäure), Tetracosansäure (Lignocerinsäure), Hexacosansäure (Cerotinsäure), Triacotansäure (Melissinsäure), 9c-Hexadecensäure (Palmitoleinsäure), 6c-Octadecensäure (Petroselinsäure), 6t-Octadecensäure (Petroselaidinsäure), 9c-Octadecensäure (Ölsäure), 9t-Octadecensäure (Elaidinsäure), 9c,12c-Octadecadiensäure (Linolsäure), 9t,12t-Octadecadiensäure (Linolaidinsäure) und 9c,12c,15c-Octadecatreinsäure (Linolensäure).

Aus der Gruppe der verzweigten gesättigten oder ungesättigten Monocarbonsäuren: 2-Methylpentansäure, 2-Ethylhexansäure, 2-Propylheptansäure, 2-Butyloctansäure, 2-Pentylnonansäure, 2-Hexyldecansäure, 2-Heptylundecansäure, 2-Octyldodecansäure, 2-Nonyltridecansäure, 2-Decyltetradecansäure, 2- Undecylpentadecansäure, 2-Dodecylhexadecansäure, 2-Tridecylheptadecansäure, 2-Tetradecyloctadecansäure, 2-Pentadecylnonadecansäure, 2-Hexadecyleicosansäure, 2-Heptadecylheneicosansäure enthält.

Aus der Gruppe der unverzweigten gesättigten oder ungesättigten Di- oder Tricarbonsäuren: Propandisäure (Malonsäure), Butandisäure (Bemsteinsäure), Pentandisäure (Glutarsäure), Hexandisäure (Adipinsäure), Heptandisäure (Pimelinsäure), Octandisäure (Korksäure), Nonandisäure (Azelainsäure), Decandisäure (Sebacinsäure), 2c-Butendisäure (Maleinsäure), 2t-Bütendisäure (Fumarsäure), 2-Butindicarbonsäure (Acetylendicarbonsäure).

Aus der Gruppe der aromatischen Mono-, Di- und Tricarbonsäuren: Benzoesäure, 2-Carboxybenzoesäure (Phthalsäure), 3-Carboxybenzoesäure (Isophthalsäure), 4-Carboxybenzoesäure (Terephthalsäure), 3,4-Dicarboxybenzoesäure (Trimellithsäure), 3,5-Dicarboxybenzoesäure (Trimesionsäure).

Aus der Gruppe der Zuckersäuren: Galactonsäure, Mannonsäure, Fructonsäure, Arabinonsäure, Xylonsäure, Ribonsäure, 2-Desoxy-ribonsäure, Alginsäure.

Aus der Gruppe der Hydroxysäuren: Hydroxyphenylessigsäure (Mandelsäure), 2-Hydroxypropionsäure (Milchsäure), Hydroxybernsteinsäure (Äpfelsäure), 2,3-Dihydroxybutandisäure (Weinsäure), 2-Hydroxy-1,2,3-propantricarbonsäure (Citronensäure), Ascorbinsäure, 2-Hydroxybenzoesäure (Salicylsäure), 3,4,5-Trihydroxybenzoesäure (Gallussäure).

Aus der Gruppe der Oxosäuren: 2-Oxopropionsäure (Brenztraubensäure), 4-Oxo-pentansäure (Lävulinsäure).

Aus der Gruppe der Aminosäuren: Alanin, Valin, Leucin, Isoleucin, Prolin, Tryptophan, Phenylalanin, Methionin, Glycin, Serin, Tyrosin, Threonin, Cystein, Asparagin, Glutamin, Asparaginsäure, Glutaminsäure, Lysin, Arginin, Histidin.

Aus der Gruppe der polymeren Carbonsäuren: Polyacrylsäure, Polymethacrylsäure, Alkylacrylamid/Acrylsäure-Copolymere, Alkylacrylamid/Methacrylsäure-Copolymere, Alkylacrylamid/Methylmethacrylsäure-Copolymere, Copolymere aus ungesättigten Carbonsäuren, Vinylacetat/Crotonsäure-Copolymere, VinylpyrrolidonNinylacrylat-Copolymere.

Das Spektrum der erfindungsgemäß bevorzugten Zinksalze organischer Säuren, vorzugsweise organischer Carbonsäuren, reicht von Salzen die in Wasser schwer oder nicht löslich sind, also eine Löslichkeit unterhalb 100 mg/L, vorzugsweise unterhalb 10 mg/L, insbesondere keine Löslichkeit aufweisen, bis zu solchen Salzen, die in Wasser eine Löslichkeit oberhalb 100 mg/L, vorzugsweise oberhalb 500 mg/L, besonders bevorzugt oberhalb 1 g/L und insbesondere oberhalb 5 g/L aufweisen (alle Löslichkeiten bei 20°C Wassertemperatur). Zu der ersten Gruppe von Zinksalzen gehören beispielsweise das Zinkcitrat, das Zinkoleat und das Zinkstearat, zu der Gruppe der löslichen Zinksalze gehören beispielsweise das Zinkformiat, das Zinkacetat, das Zinklactat und das Zinkgluconat:

In einer weiteren bevorzugten Ausführungsform der vorliegenden Erfindung enthalten die erfindungsgemäßen Mittel wenigstens ein Zinksalz, jedoch kein Magnesiumsalz einer organischen Säure, wobei es sich vorzugsweise um mindestens ein Zinksalz einer organischen Carbonsäure, besonders bevorzugt um ein Zinksalz aus der Gruppe Zinkstearat, Zinkoleat, Zinkgluconat, Zinkacetat, Zinklactat und/oder Zinkcitrat handelt. Auch Zinkricinoleat, Zinkabietat und Zinkoxalat sind bevorzugt.

Ein im Rahmen der vorliegenden Erfindung bevorzugtes Mittel enthält Zinksalz in Mengen von 0,1 bis 5 Gew.-%, vorzugsweise von 0,2 bis 4 Gew.-% und insbesondere von 0,4 bis 3 Gew.-%, bzw. Zink in oxidierter Form (berechnet als Zn²⁺) in Mengen von 0,01 bis 1 Gew.-%, vorzugsweise von 0,02 bis 0,5 Gew.-% und insbesondere von 0,04 bis 0,2 Gew.-%, jeweils bezogen auf das Gesamtgewicht des maschinellen Geschirrspülmittels.

Die erfindungsgemäßen portionierten Wasch- und Reinigungsmittelzusammensetzungen sind in wasserdispergierbarer oder wasserlöslicher Behältern verpackt. Die entsprechenden Verpackungsmaterialien sind aus dem Stand der Technik bekannt und entstammen beispielsweise der Gruppe (acetalisierter) Polyvinylalkohol, Polyvinylpyrrolidon, Polyethylenoxid, Gelatine und Mischungen hieraus.

Besonders bevorzugte erfindungsgemäße portionierte Wasch- oder Reinigungsmittelzusammensetzungen sind dadurch gekennzeichnet, daß der wasserlösliche oder wasserdispergierbare Behälter ein oder mehrere wasserlösliche(s) Polymer(e), vorzugsweise ein Material aus der Gruppe (gegebenenfalls acetalisierter) Polyvinylalkohol (PVAL), Polyvinylpyrrolidon, Polyethylenoxid, Gelatine, Cellulose, und deren Derivate und deren Mischungen umfaßt.

"Polyvinylalkohole" (Kurzzeichen PVAL, gelegentlich auch PVOH) ist dabei die Bezeichnung für Polymere der allgemeinen Struktur 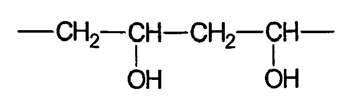 die in geringen Anteilen (ca. 2%) auch Struktureinheiten des Typs 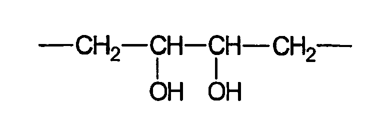 enthalten.

Handelsübliche Polyvinylalkohole, die als weiß-gelbliche Pulver oder Granulate mit Polymerisationsgraden im Bereich von ca. 100 bis 2500 (Molmassen von ca. 4000 bis 100.000 g/mol) angeboten werden, haben Hydrolysegrade von 98-99 bzw. 87-89 Mol-%, enthalten also noch einen Restgehalt an Acetyl-Gruppen. Charakterisiert werden die Polyvinylalkohole von Seiten der Hersteller durch Angabe des Polymerisationsgrades des Ausgangspolymeren, des Hydrolysegrades, der Verseifungszahl bzw. der Lösungsviskosität.

Polyvinylalkohole sind abhängig vom Hydrolysegrad löslich in Wasser und wenigen stark polaren organischen Lösungsmitteln (Formamid, Dimethylformamid, Dimethylsulfoxid); von (chlorierten) Kohlenwasserstoffen, Estern, Fetten und Ölen werden sie nicht angegriffen. Polyvinylalkohole werden als toxikologisch unbedenklich eingestuft und sind biologisch zumindest teilweise abbaubar. Die Wasserlöslichkeit kann man durch Nachbehandlung mit Aldehyden (Acetalisierung), durch Komplexierung mit Ni- oder Cu-Salzen oder durch Behandlung mit Dichromaten, Borsäure od. Borax verringern. Die Beschichtungen aus Polyvinylalkohol sind weitgehend undurchdringlich für Gase wie Sauerstoff, Stickstoff, Helium, Wasserstoff, Kohlendioxid, lassen jedoch Wasserdampf hindurchtreten.

Im Rahmen der vorliegenden Erfindung ist es bevorzugt, daß der wasserlösliche oder wasserdispergierbare Behälter einen Polyvinylalkohol umfaßt, dessen Hydrolysegrad 70 bis 100 Mol-%, vorzugsweise 80 bis 90 Mol-%, besonders bevorzugt 81 bis 89 Mol-% und insbesondere 82 bis 88 Mol-% beträgt.

Vorzugsweise werden als Materialien für die Behälter Polyvinylalkohole eines bestimmten Molekulargewichtsbereichs eingesetzt, wobei erfindungsgemäß bevorzugt ist, daß der wasserlösliche oder wasserdispergierbare Behälter einen Polyvinylalkohol umfaßt, dessen Molekulargewicht im Bereich von 10.000 bis 100.000 gmol⁻¹, vorzugsweise von 11.000 bis 90.000 gmol⁻¹, besonders bevorzugt von 12.000 bis 80.000 gmol⁻¹ und insbesondere von 13.000 bis 70.000 gmol⁻¹ liegt.

Der Polymerisationsgrad solcher bevorzugten Polyvinylalkohole liegt zwischen ungefähr 200 bis ungefähr 2100, vorzugsweise zwischen ungefähr 220 bis ungefähr 1890, besonders bevorzugt zwischen ungefähr 240 bis ungefähr 1680 und insbesondere zwischen ungefähr 260 bis ungefähr 1500.

Die vorstehend beschriebenen Polyvinylalkohole sind kommerziell breit verfügbar, beispielsweise unter dem Warenzeichen Mowiol^{®} (Clariant). Im Rahmen der vorliegenden Erfindung besonders geeignete Polyvinylalkohole sind beispielsweise Mowiol^{®} 3-83, Mowiol^{®} 4-88, Mowiol^{®} 5-88 sowie Mowiol^{®} 8-88.

Weitere als Material für den Behälter besonders geeignete Polyvinylalkohole sind der nachstehenden Tabelle zu entnehmen:

| Bezeichnung | **Hydrolysegrad [%]** | **Molmasse [kDa]** | **Schmelzpunkt [°C]** |
|---|---|---|---|
| Airvol^{®} 205 | 88 | 15-27 | 230 |
| Vinex^{®} 2019 | 88 | 15-27 | 170 |
| Vinex^{®} 2144 | 88 | 44-65 | 205 |
| Vinex^{®} 1025 | 99 | 15-27 | 170 |
| Vinex^{®} 2025 | 88 | 25 - 45 | 192 |
| Gohsefimer^{®} 5407 | 30-28 | 23.600 | 100 |
| Gohsefimer^{®} LL02 | 41-51 | 17.700 | 100 |

Weitere als Material für den Behälter geeignete Polyvinylalkohole sind ELVANOL^{®} 51-05, 52-22, 50-42, 85-82, 75-15, T-25, T-66, 90-50 (Warenzeichen der Du Pont), ALCOTEX^{®} 72.5, 78, B72, F80/40, F88/4, F88/26, F88/40, F88/47 (Warenzeichen der Harlow Chemical Co.), Gohsenol^{®} NK-05, A-300, AH-22, C-500, GH-20, GL-03, GM-14L, KA-20, KA-500, KH-20, KP-06, N-300, NH-26, NM11Q, KZ-06 (Warenzeichen der Nippon Gohsei K.K.).

Die Wasserlöslichkeit von PVAL kann durch Nachbehandlung mit Aldehyden (Acetalisierung) oder Ketonen (Ketalisierung) verändert werden. Als besonders bevorzugt und aufgrund ihrer ausgesprochen guten Kaltwasserlöslichkeit besonders vorteilhaft haben sich hierbei Polyvinylalkohole herausgestellt, die mit den Aldehyd bzw. Ketogruppen von Sacchariden oder Polysacchariden oder Mischungen hiervon acetalisiert bzw. ketalisiert werden. Als äußerst vorteilhaft einzusetzen sind die Reaktionsprodukte aus PVAL und Stärke.

Weiterhin läßt sich die Wasserlöslichkeit durch Komplexierung mit Ni- oder Cu-Salzen oder durch Behandlung mit Dichromaten, Borsäure, Borax verändern und so gezielt auf gewünschte Werte einstellen. Folien aus PVAL sind weitgehend undurchdringlich für Gase wie Sauerstoff, Stickstoff, Helium, Wasserstoff, Kohlendioxid, lassen jedoch Wasserdampf hindurchtreten.

Beispiele geeigneter wasserlöslicher PVAL-Folien sind die unter Bezeichnung "SOLUBLON^{®}" von der Firma Syntana Handelsgesellschaft E. Harke GmbH & Co. erhältlichen PVAL-Folien. Deren Löslichkeit in Wasser läßt sich Grad-genau einstellen, und es sind Folien dieser Produktreihe erhältlich, die in allen für die Anwendung relevanten Temperaturbereichen in wäßriger Phase löslich sind.

Polyvinylpyrrolidone, kurz als PVP bezeichnet, lassen sich durch die folgende allgemeine Formel beschreiben:

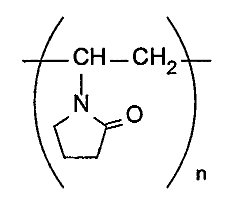

PVP werden durch radikalische Polymerisation von 1-Vinylpyrrolidon hergestellt. Handelsübliche PVP haben Molmassen im Bereich von ca. 2.500 bis 750.000 g/mol und werden als weiße, hygroskopische Pulver oder als wäßrige Lösungen angeboten.

Polyethylenoxide, kurz PEOX, sind Polyalkylenglykole der allgemeinen Formel

H-[O-CH₂-CH₂]ₙ-OH

die technisch durch basisch katalysierte Polyaddition von Ethylenoxid (Oxiran) in meist geringe Mengen Wasser enthaltenden Systemen mit Ethylenglykol als Startmolekül hergestellt werden. Sie haben Molmassen im Bereich von ca. 200 bis 5.000.000 g/mol, entsprechend Polymerisationsgraden n von ca. 5 bis >100.000. Polyethylenoxide besitzen eine äußerst niedrige Konzentration an reaktiven Hydroxy-Endgruppen und zeigen nur noch schwache Glykol-Eigenschaften.

Gelatine ist ein Polypeptid (Molmasse: ca. 15.000 bis >250.000 g/mol), das vornehmlich durch Hydrolyse des in Haut und Knochen von Tieren enthaltenen Kollagens unter sauren oder alkalischen Bedingungen gewonnen wird. Die Aminosäuren-Zusammensetzung der Gelatine entspricht weitgehend der des Kollagens, aus dem sie gewonnen wurde, und variiert in Abhängigkeit von dessen Provenienz. Die Verwendung von Gelatine als wasserlösliches Hüllmaterial ist insbesondere in der Pharmazie in Form von Hart- oder Weichgelatinekapseln äußerst weit verbreitet. In Form von Folien findet Gelatine wegen ihres im Vergleich zu den vorstehend genannten Polymeren hohen Preises nur geringe Verwendung.

Bevorzugt sind im Rahmen der vorliegenden Erfindung auch erfindungsgemäße Mittel, deren Verpackung aus zumindest zum Teil wasserlöslicher Folie aus mindestens einem Polymer aus der Gruppe Stärke und Stärkederivate, Cellulose und Cellulosederivate, insbesondere Methylcellulose und Mischungen hieraus besteht.

Stärke ist ein Homoglykan, wobei die Glucose-Einheiten α-glykosidisch verknüpft sind. Stärke ist aus zwei Komponenten unterschiedlichen Molekulargewichts aufgebaut: aus ca. 20 bis 30% geradkettiger Amylose (MG. ca. 50.000 bis 150.000) und 70 bis 80% verzweigtkettigem Amylopektin (MG. ca. 300.000 bis 2.000.000). Daneben sind noch geringe Mengen Lipide, Phosphorsäure und Kationen enthalten. Während die Amylose infolge der Bindung in 1,4-Stellung lange, schraubenförmige, verschlungene Ketten mit etwa 300 bis 1.200 Glucose-Molekülen bildet, verzweigt sich die Kette beim Amylopektin nach durchschnittlich 25 Glucose-Bausteinen durch 1,6-Bindung zu einem astähnlichen Gebilde mit etwa 1.500 bis 12.000 Molekülen Glucose. Neben reiner Stärke sind zur Herstellung wasserlöslicher Umhüllungen der Waschmittel-, Spülmittel- und Reinigungsmittel-Portionen im Rahmen der vorliegenden Erfindung auch Stärke-Derivate geeignet, die durch polymeranaloge Reaktionen aus Stärke erhältlich sind. Solche chemisch modifizierten Stärken umfassen dabei beispielsweise Produkte aus Veresterungen bzw. Veretherungen, in denen Hydroxy-Wasserstoffatome substituiert wurden. Aber auch Stärken, in denen die Hydroxy-Gruppen gegen funktionelle Gruppen, die nicht über ein Sauerstoffatom gebunden sind, ersetzt wurden, lassen sich als Stärke-Derivate einsetzen. In die Gruppe der Stärke-Derivate fallen beispielsweise Alkalistärken, Carboxymethylstärke (CMS), Stärkeester und -ether sowie Aminostärken.

Reine Cellulose weist die formale Bruttozusammensetzung (C₆H₁₀O₅)ₙ auf und stellt formal betrachtet ein β-1,4-Polyacetal von Cellobiose dar, die ihrerseits aus zwei Molekülen Glucose aufgebaut ist. Geeignete Cellulosen bestehen dabei aus ca. 500 bis 5.000 Glucose-Einheiten und haben demzufolge durchschnittliche Molmassen von 50.000 bis 500.000. Als Desintegrationsmittel auf Cellulosebasis verwendbar sind im Rahmen der vorliegenden Erfindung auch Cellulose-Derivate, die durch polymeranaloge Reaktionen aus Cellulose erhältlich sind. Solche chemisch modifizierten Cellulosen umfassen dabei beispielsweise Produkte aus Veresterungen bzw. Veretherungen, in denen Hydroxy-Wasserstoffatome substituiert wurden. Aber auch Cellulosen, in denen die Hydroxy-Gruppen gegen funktionelle Gruppen, die nicht über ein Sauerstoffatom gebunden sind, ersetzt wurden, lassen sich als Cellulose-Derivate einsetzen. In die Gruppe der Cellulose-Derivate fallen beispielsweise Alkalicellulosen, Carboxymethylcellulose (CMC), Celluloseester und -ether sowie Aminocellulosen.

Die wasserlöslichen oder wasserdispergierbaren Behälter, welche die erfindungsgemäßen Mittel enthalten, können nach jedem der im Stand der Technik beschriebenen Verfahren hergestellt werden.

Ein weiterer Gegenstand der vorliegenden Anmeldung ist daher ein Verfahren zur Herstellung portionierter flüssiger Wasch- oder Reinigungsmittel-zusammensetzungen, bei dem mindestens ein Feststoff in einer flüssigen Matrix dispergiert und nachfolgend in einem wasserlöslichen oder wasserdispergierbaren Behälter verpackt wird, dadurch gekennzeichnet, daß der/die dispergierte(n) Feststoff eine Teilchengröße oberhalb 500 µm aufweist/aufweisen.

### Beschreibung um Verfahrensvarianten erweitern

In bevorzugten Ausführungsformen der vorliegenden Erfindung handelt es sich bei diesen Behältern um Folienbeutel (sogenannte Pouches) bzw. um Spritzguß- oder Tiefziehkörper.

Werden die erfindungsgemäß als Verpackung gewählten Behälter in Form von Folienbeuteln ausgebildet, so ist es bevorzugt, daß die wasserlösliche Folie, die den Beutel bildet, eine Dicke von 1 bis 150 µm, vorzugsweise von 2 bis 100 µm, besonders bevorzugt von 5 bis 75 µm und insbesondere von 10 bis 50 µm, aufweist.

Werden als wasserlösliche oder wasserdispergierbare Behälter Spritzguß- oder Tiefzieh- oder Blasformkörper, so weist die Wand dieser bevorzugten Behälter eine Dicke von 50 bis 300 µm, vorzugsweise von 70 bis 200 µm und insbeosndere von 80 bis 150 µm auf.

Ein für die Herstellung erfindungsgemäßer wasserlöslicher oder wasserdispergierbarer Behälter in besonderer Weise geeignetes Verfahren ist das Spritzgießen. Spritzgießen bezeichnet dabei das Umformen einer Formmasse derart, daß die in einem Massezylinder für mehr als einen Spritzgießvorgang enthaltene Masse unter Wärmeeinwirkung plastisch erweicht und unter Druck durch eine Düse in den Hohlraum eines vorher geschlossenen Werkzeuges einfließt. Das Verfahren wird hauptsächlich bei nichthärtbaren Formmassen angewendet, die im Werkzeug durch Abkühlen erstarren. Der Spritzguß ist ein sehr wirtschaftliches modernes Verfahren zur Herstellung spanlos geformter Gegenstände und eignet sich besonders für die automatisierte Massenfertigung. Im praktischen Betrieb erwärmt man die thermoplastische Formmassen (Pulver, Körner, Würfel, Pasten u. a.) bis zur Verflüssigung (bis 180 °C) und spritzt sie dann unter hohem Druck (bis 140 MPa) in geschlossene, zweiteilige, das heißt aus Gesenk (früher Matrize) und Kern (früher Patrize) bestehende, vorzugsweise wassergekühlte Hohlformen, wo sie abkühlen und erstarren. Einsetzbar sind Kolben- und Schneckenspritzgußmaschinen. Als Formmassen (Spritzgußmassen) eignen sich wasserlösliche Polymere wie beispielsweise die oben genannten Celluloseether, Pektine, Polyethylenglycole, Polyvinylalkohole, Polyvinylpyrrolidone, Alginate, Gelatine oder Stärke.

Gegenstand der vorliegenden Anmeldung ist daher weiterhin ein Verfahren zur Herstellung eines befüllten wasserlöslichen Behälters umfassend die Schritte:
a) Spritzgießen eines Behälters aus einem wasserlöslichen oder wasserdispergierbaren Material,
b) Befüllen des Basisformkörpers mit einer flüssigen Wasch- oder Reinigungsmittelzusammensetzung, umfassend eine flüssige Matrix und darin dispergierte Feststoffteilchen,
c) Verschließen des befüllten Behälters mit einer wasserlöslichen oder wasserdispergierbarenVerschlußeinheit,
dadurch gekennzeichnet, daß mindestens 70 Gew.-% der dispergierten Feststoffteilchen Teilchengrößen unterhalb 200 µm aufweisen.

Bei der wasserlöslichen oder wasserdispergierbaren Verschlußeinheit, welche in Schritt c) zum Verschließen des gefüllten Behälters eingesetzt wird, handelt es sich vorzugsweise um einen spritzgegossen Körper, wobei dieser Körper vorzugsweise die gleich Raumform aufweist wie der Basisformkörper. Bevorzugt wird im Rahmen der vorliegenden Erfindung folglich insbesondere ein Verfahren, in welchem die Verschlußeinheit die gleiche Raumform aufweist wie der in Schritt a) hergestellte Behälter.

In einer weiteren bevorzugten Ausführungsform des beschriebenen erfindugnsgemäßen Verfahrens wird als Verschlußeinheit eine Folie eingesetzt, wobei diese Folie beispielsweise zuvor durch Tiefziehverfahren formgebend verarbeitet werden kann. Ein weiterer bevorzugter Gegenstand der vorliegenden Anmeldung ist demnach ein vorgenanntes Verfahren, dadurch gekennzeichnet, daß es sich bei der in Schritt c) eingeführten wasserlöslichen Verschlußeinheit um eine wasserlösliche oder wasserdispergierbare Folie handelt.

Aus den vorherigen Angaben ergibt sich, daß die Dicke der wasserlöslichen Außenwand erfindungsgemäßer Behälter nicht notwendigerweise homogen ist, sondern in Abhängigkeit von dem gewählten Herstellungsverfahren schwanken kann. Im Rahmen der vorliegenden Anmeldung ist es dabei bevorzugt, daß diese Schwankungen sich innerhalb der oben geannten bevorzugten Bereiche für die Wanddicke erfindungsgemäßer Behälter bewegen.

Auch das Verschließen von Basisformkörper und Verschlußeinheit kann auf unterschiedliche Weise erfolgen. Bevorzugt im Rahmen der vorliegenden Erfindung werden Verschlußverfahren, welche auf anteilsweiser Solvatisierung der Oberfläche des Behälters und/oder der Verschlußeineheit und/oder auf Erwärmen des Behälters und/oder der Verschlußeinheit auf eine Temperatur, bei welcher diese plastisch deformierbar sind, beruhen. Sowohl die teilweise Solvatisierung als auch die Erwärmung wird dabei vorzugsweise nicht auf der gesamten Oberfläche des Behälters und/oder der gesamten Oberfläche der Verschlußeinheit erfolgen, sondern nur in den Bereichen in welchen die nachfolgende Versiegelung unter Ausbildung einer Siegelnaht erfolgen soll. Die Erwärmung der Oberfläche des Behälters und/oder der Verschlußeinheit erfolgt vorzugsweise durch den Einsatz von Heißluft, Heizplatten, beheizten Walzen oder von Wärmestrahlung, vorzugsweise Laserstrahlung oder andere IR-Quellen wie Glasfaserleiter (optical fibre). Bevorzugter Gegenstand der vorliegenden Anmneldung ist folglich ein zuvor beschriebenes Verfahren, in welchem das Verschließen in Schritt c) mittels einer Schmelzverklebung erfolgt.

Neben dem beschriebenen Spritzgußverfahren ist das Rotary-Die-Verfahren in besonderer Weise zur Herstellung erfindungsgemäßer wasserlöslicher oder wasserdispergierbarer Behälter geeignet, wobei unter dem Begriff des Rotary-Die-Verfahrens im Rahmen der vorliegenden Anmeldung auch Verfahrensvarianten wie das Accogel-Verfahren, das Reciprocating-Die-Verfahren mittels einer Norton Verkapselungsmaschine, das Colton- sowie das Upjohn-Verfahren zusammengefaßt. Der Begriff des Rotary-Die-Verfahrens ist demnach nicht beschränkend zu verstehen, sondern umfaßt alle dem Fachmann bekannten Verfahrensvarianten, welche unter Einsatz von Formwalzen zur Herstellung befüllter Behälter geeignet sind.

Besonders bevorzugt wird im Rahmen der vorliegenden Anmeldung jedoch ein automatisches Rotary-Die-Verfahren mittels zweier rotierender Formwalzen umfassend die Schritte:
a) Zuführen zweier unter Lösungsmitteleinfluß und/oder Temperatureinfluß plastisch deformierbarer wasserlösllicher oder wasserdispergbierbar Folien auf zwei sich gegensinnig drehende Formwalzen, wobei mindestens eine dieser Formwalzen in ihrer Oberfläche Vertiefungen zur Aufnahme des herzustellenden Behälters aufweist, welche durch Stege begrenzt sind,
b) Auftragen eines Lösungsmittels auf mindestens eine dieser Folien unter mindestens anteilsweiser Solvatisierung der Oberfläche dieser Folie und/oder Erwärmen mindestens einer dieser Folien auf eine Temperatur bei welcher diese Folie plastisch deformierbar ist,
c) optionales Tiefziehen und/oder Eindrücken und/oder Einsinken lassen mindestens einer dieser Folien in die Vertiefungen der Formwalze,
d) Einfüllen, einer flüssigen Wasch- oder Reinigungsmittelzusammensetzung, umfassend eine flüssige Matrix und darin dispergierte Feststoffteilchen,
d) optionales Auftragen eines Klebemittels,
e) Zusammenführen der zwei unter Lösungsmitteleinfluß und/oder Temperatureinfluß plastisch deformierbarer wasserlösllicher Folien im Zwischenraum der zwei sich gegensinnig drehenden Formwalzen,
f) Verkleben und/oder Abquetschen der Folien durch Krafteinwirkung der Stege auf die Folien unter Heraustrennung des Behälters,
dadurch gekennzeichnet, daß daß mindestens 70 Gew.-% der dispergierten Feststoffteilchen Teilchengrößen unterhalb 200 µm aufweisen.

Bei der Durchführung dieses Verfahrens ist zu beachten, daß sich die Temperaturen für die plastische Deformierung in Schritt b) sowie die Hitzeversiegelung deutlich unterscheiden können. Generell gilt, das die in den Schritten b) und c) gewählte Temperatur unterhalb der für oben beschriebene Schmelzverklebung im Rahmen des Spritzgußverfarhens notwendigen Temperaturen liegt. Werden beispielsweise HPMC-Folien eingesetzt, so beträgt die Temperatur für die plastische Deformierung vorzugsweise 85 bis 90°C, während die Schmelzverklebung im Temperaturbereich von 150 bis 170°C erfolgt. Für PVA-Folien liegen die Temperaturen für die plastische Verformung bei etwa 150°C, während die Schmelzverklebung im Bereich von 160 bis 200°C erfolgt. Wie in den vorgenannten Fällen kann die Erwärmung der Behältermaterialien durch Heißluft, Wärmestrahlung oder den direkten Kontakt mit geeigneten Heizplatten oder beheizten Walzen erfolgen.

Ein weiteres für die Herstellung wasserlöslicher oder wasserdispergierbarer Behälter geeignetes Verfahren ist das sogenannte Tiefziehverfahren, insbesondere das Thermoform-Verfahren, wobei die in typischen Thermoform-Verfahren eingesetzte Erwärmung plastisch deformierbarer Folien in Rahmen der vorliegenden Anmeldung optional durch eine mindestens anteilsweise Solvatisierung dieser Folien ergänzt/ersetzt werden kann. Gegenstand der vorliegenden Anmeldung ist daher weiterhin ein Verfahren zur Herstellung eines wasserlöslichen Behälters umfassend die Schritte:
a) Zuführen einer unter Lösungsmitteleinfluß und/oder Temperatureinfluß plastisch deformierbaren wasserlösllichen oder wasserdispergierbaren Folie auf eine Matrize, welche Vertiefungen zur Aufnahme des herzustellenden Behälters aufweist,
b) Auftragen eines Lösungsmittels auf diese Folie unter mindestens anteilsweiser Solvatisierung der Oberfläche dieser Folie und/oder Erwärmen dieser Folie bis zu einer Temperatur, bei welche diese plastisch deformierbar ist,
c) Tiefziehen und/oder Eindrücken und/oder Einsinken lassen dieser Folie in die Vertiefungen der Matrize,
d) Beaufschlagen der Folie mit einer flüssigen Wasch- oder Reinigungsmittelzusammensetzung, umfassend eine flüssige Matrix und darin dispergierte Feststoffteilchen,
e) Zuführen einer weiteren wasserlöslichen oder wasserdispergierbaren Folie und Verschließen der tiefgezogenen Form mit dieser Folie,
dadurch gekennzeichnet, daß daß daß mindestens 70 Gew.-% der dispergierten Feststoffteilchen Teilchengrößen unterhalb 200 µm aufweisen.

Während das Einsinken lassen oder Eindrücken der plastisch deformierbaren Folie in Schritt c) des beanspruchten Verfahrens geeignete Vorgehensweisen zur Deformation dieser Folien darstellen, ist im Rahmen der vorliegenden Anmeldung dennoch ein Verfahren besonders bevorzugt, in welchem die Folie in Schritt c) unter Einwirkung eines Vakuums auf die plastisch deformierbare Folie tiefgezogen wird, welches vorzugsweise bis nach dem Abschluß des Verfahrens in Schritt e) bestehen bleibt und die Folie in der Vertiefung zurückbehält.

Das Verschließen eines erfindungsgemäßen Behälters in Schritt e) des vorgenannten Tiefziehverfahrens, kann wie auch in den übrigen beschriebenen Verfahren durch Verklebung oder Schmelzverklebung erfolgen, wobei beide Verfahren optional in Kombination mit einer zusätzlichen Druckeinwirkung durchgeführt werden können. Als Klebemittel eignen sich in Abhängigkeit von der Zusammensetzung der Folien neben den dem Fachmann bekannten Klebern ebenfalls Lösungsmittel, wie beispielsweise Wasser. Die Auftragung des Klebemittels auf die Folie erfolgt in einer bevorzugten Verfahrensvariante des letztgenannten Verfahrens vorzugsweise nach Schritt b) und/oder Schritt c) und/oder Schritt d).

Die Versiegelung kann jedoch auch durch Schmelzversiegelung oder Druckeinwirkung erfolgen. Um Wiederholungen zu vermeiden sei bezüglich der Schmelzversiegelung an dieser Stelle auf die ausführlichen Beschreibungen im Rahmen der Spritzguß- und Rotary-Die-Verfahren verwiesen. In einer bevorzugten Verfahrensvariante des Thermoformverfahrens erfolgt demnach das Verschließen in Schritt e) durch Temperatur- und/oder durch Druckeinwirkung.

In einer besonders bevorzugten Ausführungsform weist der wasserlösliche Behälter eine oder mehrere Prägung(en) und/oder einen oder mehrere Aufdruck(e) auf. Auch können die in dem Behälter umschlossenen Feststoffe derartige Prägungen oder Aufdrucke aufweisen. Die Prägung bzw. de Aufdruck kann neben Schriftzügen auch Muster, Formen usw. beinhalten. Auf diese Weise können beispielsweise Universalwaschmittel durch ein T-Shirt-Symbol, Colorwaschmittel durch ein Wollsymbol, Reinigungsmittel für das maschinelle Geschirrspülen durch Symbole wie Gläser, Teller, Töpfe, Pfannen usw. kenntlich gemacht werden. Der Kreativität von Produktmanagern sind hierbei keine Grenzen gesetzt. Als Schriftzüge eignen sich beispielsweise weiterhin der Name des Produktes oder des Herstellers.

Diese wasserlöslichen Folien können nach verschiedenen Herstellverfahren hergestellt werden. Hier sind prinzipiell Blas-, Kalandrier- und Gießverfahren zu nennen. Bei einem bevorzugten Verfahren werden die Folien dabei ausgehend von einer Schmelze mit Luft über einen Blasdorn zu einem Schlauch geblasen. Bei dem Kalandrierverfahren, das ebenfalls zu den bevorzugt eingesetzten Herstellverfahren gehört, werden die durch geeignete Zusätze plastifizierten Rohsfoffe zur Ausformung der Folien verdüst. Hier kann es insbesondere erforderlich sein, an die Verdüsungen eine Trocknung anzuschließen. Bei dem Gießverfahren, das ebenfalls zu den bevorzugten Herstellverfahren gehört, wird eine wäßrige Polymerzubereitung auf eine beheizbare Trockenwalze gegeben, nach dem Verdampfen des Wassers wird optional gekühlt und die Folie als Film abgezogen. Gegebenenfalls wird dieser Film vor oder während des Abziehens zusätzlich abgepudert.

Als Behältermaterialien kommen grundsätzlich alle Materialien infrage, die sich unter den gegebenen Bedingungen eines Waschvorgangs, Spülvorgangs oder Reinigungsvorgangs (Temperatur, pH-Wert, Konzentration an waschaktiven Komponenten) in wäßriger Phase vollständig oder teilweise lösen können. Die Polymer-Materialien können besonders bevorzugt den Gruppen (gegebenenfalls teilweise acetalisierter) Polyvinylalkohol, Polyvinylpyrrolidon, Polyethylenoxid, Gelatine, Cellulose und deren Derivate, Stärke und deren Derivate, insbesondere modifizierte Stärken, und Mischungen (Polymerblends, Verbünde, Koextrudate etc.) der genannten Materialien zugehören - siehe oben. Besonders bevorzugt sind Gelatine und Polyvinylalkohole sowie die genannten beiden Materialien jeweils im Verbund mit Stärke oder modifizierter Stärke. Es kommen auch anorganische Salze und Mischungen daraus als Materialien für die zumindest teilweise wasserlösliche Umhüllung infrage.

Erfindungsgemäß bevorzugt ist eine Ausführungsform, gemäß der der Behälter als ganzes Wasserlöslich ist, d. h. sich bei bestimmungsgemäßem Gebrauch beim Waschen oder maschinellen Reinigen, vollständig auflöst, wenn die für das Lösen vorgesehenen Bedingungen erreicht sind. Wesentlicher Vorteil dieser Ausführungsform ist, daß sich der Behälter innerhalb einer praktisch relevant kurzen Zeit - als nicht begrenzendes Beispiel lassen sich wenige Sekunden bis 5 min - unter genau definierten Bedingungen in der Reinigungsflotte zumindest Partiell lösen und damit entsprechend den Anforderungen den umhüllten Inhalt, d. h. das reinigungsaktive Material oder mehrere Materialien, in die Flotte einbringt.

In einer anderen, ebenfalls aufgrund vorteilhafter Eigenschaften bevorzugten Ausführungsform der Erfindung umfaßt der wasserlösliche Behälter weniger gut oder gar nicht wasserlösliche oder erst bei höherer Temperatur wasserlösliche Bereiche und gut wasserlösliche oder bei niedriger Temperatur wasserlösliche Bereiche. Mit anderen Worten: Der Behälter besteht nicht aus einem einheitlichen, in allen Bereichen die gleiche Wasserlöslichkeit aufweisenden Material, sondern aus Materialien unterschiedlicher Wasserlöslichkeit. Dabei sind Bereiche guter Wasserlöslichkeit einerseits zu unterscheiden von Bereichen mit weniger guter Wasserlöslichkeit, mit schlechter oder gar fehlender Wasserlöslichkeit oder von Bereichen, in denen die Wasserlöslichkeit erst bei höherer Temperatur oder erst bei einem anderen pH-Wert oder erst bei einer geänderten Elektrolytkonzentration den gewünschten Wert erreicht, andererseits. Dies kann dazu führen, daß sich bei bestimmungsgemäßem Gebrauch unter einstellbaren Bedingungen bestimmte Bereiche des Behälters lösen, während andere Bereiche intakt bleiben. So bildet sich ein mit Poren oder Löchern versehener Behälter, in den Wasser und/oder Flotte eindringen, waschaktive, spülaktive oder reinigungsaktive Inhaltsstoffe lösen und aus dem Behälter ausschleusen kann. In gleicher Weise können auch Systeme in Form von Mehrkammer-Behältern oder in Form von ineinander angeordneten Behältern ("Zwiebelsystem") vorgesehen werden. So lassen sich Systeme mit kontrollierter Freisetzung der waschaktiven, spülaktiven oder reinigungsaktiven Inhaltsstoffe herstellen.

Zur Ausbildung derartiger Systeme unterliegt die Erfindung keinen Beschränkungen. So können Behälter vorgesehen werden, in denen ein einheitliches Polymer-Material kleine Bereiche eingearbeiteter Verbindungen (beispielsweise von Salzen) umfaßt, die schneller wasserlöslich sind als das Polymer-Material. Andererseits können auch mehrere Polymer-Materialien mit unterschiedlicher Wasserlöslichkeit gemischt werden (Polymer-Blend), so daß das schneller lösliche Polymer-Material unter definierten Bedingungen durch Wasser oder die Flotte schneller desintegriert wird als das langsamer lösliche.

Es entspricht einer besonders bevorzugten Ausführungsform der Erfindung, daß die weniger gut wasserlöslichen Bereiche oder gar nicht wasserlöslichen Bereiche oder erst bei höherer Temperatur wasserlöslichen Bereiche der Behälter Bereiche aus einem Material sind, das chemisch im wesentlichen demjenigen der gut wasserlöslichen Bereiche oder bei niedrigerer Temperatur wasserlöslichen Bereiche entspricht, jedoch eine höhere Schichtdicke aufweist und/oder einen geänderten Polymerisationsgrad desselben Polymers aufweist und/oder einen höheren Vernetzungsgrad derselben Polymerstruktur aufweist und/oder einen höheren Acetalisierungsgrad (bei PVAL, beispielsweise mit Sacchariden, Polysacchariden, wie Stärke) aufweist und/oder einen Gehalt an wasserunlöslichen Salzkomponenten aufweist und/oder einen Gehalt an einem wasserunlöslichen Polymeren aufweist. Selbst unter Berücksichtigung der Tatsache, daß sich die Behälter nicht vollständig lösen, können so portionierte Wasch- oder Reinigungsmittelzusammensetzungen gemäß der Erfindung bereitgestellt werden, die vorteilhafte Eigenschaften bei der Freisetzung der Wasch- oder Reinigungsmittelzusammensetzung in die jeweilige Flotte aufweisen.

Das wasserlösliche Behältermaterial ist vorzugsweise transparent. Unter Transparenz ist im Sinne dieser Erfindung zu verstehen, daß die Durchlässigkeit innerhalb des sichtbaren Spektrums des Lichts (410 bis 800 nm) größer als 20%, vorzugsweise größer als 30%, äußerst bevorzugt größer als 40% und insbesondere größer als 50% ist. Sobald somit eine Wellenlänge des sichtbaren Spektrums des Lichtes eine Durchlässigkeit größer als 20% aufweist, ist es im Sinne der Erfindung als transparent zu betrachten.

Erfindungsgemäße portionierte Wasch- oder Reinigungsmittelzusammensetzungen, die in transparenten Behältern verpackt sind, können als wesentlichen Bestandteil ein Stabilisierungsmittel enthalten. Stabilisierungsmittel im Sinne der Erfindung sind Materialien, die die Reinigungsmittelbestandteile in ihren wasserlöslichen, transparenten Behältern vor Zersetzung oder Desaktivierung durch Lichteinstrahlung schützen. Als besonders geeignet haben sich hier Antioxidantien, UV-Absorber und Fluoreszensfarbstoffe erwiesen.

Besonders geeignete Stabilisierungsmittel im Sinne der Erfindung sind die Antioxidantien. Um unerwünschte, durch Lichteinstrahlung und damit radikalischer Zersetzung verursachte Veränderungen an den Formulierungen zu verhindern, können die Formulierungen Antioxidantien enthalten. Als Antioxidantien können dabei beispielsweise durch sterisch gehinderte Gruppen substituierte Phenole, Bisphenole und Thiobisphenole verwendet werden. Weitere Beispiele sind Propylgallat, Butylhydroxytoluol (BHT), Butylhydroxyanisol (BHA), t-Butylhydrochinon (TBHQ), Tocopherol und die langkettigen (C8-C22) Ester der Gallussäure, wie Dodecylgallat. Andere Substanzklassen sind aromatische Amine, bevorzugt sekundäre aromatische Amine und substituierte p-Phenylendiamine, Phosphorverbindungen mit dreiwertigem Phosphor wie Phosphine, Phosphite und Phosphonite, Zitronensäuren und Zitronensäurederivate, wie Isopropylcitrat, Endiol-Gruppen enthaltende Verbindungen, sogenannte Reduktone, wie die Ascorbinsäure und ihre Derivate, wie Ascorbinsäurepalmitat, Organoschwefelverbindungen, wie die Ester der 3,3'-Thiodipropionsäure mit C₁₋₁₈-Alkanolen, insbesondere C₁₀₋₁₈-Alkanolen, Metallionen-Desaktivatoren, die in der Lage sind, die Autooxidation katalysierende Metallionen, wie z.B. Kupfer, zu komplexieren, wie Nitrilotriessigsäure und deren Abkömmlinge und ihre Mischungen. Antioxidantien können in den Formulierungen in Mengen bis 35 Gew.-%, vorzugsweise bis 25 Gew.-%, besonders bevorzugt von 0,01 bis 20 und insbesondere von 0,03 bis 20 Gew.-% enthalten sein.

Eine weitere Klasse bevorzugt einsetzbarer Stabilisierungsmittel sind die UV-Absorber. UV-Absorber können die Lichtbeständigkeit der Rezepturbestandteile verbessern. Darunter sind organische Substanzen (Lichtschutzfilter) zu verstehen, die in der Lage sind, ultraviolette Strahlen zu absorbieren und die aufgenommene Energie in Form längerwelliger Strahlung, z.B. Wärme wieder abzugeben. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, wie beispielsweise das wasserlösliche Benzolsulfonsäure-3-(2H-benzotriazol-2-yl)-4-hydroxy-5-(methylpro-pyl)mononatriumsalz (Cibafast^{®} H), in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet. Besondere Bedeutung haben Biphenyl- und vor allem Stilbenderivate, die kommerziell als Tinosorb^{®} FD oder Tinosorb^{®} FR ex Ciba erhältlich sind. Als UV-B-Absorber sind zu nennen 3-Benzylidencampher bzw. 3-Benzylidennorcampher und dessen Derivate, z.B. 3-(4-Methylbenzyliden)campher; 4-Aminobenzoesäurederivate, vorzugsweise 4-(Dimethylamino)benzoesäure-2-ethylhexylester, 4-(Dimethylamino)benzoesäure-2-octyl-ester und 4-(Dimethylamino)benzoesäureamylester; Ester der Zimtsäure, vorzugsweise 4-Methoxyzimtsäure-2-ethylhexylester, 4-Methoxyzimtsäurepropylester, 4-Methoxyzimtsäureisoamylester, 2-Cyano-3,3-phenylzimtsäure-2-ethylhexylester (Octocrylene); Ester der Salicylsäure, vorzugsweise Salicylsäure-2-ethylhexylester, Salicylsäure-4-isopropyl-benzylester, Salicylsäurehomomenthylester; Derivate des Benzophenons, vorzugsweise 2-Hydroxy-4-methoxybenzophenon, 2-Hydroxy-4-methoxy-4'-methylbenzophenon, 2,2'-Dihydroxy-4-methoxybenzophenon; Ester der Benzalmalonsäure, vorzugsweise 4-Methoxybenzmalonsäuredi-2-ethylhexylester; Triazinderivate, wie z.B. 2,4,6-Trianilino-(p-carbo-2'-ethyl-1'-hexyloxy)-1,3,5-triazin und Octyl Triazon oder Dioctyl Butamido Triazone (Uvasorb^{®} HEB); Propan-1,3-dione, wie z.B. 1-(4-tert.Butylphenyl)-3-(4'methoxy-phenyl)propan-1,3-dion; Ketotricyclo(5.2.1.0)decan-Derivate. Weiterhin geeignet sind 2-Phenylbenzimidazol-5-sulfonsäure und deren Alkali-, Erdalkali-, Ammonium-, Alkylammonium-, Alkanolammonium- und Glucammoniumsalze; Sulfonsäurederivate von Benzophenonen, vorzugsweise 2-Hydroxy-4-methoxybenzophenon-5-sulfonsäure und ihre Salze; Sulfonsäurederivate des 3-Benzylidencamphers, wie z.B. 4-(2-Oxo-3-bornylidenmethyl)benzol-sulfonsäure und 2-Methyl-5-(2-oxo-3-bornyliden)sulfonsäure und deren Salze.

Als typische UV-A-Filter kommen insbesondere Derivate des Benzoylmethans in Frage, wie beispielsweise 1-(4'-tert.Butylphenyl)-3-(4'-methoxyphenyl)propan-1,3-dion, 4-tert.-Butyl-4'-methoxydibenzoylmethan (Parsol 1789), 1-Phenyl-3-(4'-isopropylphenyl)-propan-1,3-dion sowie Enaminverbindungen. Die UV-A und UV-B-Filter können selbstverständlich auch in Mischungen eingesetzt werden. Neben den genannten löslichen Stoffen kommen für diesen Zweck auch unlösliche Lichtschutzpigmente, nämlich feindisperse, vorzugsweise nanoisierte Metalloxide bzw. Salze in Frage. Beispiele für geeignete Metalloxide sind insbesondere Zinkoxid und Titandioxid und daneben Oxide des Eisens, Zirkoniums, Siliciums, Mangans, Aluminiums und Cers sowie deren Gemische. Als Salze können Silicate (Talk), Bariumsulfat oder Zinkstearat eingesetzt werden. Die Oxide und Salze werden in Form der Pigmente bereits für hautpflegende und hautschützende Emulsionen und dekorative Kosmetik verwendet. Die Partikel sollten dabei einen mittleren Durchmesser von weniger als 100 nm, vorzugsweise zwischen 5 und 50 nm und insbesondere zwischen 15 und 30 nm aufweisen. Sie können eine sphärische Form aufweisen, e$ können jedoch auch solche Partikel zum Einsatz kommen, die eine ellipsoide oder in sonstiger Weise von der sphärischen Gestalt abweichende Form besitzen. Die Pigmente können auch oberflächenbehandelt, d.h. hydrophilisiert oder hydrophobiert vorliegen. Typische Beispiele sind gecoatete Titandioxide, wie z.B. Titandioxid T 805 (Degussa) oder Eusolex^{®} T2000 (Merck). Als hydrophobe Coatingmittel kommen dabei vor allem Silicone und dabei speziell Trialkoxyoctylsilane oder Simethicone in Frage. Vorzugsweise wird mikronisiertes Zinkoxid verwendet.

UV-Absorber können in den Wasch- oder Reinigungsmittelzusammensetzungen in Mengen bis 5 Gew.%, vorzugsweise bis 3 Gew.-%, besonders bevorzugt von 0,01 bis 2,0 und insbesondere von 0,03 bis 1 Gew.-% enthalten sein.

Eine weitere bevorzugt einzusetzende Klasse von Stabilisierungsmitteln sind die Fluoreszenzfarbstoffe. Zu ihnen zählen die 4,4'-Diamino-2,2'-stilbendisulfonsäuren (Flavonsäuren), 4,4'-Distyrylbiphenylen, Methyl-umbelliferone, Cumarine, Dihydrochinolinone, 1,3-Diarylpyrazoline, Naphthalsäureimide, Benzoxazol-, Benzisoxazol- und Benzimidazol-Systeme sowie der durch Hetero-cyclen substituierten Pyrenderivate. Von besonderer Bedeutung sind dabei die Sulfonsäuresalze der Diaminostilben-Derivate, sowie polymere Fluoreszenzstoffe.

Fluoreszenzstoffe können in den Formulierungen in Mengen bis 5 Gew.-%, vorzugsweise bis 1 Gew.-%, besonders bevorzugt von 0,01 bis 0,5 und insbesondere von 0,03 bis 0,1 Gew.-% enthalten sein.

In einer bevorzugten Ausführungsform werden die vorgenannten Stabilisierungsmittel in beliebigen Mischungen eingesetzt. Die Stabilisierungsmittel werden in Mengen bis 40 Gew.-%, vorzugsweise bis 30 Gew.-%, besonders bevorzugt von 0,01 bis 20 Gew.-%, insbesondere von 0,02 bis 5 Gew.-% eingesetzt.

Wie bereits weiter oben erwähnt, können erfindungsgemäße portionierte Wasch- oder Reinigungsmittelzusammensetzungen so bereitgestellt werden, daß die Verpackung einerseits wasserlöslich und andererseits dicht schließend, d.h. zur Umgebung hin abgeschlossen ist. Dabei lassen sich erfindungsgemäß zwei Ausführungsformen verwirklichen:

So entspricht es einer bevorzugten Ausführungsform der Erfindung, daß der/die Behälter abgeschlossen ist/sind und wenigstens ein mit der Wasch- oder Reinigungsmittelzusammensetzung nicht reagierendes Gas enthält/enthalten, weiter bevorzugt in einer Menge enthält/enthalten, daß der Gesamtdruck innerhalb des/der abgeschlossenen Behälter(s) über dem Außendruck liegt, noch weiter bevorzugt um mindestens 1 mbar über dem Außendruck liegt. Ganz besonders bevorzugte Ausführungsformen dieser Portionen gemäß der Erfindung enthalten wenigstens ein mit der Wasch- oder Reinigungsmittelzusammensetzung nicht reagierendes Gas in einer solchen Menge, daß der Gesamtdruck innerhalb der abgeschlossenen Behälter um mindestens 5 mbar, noch weiter bevorzugt um mindestens 10 mbar, ganz besonders bevorzugt im Bereich von 10 mbar bis 50 mbar über dem Außendruck liegt. Ganz besonders im Fall der bevorzugten Ausführungsformen mit deutlich über dem Außendruck liegenden Gesamtdruck innerhalb der Behälter kann das optische Erscheinungsbild, insbesondere von Folienbeuteln deutlich verbessert werden. Die entsprechend verpackten Zusammensetzungen weisen eine erhöhte Eigenstabilität auf und vermitteln den Eindruck eines prall gefüllten, "kraftvollen" Mittels. Im Zusammenhang mit der vorliegenden Erfindung wird unter "Außendruck" der Druck verstanden, der auf der Umgebungsseite der Behälter herrscht und auf das Äußere der Behälter wirkt, und zwar zum Zeitpunkt des Befüllens der Behälter mit dem jeweiligen wenigstens einen Gas.

Erfindungsgemäß können die Behälter entweder ein oder mehrere Gase enthalten. In der Praxis ist die Beaufschlagung der Behälter mit einem Gas aufgrund der damit verbundenen geringeren Kosten bevorzugt. Bevorzugte Wasch- oder Reinigungsmittel-Portionen gemäß der Erfindung umfassen als Gas(e) wenigstens ein Gas, das gewählt ist aus der Gruppe N₂, Edelgas(e), CO₂, N₂O, O₂, H₂, Luft, gasförmige Kohlenwasserstoffe, ganz besonders N₂, das überall preiswert verfügbar ist. Die genannten Gase sind vorteilhafterweise gegenüber den Komponenten der waschaktiven Zubereitung inert und werden daher im Rahmen der vorliegenden Erfindung auch mitunter als "Inertgase" bezeichnet.

Gemäß einer weiteren, ebenfalls bevorzugten Ausführungsform ist/sind der/die Behälter abgeschlossen und enthalten wenigstens eine Substanz, die bei Reaktion mit Wasser ein mit der/den waschaktiven Zubereitung(en) nicht reagierendes Gas in einer Menge freisetzt, daß der Gesamtdruck innerhalb der geschlossenen Behälter ansteigt. Von besonderem Vorteil sind solche Portionen, in denen die in dem/den Behälter(n) enthaltene wenigstens eine Substanz bei Reaktion mit Wasser das wenigstens eine Gas in einer Menge freisetzt, daß der Gesamtdruck innerhalb der geschlossenen Behälter um mindestens 1 mbar über den Außendruck ansteigt, bevorzugt um mindestens 5 mbar, besonders bevorzugt um einen Wert im Bereich von 5 bis 50 mbar höher liegt als der Außendruck. Diese Ausführungsform ist von besonderem Vorteil dahingehend, daß ihre Herstellung gegenüber derjenigen Ausführungsform, in der das Gas im abgeschlossenen Behälter enthalten ist, stark vereinfacht ist, da nur die wenigstens eine Substanz zugegeben werden muß, die bei Kontakt mit Feuchtigkeit/Wasser im abgeschlossenen Behälter wenigstens ein Gas erzeugt. Weiter wird etwaige, in den Behälter eingedrungene Feuchtigkeit gleich von der zur Reaktion mit Wasser befähigten Substanz aufgenommen und umgesetzt und steht daher für eine Verschlechterung der Qualität der Komponenten der Wasch- oder Reinigungsmittelzusammensetzung nicht mehr zur Verfügung. Denkbar sind auch Mischformen der Portionen, in denen von Anfang an sowohl (wenigstens) ein Gas im Behälter ist als auch eine mit Wasser zur Reaktion befähigte Substanz enthalten ist.

Gemäß einer bevorzugten Ausführungsform der Erfindung ist die mit Wasser ein Gas freisetzende Substanz Bestandteil der Wasch- oder Reinigungsmittelzusammensetzung und ist - noch mehr bevorzugt - eine hygroskopische Substanz, die mit den Komponenten der Wasch- oder Reinigungsmittelzusammensetzung verträglich ist. Vorzugsweise wird eine derartige Substanz getrennt von der erfindungsgemäßen flüssigen Wasch- oder Reinigungsmittelzusammensetzung in den wasserlöslichen oder wasserdispergierbaren Behälter dosiert, wobei dieser Behälter vorzugsweise bereits wenige Sekunden, insbesondere innerhalb von 10 Sekunden, nach dem Konakt der gasfreisetzenden Substanz mit der Reinigungsmittelzusammensetzung verschlossen wird. Die Freisetzung des Gases erhöht dann den Innendruck innerhalb der Behälter auf einen Wert oberhalb des Atmosphärendrucks und erzielt so die oben genannten Vorteile.

Beispiele solcher Substanzen sind, ohne daß dies als beschränkend zu verstehen ist, Substanzen, die gewählt sind aus der Gruppe gebundenes Wasserstoffperoxid enthaltende Substanzen, -O-O- Gruppen enthaltende Substanzen, O-C-O- Gruppen enthaltende Substanzen, Hydride und Carbide, weiter bevorzugt eine Substanz ist, die gewählt ist aus der Gruppe Percarbonate (besonders bevorzugt Natriumpercarbonat), Persulfate, Perborate, Persäuren, M_{A}M_{B}H₄, worin M_{A} für ein Alkalimetall (besonders bevorzugt für Li oder Na) steht (beispielsweise LiAlH₄, NaBH₄, NaAlH₄) und M_{B} für B oder Al steht, oder M^{I}₂C₂ oder M^{II}C₂, worin M' für ein einwertiges Metall und M" für ein zweiwertiges Metall steht (beispielsweise CaC₂).

Bezüglich der bevorzugten Partikelgrößen, der Mengen der einzelnen Inhaltsstoffe, bevorzugter weiterer Inhaltsstoffe und bevorzugter Parameter für die Behälter gilt für die beschriebenen erfindungsgemäßen Verfahren analog das für die erfindungsgemäßen Mittel Gesagte.

## Patentansprüche

1. Portionierte flüssige Wasch- oder Reinigungsmittelzusammensetzung in einem wasserlöslichen oder wasserdispergierbaren Behälter, umfassend eine flüssige Phase und ein oder mehrere darin enthaltene(s) Feststoffteilchen, **dadurch gekennzeichnet, daß** das/die enthaftene(n) Feststoffteilchen beschichtet ist/sind und eine Teilchengröße zwischen 12000 und 20000 µm aufweist/aufweisen.

2. Portionierte Wasch- oder Reinigungsmittelzusammensetzung nach Anspruch 1, **dadurch gekennzeichnet, daß** die flüssige Phase der Wasch- oder Reinigungsmittelzusammensetzung eine Viskosität (Brookfield-Viskosirneter LVT-II bei 20 U/min und 20°C, Spindel 3) von 500 bis 100.000 mPas, vorzugsweise von 1000 bis 50.000 mPas, besonders bevorzugt von 1200 bis 10000 mPas und insbesondere von 1300 bis 5000 mPas aufweist.

3. Portionierte Wasch- oder Reinigungsmittelzusammensetzung nach einem der Ansprüche 1 bis 2, **dadurch gekennzeichnet, daß** die flüssige Phase wasserhaltig ist und einen Wassergehalt oberhalb 6 Gew.-%, bevorzugt zwischen 10 bis 70 Gew.-%, besonders bevorzugt zwischen 20 und 60 Gew.-% und insbesondere zwischen 30 und 50 Gew.-%. jeweils bezogen auf das Gesamtgewicht der Wasch- oder Reinigungsmittelzusammensetzung, aufweist.

4. Portionierte Wasch- oder Reinigungsmittslzusammensetzung nach einem der Ansprüche 1 bis 3, **dadurch gekennzeichnet, daß** die flüssige Phase wasserfrei ist und einen Wassergehalt unterhalb 6 Gew.-%. bevorzugt zwischen 0,5 und 5 Gew.-%, besonders bevorzugt zwischen 1 und 4 Gew.-%, jeweils bezogen auf das Gesamtgewicht der Wasch- oder Reinigungsmittelzusammensetzung, aufweist.

5. Portionierte Wasch- oder Reinigungsmittelzusammensetzung nach einem der Ansprüche 1 bis 4, **dadurch gekennzeichnet, daß** sie nichtwäßrige(s) Lösungsmittel in Mengen von 0,1 bis 70 Gew.-%, vorzugsweise von 0,5 bis 60 Gew.-%, besonders bevorzugt von 1 bis 50 Gew.-%, ganz besonders bevorzugt von 2 bis 40 Gew.-% und insbesondere von 2,5 bis 30 Gew.-%, jeweils bezogen auf die gesamte Zusammensetzung, enthält, wobei bevorzugte(s) nichtwäßrige(s) Lösungsmittel ausgewählt ist/sind aus der Gruppe der bei Raumtemperatur flüssigen nichtionischen Tenside, der Polyethylenglycole und Polypropylenglycole, Glycerin, Gtycerincarbonat, Triacetin, Ethylenglycol, Propylengylcol, Propylencarbonat, Hexylenglycol, Ethanol sowie n-Propanol und/oder iso-Propanol.

6. Portionierte Wasch- oder Reinigungsmittelzusammensetzung nach einem der Ansprüche 1 bis 5, **dadurch gekennzeichnet, daß** sie zusätzlich 0,01 bis 5 Gew.-%, vorzugsweise 0,02 bis 4 Gew.-%, besonders bevorzugt 0,05 bis 3 Gew.-% und insbesondere 0,1 bis 1.5 Gew.-%, eines Verdickungsmittels, vorzugsweise eines polymeren Verdickungsmittels, enthalten, wobei als Verdickungsmittel Hydroxyethylcellulose und/oder Hydroxypropylcellulose und/oder Verdickungsmittel aus der Gruppe der Polysaccharide, vorzugsweise Xanthan, der Polyurethane oder der modifizierten Polyacrylate unter besonderer Bevorzugung von Verdickungsmitteln der Formel XVII. 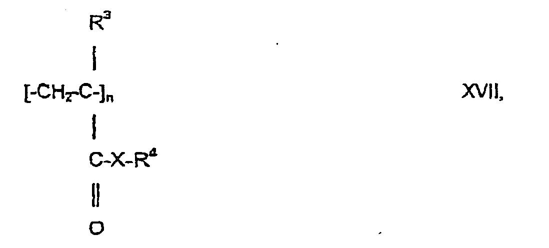 in der R³ für H oder einen verzweigten oder unverzweigten C₁₋₄-Alk(en)ylrest, X für N-R⁵ oder O, R⁴ für einen gegebenenfalls alkoxylierten verzweigten oder unverzweigten, evtl. substituierten C₈₋₂₂₋Alk(en)ylrest, R⁵ für H oder R⁴ und n für eine natürliche Zahl steht, bevorzugt sind.

7. Portionierte Wasch- oder Reinigungsmittelzusammensetzung nach einem der Ansprüche 1 bis 6, **dadurch gekennzeichnet, daß** das/die enthaltene(n) Feststoffteilchen und/oder die flüssige Matrix mindestens eine Aktivsubstanz aus der Gruppe der aus der Gruppe der Bleichmittel, Bleichaktivatoren, Polymere, Gerüststoffe, Tenside, Enzyme, Elektrolyte, pH-Stellmittel, Duftstoffe, Parfümträger, Farbstoffe, Hydrotrope, Schauminhibitoren, Antiredepositionsmittel, optischen Aufheller. Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Phobier- und Imprägniermittel, Quell- und Schiebefestmittel, nichtwässrigen Lösungsmittel, Weichspüler, Proteinhydrolysatte, sowie UV-Absorber enthält/enthalten.

8. Portionierte Wasch- oder Reinigungsmittelzusammensetzung nach einem der Ansprüche 1 bis 7, **dadurch gekennzeichnet, daß** das/die dispergierte(n) Feststoffteilchen mindestens ein Polymer, vorzugsweise eine Polymer aus der Gruppe der homo- oder copolymeren Carbonsäuren und/oder der homo- oder copolymeren Polycarbonsäuren und/oder der homo- oder copoylmeren Sulfonsäuren, in Mengen von 1 bis 70 Gew.-%, vorzugsweise von 2 bis 60 Gew.-% und insbesondere von 5 bis Gew.-%, jeweils bezogen auf das Gesamtgewicht des/der Polymer-haltigen dispergierten Feststoffteilchen, enthält.

9. Portionierte Wasch- oder Reinigungsmittelzusammensetzung nach einem der Ansprüche 1 bis 8, **dadurch gekennzeichnet, daß** das/die dispergierte(n) Feststoffteilchen mindestens ein Tensid, vorzugsweise ein anionisches, besonders bevorzugt ein Alkylbenzolsulfonat, oder ein nichtionisches Tensid, bevorzugt ein alkoxyliertes Niotensid, insbesondere ein ethoxyliertes Niotensid, in Mengen von 0,5 bis 30 Gew.-%, vorzugsweise von 1 bis 25 Gew.-% und insbesondere von 2 bis 20 Gew.-%, jeweils bezogen auf das Gesamtgewicht des/der Tensid-haltigen dispergierten Feststoffteilchen, enthält/enthalten.

10. Portionierte Wasch- oder Reinigungsmittelzusammensetzung nach einem der Ansprüche 1 bis 9, **dadurch gekennzeichnet, daß** das/die dispergierte(n) Feststoffteilchen mindestens ein Bleichmittel, vorzugsweise aus der Gruppe der in Wasser H₂O₂ liefernden Verbindungen, besonders bevorzugt aus der Gruppe Natriumperborattetrahydrat, Natriumperboratmonohydrat oder Natriurnperrarbonat, in Mengen von 0,1 bis 50 Gew.-%, vorzugsweise von 0,5 bis 40 Gew.-% und insbesondere von 1,0 bis 30 Gew.-%, jeweils bezogen auf das Gesamtgewicht des/der Bleichmittel-haltigen dispergierten Feststoffteilchen, enthält/enthalten.

11. Portionierte Wasch- oder Reinigungsmittelzusammensetzung nach einem der Ansprüche 1 bis 10, **dadurch gekennzeichnet, daß** das/die dispergierte(n) Feststoffteilchen mindestens ein Enzym, vorzugsweise aus der Gruppe der Proteasen, Amylasen oder Lipasen, in Mengen von 0,01 bis 15 Gew.-%, vorzugsweise von 0,1 bis 10 Gew.-% und insbesondere von 0,2 bis 7 Gew.-%, jeweils bezogen auf das Gesamtgewicht des/der Enzym-haltigen dispergierten Feststoffteilchen, enthält/enthalten.

12. Portionierte Wasch- oder Reinigungsmittelzusammensetzung nach einem der Ansprüche 1 bis 11, **dadurch gekennzeichnet, daß** der wasserlösliche oder wasserdispergierbare Behälter ein oder mehrere wasserlösliche(s) Polymer(e), vorzugsweise ein Material aus der Gruppe (gegebenenfalls acetalisierter) Polyvinylalkohol (PVAL), Polyvinylpyrrolidon, Polyethylenoxid, Gelatine, Cellulose, und deren Derivate, vorzugsweise Hydroxypropylmethylcellulose, und deren Mischungen umfaßt.

13. Portionierte Wasch- oder Reinigungsmittelzusammensetzung nach einem der Ansprüche 1 bis 12, **dadurch gekennzeichnet, daß** der wasserlösliche oder wasserdispergierbare Behälter einen Polyvinylalkohol umfaßt, dessen Hydrolysegrad 70 bis 100 Mol-%, vorzugsweise 80 bis 90 Mol-%, besonders bevorzugt 81 bis 89 Mol-% und insbesondere 82 bis 88 Mol-% beträgt.

14. Portionierte Wasch- oder Reinigungsrnittelzusammensetzung nach einem der Ansprüche 1 bis 13, **dadurch gekennzeichnet, daß** der wasserlösliche oder wasserdispergierbare Behälter einen Polyvinylalkohol umfaßt, dessen Molekulargewicht im Bereich von 10.000 bis 100.000 gmol⁻¹. vorzugsweise von 11.000 bis 90.000 gmol⁻¹, besonders bevorzugt von 12.000 bis 80.000 gmol⁻¹ und insbesondere von 13.000 bis 70.000 gmol⁻¹ liegt.

15. Portionierte Wasch- oder Reinigungsmittelzusammensetzung nach einem der Ansprüche 1 bis 14, **dadurch gekennzeichnet, daß** der wasserlösliche oder wasserdispergierbare Behälter ein Folienbeutel ist und die Folie eine Dicke von 1 bis 150 µm, vorzugsweise von 2 bis 100 µm, besonders bevorzugt von 5 bis 75 µm und insbesondere von 10 bis 50 µm, aufweist.

16. Portionierte Wasch- oder Reinigungsmittelzusammensetzung nach einem der Ansprüche 1 bis 15, **dadurch gekennzeichnet, daß** der wasserlösliche oder wasserdispergierbare Behälter einen Spritzguß- oder Tiefzieh- oder Blasformkörper umfaßt, dessen Wand eine Dicke von 50 bis 300 µm, vorzugsweise von 70 bis 200 µm und insbesondere von 80 bis 150 µm aufweist.

17. Verfahren zur Herstellung portionierter flüssiger Wasch- oder Reinigungsmittelzusammensetzungen, bei dem mindestens ein Feststoff in einer flüssigen Matrix dispergiert und nachfolgend in einem wasserlöslichen oder wasserdispergierbaren Behälter verpackt wird, **dadurch gekennzeichnet, daß** der/die dispergierte(n) Feststoff beschichtet ist/sind und eine Teilchengröße zwischen 12000 und 20000 µm aufweist/aufweisen.

## Claims

1. Portioned liquid detergent composition in a water-soluble or water-dispersible container, comprising a liquid phase and one or more solid particle(s) contained therein, **characterized in that** the solid particle(s) present is/are coated and has/have a particle size between 12 000 and 20 000 µm.

2. Portioned detergent composition according to Claim 1, **characterized in that** the liquid phase of the detergent composition has a viscosity (Brookfield viscometer LVT-II at 20 rpm and 20°C, spindle 3) of from 500 to 100 000 mPas, preferably from 1000 to 50 000 mPas, more preferably from 1200 to 10 000 mPas and in particular from 1300 to 5000 mPas.

3. Portioned detergent composition according to one of Claims 1 to 2, **characterized in that** the liquid phase is aqueous and has a water content above 6% by weight, preferably between 10 and 70% by weight, more preferably between 20 and 60% by weight and in particular between 30 and 50% by weight, based in each case on the total weight of the detergent composition.

4. Portioned detergent composition according to one of Claims 1 to 3, **characterized in that** the liquid phase is anhydrous and has a water content below 6% by weight, preferably between 0.5 and 5% by weight, more preferably between 1 and 4% by weight, based in each case on the total weight of the detergent composition.

5. The portioned detergent composition according to one of Claims 1 to 4, **characterized in that** it comprises nonaqueous solvent(s) in amounts of from 0.1 to 70% by weight, preferably of from 0.5 to 60% by weight, more preferably of from 1 to 50% by weight, even more preferably of from 2 to 40% by weight and in particular of from 2.5 to 30% by weight, based in each case on the overall composition, preferred nonaqueous solvent(s) being selected from the group of the noninonic surfactants liquid at room temperature, the polyethylene glycols and polypropylene glycols, glycerol, glyceryl carbonate, triacetin, ethylene glycol, propylene glycol, propylene carbonate, hexylene glycol, ethanol and n-propanol and/or isopropanol.

6. Portioned detergent composition according to one of Claims 1 to 5, **characterized in that** it additionally contains from 0.01 to 5% by weight, preferably from 0.02 to 4% by weight, more preferably from 0.05 to 3% by weight and in particular from 0.1 to 1.5% by weight, of a thickener, preferably of a polymeric thickener, preferred thickeners being hydroxyethylcellulose and/or hydroxypropylcellulose and/or thickeners from the group of the polysaccharides, preferably xanthan, of the polyurethanes or of the modified polyacrylates, with particular preference thickeners of the formula XVII 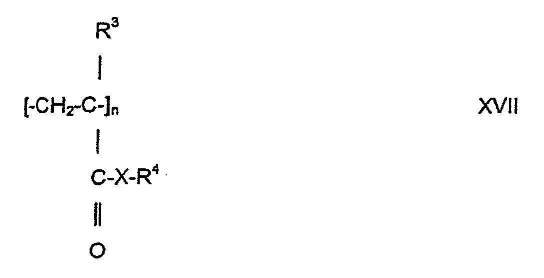 in which R³ is H or a branched or unbranched C₁₋₄₋alk(en)yl radical, X is N-R⁵ or O, R⁴ is an optionally alkoxylated, branched or unbranched, possibly substituted C₈₋₂₂-alk(en)yl radical, R⁵ is H or R⁴, and n is a natural number.

7. Portioned detergent composition according to one of Claims 1 to 6, **characterized in that** the solid particle(s) and/or the liquid matrix present comprise(s) at least one active substance from the group of the bleaches, bleach activators, polymers, builders, surfactants, enzymes, electrolytes, pH modifiers, fragrances, perfume carriers, dyes, hydrotropes, foam inhibitors, antiredeposition agents, optical brighteners, graying inhibitors, shrink preventatives, anticrease agents, dye transfer inhibitors, antimicrobial active ingredients, germicides, fungicides, antioxidants, corrosion inhibitors, antistats, repellency and impregnation agents, swelling and antislip agents, nonaqueous solvents, fabric softeners, protein hydrolyzates and UV absorbers.

8. Portioned detergent composition according to one of Claims 1 to 7, **characterized in that** the dispersed solid particle(s) contain(s) at least one polymer, preferably a polymer from the group of the homo- or copolymeric carboxylic acids and/or of the homo- or copolymeric polycarboxylic acids and/or of the homo- or copolymeric sulfonic acids, in amounts of from 1 to 70% by weight, preferably of from 2 to 60% by weight and in particular of from 5 to % by weight, based in each case on the total weight of the polymer-containing dispersed solid particle(s).

9. Portioned detergent composition according to one of Claims 1 to 8, **characterized in that** the dispersed solid particle(s) contain(s) at least one surfactant, preferably an anionic surfactant, more preferably an alkylbenzenesulfonate, or a nonionic surfactant, preferably an alkoxylated nonionic surfactant, in particular an ethoxylated nonionic surfactant, in amounts of from 0.5 to 30% by weight, preferably from 1 to 25% by weight and in particular from 2 to 20% by weight, based in each case on the total weight of the surfactant-containing dispersed solid particle(s).

10. Portioned detergent composition according to one of Claims 1 to 9, **characterized in that** the dispersed solid particle(s) contain(s) at least one bleach, preferably from the group of the compounds which supply H₂O₂ in water, more preferably from the group of sodium perborate tetrahydrate, sodium perborate monohydrate or sodium percarbonate, in amounts of from 0.1 to 50% by weight, preferably from 0.5 to 40% by weight and in particular from 1.0 to 30% by weight, based in each case on the total weight of the bleach-containing dispersed solid particle(s).

11. Portioned detergent composition according to one of Claims 1 to 10, **characterized in that** the dispersed solid particle(s) contain(s) at least one enzyme, preferably from the group of the proteases, amylases or lipases, in amounts of from 0.01 to 15% by weight, preferably from 0.1 to 10% by weight and in particular from 0.2 to 7% by weight, based in each case on the total weight of the enzyme-containing dispersed solid particle(s).

12. Portioned detergent composition according to one of Claims 1 to 11, **characterized in that** the water-soluble or water-dispersible container comprises one or more water-soluble polymer(s), preferably a material from the group of (optionally acetalized) polyvinyl alcohol (PVAL), polyvinylpyrrolidone, polyethylene oxide, gelatin, cellulose and derivatives thereof, preferably hydroxypropylmethylcellulose, and mixtures thereof.

13. Portioned detergent composition according to one of Claims 1 to 12, **characterized in that** the water-soluble or water-dispersible container comprises a polyvinyl alcohol whose degree of hydrolysis is from 70 to 100 mol%, preferably from 80 to 90 mol%, more preferably from 81 to 89 mol% and in particular from 82 to 88 mol%.

14. Portioned detergent composition according to one of Claims 1 to 13, **characterized in that** the water-soluble or water-dispersible container comprises a polyvinyl alcohol whose molecular weight is in the range from 10 000 to 100 000 g/mol, preferably from 11 000 to 90 000 g/mol, more preferably from 12 000 to 80 000 g/mol and in particular from 13 000 to 70 000 g/mol.

15. Portioned detergent composition according to one of Claims 1 to 14, **characterized in that** the water-soluble or water-dispersible container is a film pouch and the film has a thickness of from 1 to 150 µm, preferably of from 2 to 100 µm, more preferably of from 5 to 75 µm and in particular of from 10 to 50 µm.

16. Portioned detergent composition according to one of Claims 1 to 15, **characterized in that** the water-soluble or water-dispersible container comprises an injection-molded or thermoformed or blow-molded body whose wall has a thickness of from 50 to 300 µm, preferably of from 70 to 200 µm and in particular of from 80 to 150 µm.

17. Process for producing portioned liquid detergent compositions by dispersing at least one solid in a liquid matrix and subsequently packaging it in a water-soluble or water-dispersible container, **characterized in that** the dispersed solid(s) is/are coated and has/have a particle size between 12 000 and 20 000 µm.

## Revendications

1. Composition d'agent de lavage ou de nettoyage liquide en portions, dans un conteneur soluble ou dispersible dans l'eau, comprenant une phase liquide et une ou plusieurs particule(s) solide(s) qui y est/sont contenues, **caractérisée en ce que** la/les particule(s) solides qui y est/sont contenue(s) est/sont revêtue(s) et présente(nt) une grosseur de particules entre 12 000 et 20 000 µm.

2. Composition d'agent de lavage ou de nettoyage en portions selon la revendication 1, **caractérisée en ce que** la phase liquide de la composition d'agent de lavage ou de nettoyage présente une viscosité (viscosimètre de Brookfield LVT-II à 20 t/min et 20°C, axe 3) de 500 à 100 000 mPa.s, de préférence de 1 000 à 50 000 mPa.s, de manière particulièrement préférée de 1 200 à 10 000 mPa.s et en particulier de 1 300 à 5 000 mPa.s.

3. Composition d'agent de lavage ou de nettoyage en portions selon l'une quelconque des revendications 1 à 2, **caractérisée en ce que** la phase liquide contient de l'eau et présente une teneur en eau supérieure à 6% en poids, de préférence entre 10 et 70% en poids, de manière particulièrement préférée entre 20 et 60% en poids et en particulier entre 30 et 50% en poids, à chaque fois par rapport au poids total de la composition d'agent de lavage ou de nettoyage.

4. Composition d'agent de lavage ou de nettoyage en portions selon l'une quelconque des revendications 1 à 3, **caractérisée en ce que** la phase liquide est anhydre et présente une teneur en eau inférieure à 6% en poids, de préférence entre 0,5 et 5% en poids, de manière particulièrement préférée entre 1 et 4% en poids, à chaque fois par rapport au poids total de la composition d'agent de lavage ou de nettoyage.

5. Composition d'agent de lavage ou de nettoyage en portions selon l'une quelconque des revendications 1 à 4, **caractérisée en ce qu'**elle contient un ou des solvants non aqueux en des quantités de 0,1 à 70% en poids, de préférence de 0,5 à 60% en poids, de manière particulièrement préférée de 1 à 50% en poids, de manière tout particulièrement préférée 2 à 40% en poids et en particulier de 2,5 à 30% en poids, à chaque fois par rapport à la totalité de la composition, le ou les solvant(s) non aqueux préféré(s) étant choisi(s) dans le groupe formé par les agents tensioactifs non ioniques liquides à température ambiante, les polyéthylèneglycols et les polypropylèneglycols, le glycérol, le carbonate de glycérol, la triacétine, l'éthylèneglycol, le propylèneglycol, le carbonate de propylène, l'hexylèneglycol, l'éthanol ainsi que le n-propanol et/ou l'iso-propanol.

6. Composition d'agent de lavage ou de nettoyage en portions selon l'une quelconque des revendications 1 à 5, **caractérisée en ce qu'**elle contient en outre 0,01 à 5% en poids, de préférence 0,02 à 4% en poids, de manière particulièrement préférée 0,05 à 3% en poids et en particulier 0,1 à 1,5% en poids, d'un épaississant, de préférence d'un épaississant polymère, en préférant comme épaississant l'hydroxyéthylcellulose et/ou l'hydroxypropylcellulose et/ou des épaississants du groupe des polysaccharides, de préférence le xanthane, des polyuréthanes ou des polyacrylates modifiés en préférant en particulier les épaississants de formule XVII 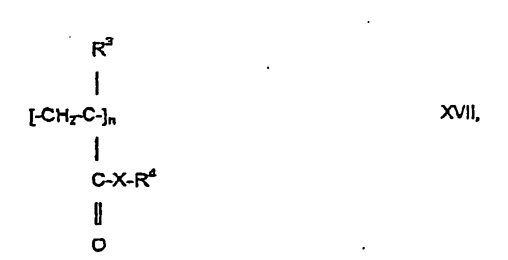 dans laquelle R³ représente H ou un radical C₁₋₄-alkyle ou C₁₋₄-alcényle ramifié ou non ramifié, X représente N-R⁵ ou O, R⁴ représente un radical C₈₋₂₂-alkyle ou C₈₋₂₂-alcényle le cas échéant alcoxylé, ramifié ou non ramifié, éventuellement substitué, R⁵ représente H ou R⁴ et n représente un nombre naturel.

7. Composition d'agent de lavage ou de nettoyage en portions selon l'une quelconque des revendications 1 à 6, **caractérisée en ce que** la/les particule(s) solide(s) qui y est/sont contenue(s) et/ou la matrice liquide contien(nen)t au moins une substance active du groupe formé par les agents de blanchiment, les activateurs de blanchiment, les polymères, les builders, les agents tensioactifs, les enzymes, les électrolytes, les agents de réglage du pH, les parfums, les supports de parfum, les colorants, les hydrotropes, les inhibiteurs de mousse, les agents d'antiredépôt, les azurants optiques, les inhibiteurs de grisaillement, les agents qui empêchent le rétrécissement, les agents antifroissement, les inhibiteurs de transfert de couleur, les substances actives antimicrobiennes, les germicides, les fongicides, les antioxydants, les inhibiteurs de corrosion, les antistatiques, les agents d'hydrofugation et d'imprégnation, les agents de résistance au gonflement et au glissement, les solvants non aqueux, les adoucisseurs, les hydrolysats de protéines ainsi que les absorbants des UV.

8. Composition d'agent de lavage ou de nettoyage en portions selon l'une quelconque des revendications 1 à 7, **caractérisée en ce que** la/les particule(s) solide(s) dispersées contien(nen)t au moins un polymère, de préférence un polymère du groupe formé par les acides carboxyliques homopolymères ou copolymères et/ou les acides polycarboxyliques homopolymères ou copolymères et/ou les acides sulfoniques homopolymères ou copolymères en des quantités de 1 à 70% en poids, de préférence de 2 à 60% en poids et en particulier à chaque fois par rapport au poids total de la/des particule(s) solide(s) dispersée(s) contenant un/des polymère(s).

9. Composition d'agent de lavage ou de nettoyage en portions selon l'une quelconque des revendications 1 à 8, **caractérisée en ce que** la/les particule(s) solide(s) dispersée(s) contien(nen)t au moins un agent tensioactif, de préférence un agent tensioactif anionique, de manière particulièrement préférée un alkylbenzènesulfonate, ou un agent tensioactif non ionique, de préférence un agent tensioactif non ionique alcoxylé, en particulier un agent tensioactif non ionique éthoxylé, en des quantités de 0,5 à 30% en poids, de préférence de 1 à 25% en poids et en particulier de 2 à 20% en poids, à chaque fois par rapport au poids total de la/des particule(s) solide(s) dispersée(s) contenant un/des agent(s) tensioactif(s).

10. Composition d'agent de lavage ou de nettoyage en portions selon l'une quelconque des revendications 1 à 9, **caractérisée en ce que** la/les particule(s) solide(s) dispersée(s) contien(nen)t au moins un agent de blanchiment, de préférence du groupe des composés formant H₂O₂ dans l'eau, de manière particulièrement préférée du groupe du perborate de sodium tétrahydraté, du perborate de sodium monohydraté ou du percarbonate de sodium, en des quantités de 0,1 à 50% en poids, de préférence de 0,5 à 40% en poids et en particulier de 1,0 à 30% en poids, à chaque fois par rapport au poids total de la/des particule(s) solide(s) dispersée(s) contenant un/des agent(s) de blanchiment.

11. Composition d'agent de lavage ou de nettoyage en portions selon l'une quelconque des revendications 1 à 10, **caractérisée en ce que** la/les particule(s) solide(s) dispersée(s) contien(nen)t au moins une enzyme, de préférence du groupe formé par les protéases, les amylases ou les lipases, en des quantités de 0,01 à 15% en poids, de préférence de 0,1 à 10% en poids et en particulier de 0,2 à 7% en poids, à chaque fois par rapport au poids total de la/des particule(s) solide(s) dispersée(s) contenant une/des enzyme(s).

12. Composition d'agent de lavage ou de nettoyage en portions selon l'une quelconque des revendications 1 à 11, **caractérisée en ce que** le conteneur soluble ou dispersible dans l'eau comprend un ou plusieurs polymère(s) soluble(s) dans l'eau, de préférence un matériau du groupe formé par le poly(alcool vinylique) (le cas échéant acétalisé) (PVAL), la polyvinylpyrrolidone, le poly(oxyde d'éthylène), la gélatine, la cellulose, et ses dérivés, de préférence l'hydroxypropylméthylcellulose, et leurs mélanges.

13. Composition d'agent de lavage ou de nettoyage en portions selon l'une quelconque des revendications 1 à 12, **caractérisée en ce que** le conteneur soluble ou dispersible dans l'eau comprend un poly(alcool vinylique), dont le degré d'hydrolyse est de 70 à 100% en mole, de préférence 80 à 90% en mole, de manière particulièrement préférée 81 à 89% en mole et en particulier 82 à 88% en mole.

14. Composition d'agent de lavage ou de nettoyage en portions selon l'une quelconque des revendications 1 à 13, **caractérisée en ce que** le conteneur soluble ou dispersible dans l'eau comprend un poly(alcool vinylique) dont le poids moléculaire se situe dans la plage de 10 000 à 100 000 g.mole⁻¹, de préférence de 11 000 à 90 000 g.mole⁻¹, de manière particulièrement préférée de 12 000 à 80 000 g.mole⁻¹ et en particulier de 13 000 à 70 000 g.mole⁻¹.

15. Composition d'agent de lavage ou de nettoyage en portions selon l'une quelconque des revendications 1 à 14, **caractérisée en ce que** le conteneur soluble ou dispersible dans l'eau est un sachet en feuille et la feuille présente une épaisseur de 1 à 150 µm, de préférence de 2 à 100 µm, de manière particulièrement préférée de 5 à 75 µm et en particulier de 10 à 50 µm.

16. Composition d'agent de lavage ou de nettoyage en portions selon l'une quelconque des revendications 1 à 15, **caractérisée en ce que** le conteneur soluble ou dispersible dans l'eau comprend un corps façonné moulé par injection, embouti ou moulé par soufflage, dont la paroi présente une épaisseur de 50 à 300 µm, de préférence de 70 à 200 µm et en particulier de 80 à 150 µm.

17. Procédé de préparation de compositions d'agent de lavage ou de nettoyage liquides en portions, dans lequel au moins un solide est dispersé dans une matrice liquide et ensuite emballé dans un conteneur soluble ou dispersible dans l'eau, **caractérisé en ce que** le/les solide(s) dispersé(s) est/sont revêtus et présente(nt) une grosseur de particules entre 12 000 et 20 000 µm.
